# EUROPEAN PATENT APPLICATION

(11) **EP 4 458 710 A1**
(43) Date of publication of application: **06.11.2024**
(21) Application number: 23884957.4
(22) Date of filing: 31.10.2023
(51) Int. Cl.: B65D 6/24, B65D 43/16, B65D 43/24, B65D 43/12, B65D 25/34, B65D 25/38, B65D 90/06, B65D 19/06, B65D 19/40, F16B 39/282

(54) **TRANSPORT BOX**

(30) Priority: 31.10.2022 CN 202211350579; 31.10.2022 CN 202222891322 U; 31.10.2022 CN 202211350547; 31.10.2022 CN 202222891156 U; 31.10.2022 CN 202222891204 U; 31.10.2022 CN 202222891217 U; 31.10.2022 CN 202222891220 U; 31.10.2022 CN 202222891229 U; 31.10.2022 CN 202222891173 U; 31.10.2022 CN 202222891201 U; 31.10.2022 CN 202222944173 U; 31.10.2022 CN 202222891294 U; 31.10.2022 CN 202222891295 U; 31.10.2022 CN 202222891160 U; 19.07.2023 CN 202310892255; 19.07.2023 CN 202321913811 U
(71) Applicant: Logipack, Inc, San Francisco, CA 94103 (US)
(72) Inventor: DU, Meng, Beijing 100088 (CN)
(74) Representative: Berggren Oy
(86) International application number: PCT/CN2023/128834
(87) International publication number: WO 2024/094028

(57) **Abstract**

The present disclosure provides a transport case, which includes a case body, the case body being internally provided with a containing space for containing materials; the case body includes a supporting framework and a protective coating, the supporting framework being coated with the protective coating, wherein the supporting framework is made of a metal material, and the protective coating is made of a plastic material. The problem in the art known to inventors of low pressure bearing capacity of the transport case is solved.

## Description

### Cross-Reference to Related Application

The present disclosure claims priority to patent application No. 202211350579.5, filed to the China National Intellectual Property Administration on October 31, 2022 and entitled "Transport Case", patent application No. ZL202222891322.2, filed to the China National Intellectual Property Administration on October 31, 2022 and entitled "Transport Case", patent application No. ZL202211350547.5, filed to the China National Intellectual Property Administration on October 31, 2022 and entitled "Transport Case", patent application No. ZL202222891156.6, filed to the China National Intellectual Property Administration on October 31, 2022 and entitled "Transport Case", patent application No. ZL202222891204.1, filed to the China National Intellectual Property Administration on October 31, 2022 and entitled "Transport Case", patent application No. ZL202222891217.9, filed to the China National Intellectual Property Administration on October 31, 2022 and entitled "Transport Case", patent application No. ZL202222891220.0, filed to the China National Intellectual Property Administration on October 31, 2022 and entitled "Transport Case", patent application No. ZL202222891229.1, filed to the China National Intellectual Property Administration on October 31, 2022 and entitled "Transport Case", patent application No. ZL202222891173.X, filed to the China National Intellectual Property Administration on October 31, 2022 and entitled "Transport Case", patent application No. ZL202222891201.8, filed to the China National Intellectual Property Administration on October 31, 2022 and entitled "Transport Case", patent application No. ZL202222944173.1, filed to the China National Intellectual Property Administration on October 31, 2022 and entitled "Transport Case", patent application No. ZL202222891294.4, filed to the China National Intellectual Property Administration on October 31, 2022 and entitled "Transport Case", patent application No. ZL202222891295.9, filed to the China National Intellectual Property Administration on October 31, 2022 and entitled "Transport Case", patent application No. ZL202222891160.2, filed to the China National Intellectual Property Administration on October 31, 2022 and entitled "Transport Case", patent application No. ZL202310892255.2, filed to the China National Intellectual Property Administration on July 19, 2023 and entitled "Transport Case", and patent application No. ZL202321913811.1, filed to the China National Intellectual Property Administration on July 19, 2023 and entitled "Transport Case".

### Technical Field

The present disclosure relates to the technical field of material transportation, and in particular to a transport case.

### Background

At present, when transporting liquid goods or granular or powdered goods, the materials are usually first filled in a transport bag, and then the transport bag is placed in a transport case for transportation.

Many of these materials are relatively hazardous, especially those that are prone to expansion or explosion during severe shaking, which has high requirements for the pressure bearing capacity of a case body.

In the existing transport case with a foldable function, the overall structural strength of the case body is insufficient, so that when transporting chemically hazardous materials, the pressure inside the case body increases in the transportation process of the materials, which easily causes the risk of deformation or even cracking of the case body.

### Summary

The main purpose of the present disclosure is to provide a transport case to solve the problem in the related art of low pressure bearing capacity of the transport case.

In order to achieve the above purpose, the present disclosure provides a transport case, which includes a case body, the case body being internally provided with a containing space for containing materials. The case body includes a supporting framework and a protective coating, the supporting framework being coated with the protective coating. The supporting framework is made of a metal material, and the protective coating is made of a plastic material.

In some embodiments, the protective coating is provided with a first avoidance opening, and the supporting framework is in contact with the materials through the first avoidance opening, so that the materials are grounded.

In some embodiments, the supporting framework is provided with a conductive protrusion. The protective coating is provided with a second avoidance opening, and the conductive protrusion is disposed in the second avoidance opening in a penetrating manner, so that an end surface of the conductive protrusion is in contact with the materials, and then the materials are grounded.

In some embodiments, a plurality of conductive protrusions are provided, and the plurality of conductive protrusions are disposed on the supporting framework at intervals. A plurality of second avoidance openings are provided, and the plurality of second avoidance openings and the plurality of conductive protrusions are disposed in a one-to-one correspondingly manner.

In some embodiments, the conductive protrusion includes a first end surface and a second end surface which are oppositely disposed, the first end surface being connected with the supporting framework, and the second end surface of the conductive protrusion and a surface of the protective coating being located in the same plane.

In some embodiments, a bottom surface of the case body is provided with a grounding column, and the grounding column is connected with the supporting framework, so that the materials are grounded through the grounding column.

In some embodiments, the supporting framework includes: a plurality of supporting cross beams, the plurality of supporting cross beams being disposed side by side; and a plurality of supporting longitudinal beams, the plurality of supporting longitudinal beams being sequentially disposed on the plurality of supporting cross beams in a penetrating manner, and the plurality of supporting longitudinal beams being disposed at intervals in a length direction of the supporting cross beam.

In some embodiments, the supporting cross beam is a tube body, the supporting longitudinal beam is a rod body, the supporting longitudinal beam is provided with a plurality of circulation holes, and the plurality of circulation holes are disposed at intervals in a length direction of the supporting longitudinal beam.

In some embodiments, the thickness of the protective coating ranges from 2 mm to 4 mm.

In some embodiments, the transport case further includes a plurality of side plates, the plurality of side plates being sequentially disposed in a circumferential direction of the transport case to enclose the containing space. Each side plate includes a side plate body. The supporting framework includes a side plate framework, the protective coating includes a side plate coating, the side plate framework is coated with the side plate coating, and the side plate framework is disposed on the side plate body.

In some embodiments, the transport case further includes a base, the base including a base body. The supporting framework includes a base framework, the protective coating includes a base coating, the base framework is coated with the base coating, and the base framework is disposed on the base body.

In some embodiments, the transport case further includes a door body. The supporting framework includes a door body framework, the protective coating includes a door body coating, the door body framework is coated with the door body coating, and the door body framework is disposed on the door body.

In some embodiments, the case body includes: the base; the plurality of side plates, disposed on the base, the plurality of side plates being sequentially disposed in a circumferential direction of the base to enclose the containing space, and each side plate being foldably disposed relative to the base; and the door body, disposed at the top of the plurality of side plates, the door body being slidably disposed relative to the plurality of side plates to open or close the containing space. When the door body slides to a predetermined open position, the door body is flipped until the door body is located at the side of the side plate.

In some embodiments, the door body is provided with drainage parts, and each drainage part includes a water inlet and a drainage outlet which communicate with each other. The water inlet is disposed on a top surface of the door body, and the drainage outlet is disposed on a side surface of the door body.

In some embodiments, the top surface of the door body is provided with first positioning parts, a bottom surface of the base is provided with second positioning parts, and the first positioning parts of one transport case of the two stacked transport cases are inserted into the second positioning parts of the other transport case to position the two adjacent transport cases.

In some embodiments, the first positioning parts protrude relative to the top surface of the door body, a plurality of first positioning parts are provided, and the plurality of first positioning parts are disposed at intervals in a circumferential direction of the door body. Each second positioning part includes an insertion hole, the first positioning part being at least partially inserted into the insertion hole.

In some embodiments, the plurality of side plates include first side plates and second side plates adjacent to each other. The transport case further includes: hinged assemblies, disposed on the first side plates, each hinged assembly including a first fan blade and a second fan blade which are hinged to each other, the first fan blade being fixedly connected to the first side plate, the second fan blade being provided with a first fitting part, and the door body being provided with a second fitting part. When the door body is opened to the predetermined open position, the second fitting part is clamped to the first fitting part, and the door body is flipped along with the second fan blade, so that the door body moves to the side of the first side plate.

In some embodiments, the second side plate is provided with a limiting slide, an opening of the limiting slide faces an inner side of the case body, and the door body is at least partially inserted into the limiting slide, and moves in an extension direction of the limiting slide.

In some embodiments, two first side plates are provided, the two first side plates are oppositely disposed at intervals in a first direction, two second side plates are provided, the two second side plates are oppositely disposed at intervals in a second direction, the two first side plates are respectively provided with the hinged assembly, and the two second side plates are respectively provided with the limiting slide. The door body includes a first door body and a second door body. The first door body and the second door body are opened to the sides of the two first side plates respectively. The two second side plates are respectively provided with a middle stopper, each middle stopper is located in the middle of a top surface of the second side plate, the middle stopper extends in a sliding direction of the door body, both ends of the middle stopper are respectively provided with a limiting notch, and the first door body and the second door body are respectively in contact with the limiting notches, so that the first door body and the second door body are in a closed position.

In some embodiments, the second side plate is provided with an auxiliary opening, and the transport case further includes: an auxiliary door, disposed on the second side plate and located at the auxiliary opening, the auxiliary door being provided with an open position and a closed position, so that the auxiliary opening is opened or closed.

In some embodiments, the plurality of side plates include the first side plates and the second side plates adjacent to each other. Each first side plate includes a first fitting end surface opposite to the second side plate, and each second side plate includes a second fitting end surface opposite to the first side plate. The maximum vertical distance between the first fitting end surface and the second fitting end surface is less than or equal to 2 mm.

In some embodiments, the transport case further includes: a connecting assembly, the connecting assembly including a first connecting part and a second connecting part, the first connecting part being disposed on the first fitting end surface, the second connecting part being disposed on the second fitting end surface, and the first connecting part being clamped to the second connecting part, so that the plurality of side plates are in an open position.

In some embodiments, the transport case includes: the door body, slidably disposed on the case body to open or close the case body; and hinged assemblies, disposed on the case body, each hinged assembly including a first fan blade and a second fan blade which are hinged to each other, the first fan blade being fixedly connected to the case body, the second fan blade being provided with the first fitting part, the door body being provided with the second fitting part, when the door body is opened to a predetermined open position, the second fitting part being clamped to the first fitting part, and the door body being flipped along with the second fan blade, so that the door body is located at the side of the case body.

In some embodiments, the first fitting part is in interference fit with the second fitting part, the first fitting part is a fitting opening, and the second fitting part is a fitting projection.

In some embodiments, the first fitting part is the fitting opening, and the second fitting part includes: a fitting column, disposed on the door body; and a limiting stopper, disposed on the fitting column, the fitting column being at least partially clamped into the fitting opening and causing the limiting stopper to drive the second fan blade to flip. The door body is located at the side of the case body through the blocking effect of the fitting opening on the fitting column.

In some embodiments, the second fan blade is provided with an initial position and a flipping position, and the second fan blade is at least partially located above the first fan blade and is provided with a passing gap with the first fan blade, so that the second fan blade is in the initial position. The second fitting part is at least partially clamped to the first fitting part through the passing gap.

In some embodiments, the second fan blade includes a hinged end and a fitting end which are oppositely disposed, the hinged end of the second fan blade being hinged to the first fan blade, and the fitting end of the second fan blade extending towards the inner side of the case body. The first fitting part is disposed at the fitting end of the second fan blade. The first fitting part is the fitting opening, and the fitting opening faces the inner side of the case body.

In some embodiments, the hinged assembly further includes: a bearing component, disposed on the second fan blade, the bearing component being provided with a bearing end surface, and the bearing end surface being a curved surface. The bearing end surface is at least partially in contact with the door body to support the door body.

In some embodiments, the second fan blade includes a first flipping surface and a second flipping surface which are oppositely disposed, the first flipping surface being opposite to the first fan blade, and the bearing component being disposed on the second flipping surface.

In some embodiments, the hinged assembly further includes: support frames, disposed on the second fan blade, the support frames protruding relative to a surface of the second fan blade, two support frames being provided, the two support frames being oppositely disposed at intervals, the bearing component being disposed between the two support frames, and the bearing component being respectively connected to the two support frames.

In some embodiments, the door body is provided with a limiting groove fitting with the bearing component, the limiting groove extends in the sliding direction of the door body, the bearing component is at least partially located in the limiting groove, and the bearing end surface is at least partially in contact with a groove bottom surface of the limiting groove.

In some embodiments, the transport case includes: the door body, slidably disposed on the case body to open or close the case body. A first top surface of the case body is provided with the limiting slide, the opening of the limiting slide faces the inner side of the case body, and the door body is at least partially inserted into the limiting slide, and moves in the extension direction of the limiting slide.

In some embodiments, the transport case further includes: limiting components, disposed on a second top surface of the case body, the limiting components protruding relative to the second top surface. A first angle is formed between the first top surface and the second top surface. The door body is provided with engaging parts, and each engaging part is at least partially clamped to the corresponding limiting component, so that the door body is in a closed position.

In some embodiments, the limiting component includes: a supporting column, disposed on the second top surface; and a limiting chuck, disposed on the supporting column, a projection area of an orthographic projection of the limiting chuck on a horizontal plane being greater than a projection area of an orthographic projection of the supporting column on the horizontal plane. The engaging part includes an engaging opening, the supporting column being at least partially clamped into the engaging opening.

In some embodiments, the door body is further provided with an engaging support strip, both sides of the engaging support strip are respectively spaced apart from the door body and the second top surface of the case body, and the engaging opening is disposed on the engaging support strip.

In some embodiments, the case body is provided with a stop component, the stop component includes a first body, a second body and a third body which are sequentially connected, the first body being disposed on the first top surface of the case body, and being opposite to the third body to enclose the limiting slide between the first body, the second body and the third body. The first body and the third body are respectively provided with a baffle, the baffle is opposite to the second body, and a passing gap for causing the door body to pass is formed between the two baffles.

In some embodiments, the transport case further includes: a sliding plate, disposed on the door body, the sliding plate being connected to the door body through a connecting piece, and an angle being formed between a plate surface of the sliding plate and a surface of the connecting piece. The sliding plate fits with the limiting slide, so that the door body slides in the extension direction of the limiting slide.

In some embodiments, an end of the sliding plate is provided with a guide end surface, the guide end surface is a curved surface, the third body is provided with an avoidance notch, and the guide end surface is at least partially in contact with an end surface, enclosing the avoidance notch, of the third body, so that the sliding plate moves into the limiting slide.

In some embodiments, the transport case further includes: the middle stopper, disposed on the first top surface of the case body and located in the middle of the first top surface, the middle stopper being cylindrical, and a body of the middle stopper being provided with the limiting notch. The connecting piece is provided with a connecting recess, the connecting recess is at least partially engaged with the limiting notch, and the door body is in the closed position through the blocking effect of the limiting notch on the connecting recess.

In some embodiments, the transport case includes the first door body and the second door body, the first door body and the second door body being disposed on the case body, and the first door body and the second door body being relatively slidably disposed to open or close the case body; and a locking assembly, the locking assembly including a first locking part and a second locking part, the first locking part and the second locking part being hooked to each other, so that the first locking part and the second locking part are blocked from each other. The first locking part or the second locking part is rotationally disposed around a predetermined axis. The first locking part is disposed on the first door body, and the second locking part is disposed on the second door body. Or, the first locking part is disposed on the second door body, and the second locking part is disposed on the first door body.

In some embodiments, the first locking part is provided with a blocking part, a preset angle is formed between an extension direction of the blocking part and an extension direction of the first locking part, and the second locking part is blocked by the blocking part.

In some embodiments, the first locking part includes a latch, the second locking part includes an insertion hole, and the blocking part is disposed at an end of the latch. The latch is at least partially disposed in the insertion hole in a penetrating manner, so that a body, enclosing the insertion hole, of the second door body is blocked by the blocking part.

In some embodiments, the blocking part includes an elbow, the elbow being disposed at the end of the latch, the elbow and the latch being of an integrated structure, and the body, enclosing the insertion hole, of the second door body being blocked by the elbow.

In some embodiments, the first door body is provided with a mounting hole, the first locking part is at least partially disposed in the mounting hole in a penetrating manner, and the locking assembly further includes: an operation handrail, connected to the first locking part, the operation handrail being operated to drive the first locking part to rotate, so that the first locking part and the second locking part are separated.

In some embodiments, the first door body is provided with an avoidance groove, the avoidance groove is recessed relative to a surface of the first door body, and the operation handrail is disposed in the avoidance groove.

In some embodiments, the locking assembly further includes: a protective cover, movably disposed on the first door body, the avoidance groove being shielded or avoided by the protective cover.

In some embodiments, the case body includes: the base, which is at least configured to form a bottom surface of the containing space, and includes the base body and a plurality of baffles which are disposed around a peripheral side of the base body and protrude above the base body; the door body, located above the base and spaced apart from the base to form a top surface of the containing space; and the plurality of side plates, disposed between the base and the door body to form a plurality of side surfaces of the containing space, the plurality of side plates being disposed in one-to-one correspondence with the plurality of baffles. The baffle is provided with an insertion mounting groove, the side plate is provided with an insertion mounting part which is rotationally inserted into the insertion mounting groove around a predetermined axis, and the side, far away from the containing space, of the insertion mounting groove is provided with a first rotation stop part configured to stop the rotation of the side, far away from the containing space, of the insertion mounting part.

In some embodiments, the side, close to the containing space, of the insertion mounting groove is provided with a first opening part, and the side, close to the side plate, of the insertion mounting groove is provided with a second opening part, and the first opening part communicates with the second opening part to jointly avoid the rotation of the insertion mounting part, so that the insertion mounting part rotates towards the side close to the containing space.

In some embodiments, the insertion mounting part includes an insertion body and a rotating part disposed at the side, far away from the side plate, of the insertion body, the rotating part being at least part of a cylinder, and the bottom of the insertion mounting groove being provided with an arc-shaped groove in running fit with the rotating part. The insertion body is further provided with an insertion limiting part, the insertion limiting part is located above the rotating part and located at the side, close to the containing space, of the rotating part, and the side, close to the containing space, of the insertion mounting groove is provided with an insertion limiting groove for mounting the insertion limiting part. The side, close to the containing space, of the arc-shaped groove is provided with a second rotation stop part, the rotating part is provided with a contact fit surface in contact fit with the second rotation stop part to stop the rotation of the side, far away from the containing space, of the insertion mounting part.

In some embodiments, the insertion body includes a first insertion plate segment and a second insertion plate segment which are connected to each other, the first insertion plate segment and the side plate being disposed at a predetermined angle, the first insertion plate segment extending in a direction close to the containing space and close to a supporting base surface of the case body, the second insertion plate segment being parallel to the side plate and extending in the direction close to the supporting base surface, and the second insertion plate segment being connected to the side plate through the first insertion plate segment. The rotating part is disposed at the side, far away from the first insertion plate segment, of the second insertion plate segment, the insertion limiting part is disposed on the second insertion plate segment, and the width of the rotating part and the width of the insertion limiting part are greater than the width of the second insertion plate segment.

In some embodiments, the baffle includes a baffle framework and a baffle cladding layer coating the baffle framework, the baffle framework including a baffle framework body and a mounting groove framework disposed on the baffle framework body, the mounting groove framework including: a first plate body, the first plate body being parallel to the baffle framework body and extending in a direction far away from the supporting base surface; two second plate bodies, disposed at the side, close to the containing space, of the first plate body at intervals in a direction parallel to the supporting base surface, and respectively connected to two opposite side surfaces of the first plate body, each second plate body being perpendicular to the baffle framework body and extending in the direction far away from the supporting base surface; and two third plate bodies, disposed at the sides, close to the containing space, of the two second plate bodies at intervals in the direction parallel to the supporting base surface, and respectively connected to side surfaces, far away from the first plate body, of the two second plate bodies, each third plate body being parallel to the first plate body. The insertion mounting groove is jointly enclosed by the first plate body, the two second plate bodies and the two third plate bodies.

In some embodiments, the mounting groove framework includes two fastening connection assemblies, the two fastening connection assemblies being disposed corresponding to the two third plate bodies, each of the fastening connection assemblies including at least one fastening connection piece, one end of the fastening connection piece being connected to the corresponding third plate body, and the other end of the fastening connection piece being connected to the first plate body.

In some embodiments, the side plate includes a side plate framework and a side plate coating which coats the side plate framework, the side plate framework including a side plate framework body and an insertion framework located below the side plate framework body, the insertion framework being an insertion plate, the insertion plate including a first supporting plate segment, a second supporting plate segment and a third supporting plate segment which are sequentially connected, the first supporting plate segment and the third supporting plate segment being parallel to the side plate framework body and extending in the direction close to the supporting base surface, the second supporting plate segment and the side plate framework body being disposed at a predetermined angle, and the second supporting plate segment extending in the direction close to the containing space and close to the supporting base surface. The third supporting plate segment is provided with a limiting support protrusion for supporting the insertion limiting part.

In some embodiments, the base body is a cuboid, and the plurality of baffles include: two first baffles which are disposed at two opposite sides of the base body at intervals in the first direction and protrude above the base body, and two second baffles which are disposed at two opposite sides of the base body at intervals in the second direction and protrude above the base body. The plurality of side plates include two first side plates respectively located above the two first baffles and two second side plates respectively located above the two second baffles. The first direction and the second direction are perpendicular to each other and parallel to the supporting base surface of the case body.

In some embodiments, the height of the first baffle is greater than the height of the second baffle. The height of the first side plate is less than the height of the second side plate. The sum of the height of the first baffle and the height of the first side plate is equal to the sum of the height of the second baffle and the height of the second side plate.

In some embodiments, the depth of the insertion mounting groove on the first baffle in a direction perpendicular to the supporting base surface is greater than the depth of the insertion mounting groove on the second baffle in the direction perpendicular to the supporting base surface. The length of the insertion mounting part on the first side plate in the direction perpendicular to the supporting base surface is greater than the length of the insertion mounting part on the second side plate in the direction perpendicular to the supporting base surface.

In some embodiments, in the insertion framework of the first side plate, an angle between the second supporting plate segment and the third supporting plate segment is a1, and a value of a1 ranges from 160 degrees to 170 degrees. Or, in the insertion framework of the second side plate, an angle between the second supporting plate segment) and the third supporting plate segment is a2, and a value of a2 ranges from 150 degrees to 160 degrees.

In some embodiments, the second connecting part extends from the second fitting end surface in a direction close to the first side plate, and the first connecting part includes: a connecting body, disposed on the first fitting end surface, the connecting body being provided with an engaging groove, and the second connecting part being at least partially clamped into the engaging groove and in interference fit with the engaging groove.

In some embodiments, the connecting body is provided with a first notch and a second notch which are connected to each other, the first notch faces an inner side of the transport case, the second notch faces the first fitting end surface of the second side plate. The first notch and the second notch communicate with the engaging groove. The second connecting part passes through the first notch and the second notch and then is clamped to the engaging groove.

In some embodiments, the first notch extends in a length direction of the connecting body, and the second notch extends in a width direction of the connecting body. The second connecting part includes: a first rod body, disposed on the second side plate, the first rod body extending from the second fitting end surface in the direction close to the first side plate; and second rod bodies, disposed at ends of the first rod body, a predetermined angle being formed between an extension direction of each second rod body and the first rod body, the second rod body being engaged into the engaging groove through the first notch, and the second rod body being at least partially clamped to the second notch.

In some embodiments, a plurality of first connecting parts are provided, the plurality of first connecting parts are disposed at intervals in a height direction of the first side plate to form a filling gap between the two adjacent first connecting parts. A plurality of second connecting parts are provided, the plurality of second connecting parts are disposed in one-to-one correspondence with the plurality of first connecting parts, and the transport case further includes: a filling block, disposed on the second side plate and located between the two adjacent second connecting parts, the filling block being at least partially located in the filling gap and in interference fit with the two first connecting parts.

In some embodiments, the first connecting part includes the connecting body, the connecting body being provided with the engaging groove. The second connecting part includes the first rod body and the second rod bodies, the first rod body being disposed in the second side plate in a penetrating manner, both ends of the first rod body being provided with the second rod bodies, a predetermined angle being formed between the second rod body and the first rod body, and the first rod body and the second rod bodies being integrally formed.

In some embodiments, each side plate includes: the side plate body; and a plurality of side plate columns, disposed on the side plate body, the plurality of side plate columns being sequentially connected in a circumferential direction of the side plate body. The connecting assembly is disposed on the side plate column.

In some embodiments, the plurality of side plate columns include: a first column, the connecting assembly being disposed on the first column, and the first column being provided with a socket part; and a second column, an extension direction of the second column and an extension direction of the first column being perpendicular to each other, the second column being provided with extension brackets, and the extension brackets being at least partially inserted into the socket part. The extension brackets and the second column are of an integrated structure.

In some embodiments, the socket part includes a slot, and an extension direction of the slot being perpendicular to the extension direction of the first column. The extension brackets are inserted into the slot.

In some embodiments, the first column is cylindrical, the socket part includes insertion openings, the insertion openings being disposed on the first column and communicating with a cylinder cavity of the first column. The extension brackets are inserted into the first column through the insertion opening, each extension bracket is provided with a contact end surface attached to an inner wall surface of the first column, and an extension direction of the contact end surface adapts to the inner wall surface of the first column.

In some embodiments, a plurality of insertion openings are provided, and the plurality of insertion openings are disposed at intervals in a length direction of the first column. A plurality of extension brackets are provided, and the plurality of extension brackets are disposed in one-to-one correspondence with the plurality of insertion openings. The plurality of extension brackets include a top bracket located at the top of the second column, and a predetermined distance is formed between the top bracket and a top opening of the first column to form a welding area between a cylinder body of the first column and the extension brackets.

In some embodiments, a plate body, enclosing the auxiliary opening, of the side plate is provided with a first fixing part, a circumferential side surface of the auxiliary door is provided with a second fixing part, and the first fixing part is clamped to the second fixing part, so that the auxiliary door is in the closed position.

In some embodiments, the transport case further includes a pivot assembly, the pivot assembly including: a rotating component, disposed on the plate body, enclosing the auxiliary opening, of the side plate, the rotating component being rotationally disposed around a predetermined axis; and a connecting component, disposed on the auxiliary door, the connecting component including a connecting channel, the rotating part being at least partially disposed in the connecting channel in a penetrating manner, and the auxiliary door being rotated through the stopping effect of the rotating component and an inner wall surface of the connecting channel.

In some embodiments, the side plate is provided with a first end surface, a second end surface and a third end surface which are connected to each other, and the first end surface is opposite to the third end surface to enclose the auxiliary opening between the first end surface, the second end surface and the third end surface. The first fixing part is disposed on at least one of the first end surface and the third end surface, and the rotating component is disposed on the second end surface.

In some embodiments, the connecting channel extends in a horizontal direction, the rotating component is in clearance fit with the connecting channel, and the connecting component is driven by the auxiliary door to be movably disposed in a vertical direction.

In some embodiments, the pivot assembly further includes a fixed seat, the fixed seat being disposed on the side plate. The rotating component includes: a rotating shaft, disposed on the fixed seat, the rotating shaft being rotationally disposed on its own axis relative to the fixed seat; and a connecting shaft, connected to the rotating shaft through an extension plate, an end of the connecting shaft being disposed in the connecting channel in a penetrating manner.

In some embodiments, the connecting component further includes: a first connecting plate, connected to the auxiliary door; and a second connecting plate and a third connecting plate which are disposed on the first connecting plate, the second connecting plate and the third connecting plate being oppositely disposed at intervals to form the connecting channel between the second connecting plate and the third connecting plate.

In some embodiments, the auxiliary door is provided with an avoidance space, the avoidance space extends towards the middle of the auxiliary door, and the second connecting plate and the third connecting plate extend into the avoidance space.

In some embodiments, the connecting component further includes: a limiting plate body, disposed on the auxiliary door and located at an end of the connecting channel, the limiting plate body being at least partially in contact with an end of the rotating component to block the rotating component through the limiting plate body.

In some embodiments, the first fixing part includes: a first fixed block, disposed on the side plate, the first fixed block being provided with a first fixing groove, and a notch of the first fixing groove facing an outer side of the transport case. The second fixing part is at least partially clamped into the first fixing groove.

In some embodiments, the first fixing groove includes a first groove side wall surface and a second groove side wall surface which are oppositely disposed, the first groove side wall surface and the second groove side wall surface being respectively provided with a locking groove, and the second fixing part being at least partially clamped into the locking groove. The auxiliary door is movably disposed in the vertical direction to drive the second fixing part to be disengaged from the locking groove.

In some embodiments, the second fixing part includes: a second fixed block, disposed on the auxiliary door, the second fixed block being at least partially clamped to the first fixing groove, two opposite side surfaces of the second fixed block being respectively provided with a protruding block, and the protruding block being at least partially clamped to the locking groove.

In some embodiments, the transport case further includes: the base, the plurality of side plates being disposed on the base, and the plurality of side plates being sequentially disposed in the circumferential direction of the base; and the door body, slidably disposed at the top of the plurality of side plates to open or close the transport case.

In some embodiments, the plurality of side plates include the first side plates and the second side plates adjacent to each other, the second side plate being provided with the limiting slide, and the door body is at least partially inserted into the limiting slide. The auxiliary door is disposed on the second side plate, a top end surface of the auxiliary door and a top end surface of the second side plate are located on the same plane and the limiting slide is at least partially disposed on the top end surface of the auxiliary door.

In some embodiments, the transport case includes: an observation window, the observation window being made of a transparent material, the observation window including a perspective plate, an insertion segment and a stop segment which are sequentially connected, the dimension of a peripheral surface of the perspective plate and the dimension of a peripheral surface of the stop segment being greater than the dimension of a peripheral surface of the insertion segment. The case body is provided with a mounting through hole configured to communicate the containing space and the outside of the case body to mount the observation window, the insertion segment is in insertion fit with the mounting through hole, and the perspective plate and the stop segment are respectively located at two opposite ends of the mounting through hole.

In some embodiments, the perspective plate is located at the side, far away from the containing space, of the mounting through hole, and the stop segment is located at the side, close to the containing space, of the mounting through hole. The mounting through hole is a slotted hole, the insertion segment is a long annular sleeve in insertion fit with the slotted hole, the perspective plate is a long circular plate body, and the stop segment is a long annular plate body.

In some embodiments, the case body includes: the base, at least configured to form the bottom surface of the containing space; the door body, located above the base and spaced apart from the base to form the top surface of the containing space; and the plurality of side plates, disposed between the base and the door body to form a plurality of side surfaces of the containing space. The observation window is disposed on at least one of the base and the side plates.

In some embodiments, the transport case further includes a buffer strip, the buffer strip being disposed on the case body. The buffer strip includes a buffer strip body and elastic clamping pieces disposed at the side, close to the containing space, of the buffer strip body. The case body is provided with a buffer strip mounting groove for mounting the buffer strip body and clamping holes located on a groove bottom surface of the buffer strip mounting groove. The buffer strip body is mounted in the buffer strip mounting groove, one end, far away from the buffer strip body, of the elastic clamping piece passes through the corresponding clamping hole and then is clamped to the side, far away from the buffer strip mounting groove, of the corresponding clamping hole.

In some embodiments, the elastic clamping piece includes a plurality of clamping structures disposed around a predetermined center line at intervals, each clamping structure including a strip rod body and a clamping protrusion disposed at one end, far away from the buffer strip body, of the strip rod body. When the buffer strip body is mounted in the buffer strip mounting groove, the clamping protrusion passes through the clamping hole and then is clamped to the side, far away from the buffer strip mounting groove, of the clamping hole.

In some embodiments, the buffer strip includes a plurality of elastic clamping pieces, the plurality of elastic clamping pieces being disposed at intervals in an extension direction of the buffer strip body, and the groove bottom surface of the corresponding buffer strip mounting groove being provided with a plurality of clamping holes for causing the plurality of elastic clamping pieces to be inserted in a one-to-one correspondence manner.

In some embodiments, the case body includes: the base; the plurality of side plates disposed on the base, the plurality of side plates being sequentially disposed in a circumferential direction of the base to enclose the containing space for containing the materials between the base and the plurality of side plates; a temperature regulating assembly, disposed on the base, the temperature in the containing space being regulated through the temperature regulating assembly; and a socket component, disposed on the base, one end of the socket component being connected to a power supply, and the other end of the socket component being electrically connected to the temperature regulating assembly.

In some embodiments, the base includes a bearing end surface for bearing the materials, the temperature regulating assembly being at least partially laid on the bearing end surface.

In some embodiments, the temperature regulating assembly includes: a temperature regulating pad, laid on the bearing end surface; and a regulating pad plug, electrically connected to the temperature regulating pad, the regulating pad plug being provided with a power plug, and the socket part being connected to the power plug.

In some embodiments, the socket component includes: a socket body, disposed on the base; a first socket, disposed on the socket body, the first socket facing an outer side of the transport case, and the first socket being connected to the power supply; and a second socket, disposed on the socket body, one end of the second socket being connected to the first socket, and the other end of the second socket being connected to the temperature regulating assembly.

In some embodiments, the socket component further includes: a mounting channel, disposed on the socket body, the first socket being disposed in the mounting channel; and a protective cover, movably disposed on the socket body to open or close the mounting channel to shield or avoid the first socket.

In some embodiments, the base is provided with a first discharge channel and a second discharge channel, the first discharge channel is located in the middle of the base, and a first discharge port of the first discharge channel faces the bottom of the base. The temperature regulating assembly is at least partially disposed around a feed port of the first discharge channel. A second discharge port of the second discharge channel faces the side of the base, and the second discharge channel is obliquely disposed relative to the bearing end surface of the base.

In some embodiments, the transport case further includes: a protection plate, movably disposed on the base and located at the second discharge port. An inner wall surface of the second discharge channel is provided with a first clamping part, and the protection plate is provided with a second clamping part clamped to the first clamping part.

In some embodiments, the first clamping part protrudes relative to the inner wall surface of the second discharge channel, the second clamping part includes a clamping hole, the first clamping part being at least partially clamped into the clamping hole.

In some embodiments, the protection plate includes: a protection body, disposed at the second discharge port; an operation body, connected to the protection body, the operation body including a first operation body and a second operation body which are connected to each other, a predetermined angle being formed between the first operation body and the second operation body, the first operation body being connected to the protection body, and the second clamping part being disposed on the second operation body.

In some embodiments, the protection plate includes a first connecting end and a second connecting end which are oppositely disposed, the first connecting end of the protection plate being hinged to the base, and the second clamping part being disposed on the second connecting end of the protection plate.

In some embodiments, the case body includes: the base, at least configured to form the bottom surface of the containing space; the door body, located above the base and spaced apart from the base to form the top surface of the containing space; and the plurality of side plates, disposed between the base and the door body to form a plurality of side surfaces of the containing space. One of the door body and the base is provided with the first positioning parts, and the other one of the door body and the base is provided with the second positioning parts in insertion fit with the first positioning parts.

In some embodiments, the case body is a cuboid. A plurality of first positioning protrusions are disposed above the door body, the plurality of first positioning protrusions are disposed at intervals in the first direction, and each first positioning protrusion is of a strip structure extending in the second direction. A plurality of first positioning grooves are disposed below the base, and the plurality of first positioning grooves are disposed in one-to-one correspondence with the plurality of first positioning protrusions. Or, four second positioning protrusions are disposed above the door body, and the four second positioning protrusions are respectively disposed at four corners of the door body. Four second positioning grooves are disposed below the base, and the four second positioning grooves are disposed in one-to-one correspondence with the four second positioning protrusions. Or, a plurality of third positioning protrusions are disposed above the door body, and the plurality of third positioning protrusions are disposed in the middle of the door body at intervals. A plurality of third positioning grooves are disposed below the base, and the plurality of third positioning grooves are disposed in one-to-one correspondence with the plurality of third positioning protrusions. Or, two fourth positioning protrusions are disposed above the door body, and the two fourth positioning protrusions are disposed at intervals in the first direction and respectively located at two opposite sides of the door body. Two fourth positioning grooves are disposed below the base, and the two fourth positioning grooves are disposed in one-to-one correspondence with the two fourth positioning protrusions. The first direction and the second direction are perpendicular to each other and parallel to a supporting base surface of the base.

In some embodiments, the case body includes the base, the base including the base body and feet disposed below the base body, the base body and each foot being connected through a fastening assembly, the fastening assembly including: a nut, the nut being disposed on one of the base body and the foot; a bolt, a threaded end of the bolt passing through the other one of the base body and the foot and then being in threaded connection with the nut; and an anti-loose structure, a first part of the anti-loose structure being disposed on the nut or the bolt, and a second part of the anti-loose structure being disposed on the base body or the foot to jointly prevent loosening between the bolt and the nut.

In some embodiments, the nut is disposed on the base body, and the base body is provided with a nut mounting hole for mounting the nut. The threaded end of the bolt upwards passes through the foot and then is in threaded connection with the nut, and the foot is provided with a bolt insertion hole for causing the bolt to be inserted.

In some embodiments, the anti-loose structure includes: a plurality of first protrusions, the plurality of first protrusions being disposed on a peripheral surface of the bolt at intervals around a center line of the bolt, and each first protrusion protruding in a direction far away from the center line of the bolt in a radial direction of the bolt; a plurality of second protrusions, the plurality of second protrusions being disposed on an inner wall surface of the bolt insertion hole at intervals around a center line of the bolt insertion hole, and each first protrusion protruding in a direction close to the center line of the bolt insertion hole in a radial direction of the bolt insertion hole. The second protrusion includes a stop surface and a guide surface which are disposed at intervals in a circumferential direction of the bolt insertion hole and respectively located at two opposite sides of the second protrusion, and a groove part for causing one end, far away from the center line of the bolt, of the first protrusion to be inserted is formed between any two adjacent second protrusions.

In some embodiments, the first protrusion extends in a length direction of the bolt. The cross section of the first protrusion is a first right triangle, and one right-angle side of the first right triangle is located at the side, close to the peripheral surface of the bolt, of a hypotenuse. Or, the cross section of the first protrusion is a first right trapezoid, and a short waist of the first right trapezoid is located at the side, close to the peripheral surface of the bolt, of a long waist. The second protrusion extends in a length direction of the bolt insertion hole. The cross section of the second protrusion is a second right triangle, and one right-angle side of the second right triangle is located at the side, close to an inner wall surface of the bolt insertion hole, of a hypotenuse. Or, the cross section of the second protrusion is a second right trapezoid, and a lower bottom of the second right trapezoid is located at the side, close to the inner wall surface of the bolt insertion hole, of an upper bottom.

In some embodiments, the bolt includes a screw cap and a strip insertion rod which are connected to each other, the strip insertion rod including a cylindrical rod segment and a threaded rod segment which are sequentially connected in a direction far away from the screw cap, the first protrusion being disposed on the cylindrical rod segment, and the threaded rod segment being in threaded connection with the nut.

In some embodiments, the bolt is provided with a plurality of first reinforcing ribs, the plurality of first reinforcing ribs are disposed on the cylindrical rod segment at intervals around the peripheral surface of the bolt, the plurality of first reinforcing ribs are disposed in one-to-one correspondence with the plurality of first protrusions, and each first reinforcing rib is located at the side, far away from the screw cap, of the corresponding first protrusion to be connected to the screw cap through the corresponding first protrusion. The height of the first reinforcing rib in the radial direction of the bolt is less than the height of the first protrusion in the radial direction of the bolt.

In some embodiments, the bolt is provided with a plurality of second reinforcing ribs, the plurality of second reinforcing ribs are disposed on the cylindrical rod segment at intervals around the peripheral surface of the bolt, and one second reinforcing rib is disposed between any two adjacent first protrusions. The height of the second reinforcing rib in the radial direction of the bolt is less than the height of the first reinforcing rib in the radial direction of the bolt.

In some embodiments, the foot is provided with a plurality of third reinforcing ribs, the plurality of third reinforcing ribs are located on the inner wall surface of the bolt insertion hole and disposed in one-to-one correspondence with the plurality of second protrusions, and each third reinforcing rib is located at the side, far away from the base body, of the corresponding second protrusion. The height of the third reinforcing rib in the radial direction of the bolt insertion hole is less than the height of the second protrusion in the radial direction of the bolt insertion hole.

In some embodiments, the nut includes an internal threaded sleeve and a limiting stop plate disposed at the side, far away from the foot, of the internal threaded sleeve. The nut mounting hole includes a first mounting hole segment and a second mounting hole segment which are sequentially connected in a direction close to the foot. The limiting stop plate is inserted into the first mounting hole segment to abut against a hole bottom surface of the first mounting hole segment, and the internal threaded sleeve is inserted into the second mounting hole segment.

In some embodiments, the nut includes an annular reinforcing rib which is disposed at the side, close to the internal threaded sleeve, of the limiting stop plate and sleeves the internal threaded sleeve, and the nut mounting hole includes a third mounting hole segment in insertion fit with the annular reinforcing rib. The height of the annular reinforcing rib in the direction of the center line of the nut is less than the height of the internal threaded sleeve in the direction of the center line of the nut.

In some embodiments, the case body includes the base, and the base including: the base body; a middle leg, disposed below the base body and located in the middle of the base body; and a plurality of feet, the plurality of feet being disposed below the base body at intervals in the first direction parallel to the supporting base surface of the base body, and each foot being detachably connected to the base body. The base body is provided with at least one foot mounting groove for mounting the foot, the foot mounting groove includes a groove bottom surface and a groove side surface which are connected to each other, the groove bottom surface being in contact with a top surface of the foot, and the groove side surface being located at the side, close to the middle leg, of the groove bottom surface and disposed at a predetermined angle with the supporting base surface to be in contact with a side surface of the side, close to the middle leg, of the foot, so as to limit and stop the mounting action of the foot.

In some embodiments, the groove bottom surface includes a mounting guide surface, the mounting guide surface and the supporting base surface being disposed at an acute angle, and a distance between the mounting guide surface and the supporting base surface gradually increasing in a direction close to the middle leg. The top surface of the foot includes a sliding surface parallel to the mounting guide surface to be in contact fit with the mounting guide surface, so as to guide the mounting action of the foot.

In some embodiments, the groove bottom surface includes a transition connection surface, the transition connection surface being parallel to the supporting base surface, and the mounting guide surface being connected to the groove side surface through the transition connection surface. The top surface of the foot includes a contact surface parallel to the transition connection surface to be in contact fit with the transition connection surface.

In some embodiments, the middle leg includes a plurality of leg bodies, the plurality of leg bodies being disposed at intervals in the second direction, an upper side of each leg body being connected to the base body, and two adjacent leg bodies being connected through the first connecting plate extending in the second direction. The first connecting plate and the base body are disposed at intervals to form a first avoidance space for causing a fork of a forklift truck to be inserted. Or, the foot includes a plurality of foot bodies, the plurality of foot bodies being disposed at intervals in the second direction, an upper side of each foot body being connected to the base body, and two adjacent foot bodies being connected through the second connecting plate extending in the second direction. The second connecting plate and the base body are disposed at intervals to form a second avoidance space for causing the fork of the forklift truck to be inserted. Or, the middle leg and the foot are connected through the third connecting plate extending in the first direction. The third connecting plate and the base body are disposed at intervals to form a third avoidance space for causing the forklift truck to be inserted. The first direction and the second direction are perpendicular to each other.

In some embodiments, the base body is provided with a limiting protrusion, and the limiting protrusion is disposed below the base body and extends in the first direction. The foot is provided with a protrusion limiting groove in insertion fit with the limiting protrusion, the protrusion limiting groove is through in the first direction, and the protrusion limiting groove sleeves the limiting protrusion and is slidably disposed relative to the limiting protrusion in the first direction.

In some embodiments, the number of the foot mounting grooves is two, and the two foot mounting grooves are respectively disposed at two opposite sides of the middle leg. The number of the feet is two, and the two feet are disposed in one-to-one correspondence with the two foot mounting grooves.

In some embodiments, the transport case includes a plurality of anti-slip pads, the plurality of anti-slip pads being disposed on the base body at intervals and at least partially located at the side, close to the supporting base surface of the base, of the base body, so as to be in contact with the fork of the forklift truck inserted below the base body.

In some embodiments, the anti-slip pad includes a bottom pad and an anti-slip insertion part disposed above the bottom pad. The base body is provided with an anti-slip pad insertion hole for causing the anti-slip insertion part to be inserted, and a peripheral surface of the anti-slip insertion part is in insertion fit with an inner wall surface of the anti-slip pad insertion hole. The peripheral surface of the anti-slip insertion part is provided with an anti-slip insertion protrusion to be in interference fit with the anti-slip pad insertion hole through the anti-slip insertion protrusion.

In some embodiments, the anti-slip insertion part includes a plurality of insertion posts disposed at intervals around a center line of the anti-slip pad, and a peripheral surface of the insertion post is provided with: a first anti-slip insertion protrusion, the first anti-slip insertion protrusion extending in a circumferential direction of the anti-slip insertion part; and a second anti-slip insertion protrusion, the second anti-slip insertion protrusion extending along the center line of the anti-slip pad.

In some embodiments, the anti-slip insertion part includes at least one insertion strip disposed in the middle of the plurality of insertion posts, and the insertion strip extending in a direction parallel to the bottom pad. The anti-slip pad insertion hole is internally provided with a plurality of partitions to divide the anti-slip pad insertion hole into a plurality of insertion cavities, and each insertion post and the insertion strip are in insertion fit with one of the plurality of insertion cavities.

In some embodiments, the case body includes an operating handle, disposed on the auxiliary door, the auxiliary door being driven by the operating handle to move upwards, so that the second fixing part is drawn out from the first fixing part, and the auxiliary door is in the open position.

In some embodiments, the first fixing part includes a fixing sleeve. The second fixing part includes a fixing insertion piece, the fixing insertion piece being at least partially inserted into the fixing sleeve, so that the auxiliary door is in the closed position.

In some embodiments, an end surface, facing the auxiliary door, of the second side plate is provided with a fork limiting groove, and the transport case further includes: a limiting fork, disposed at one end, close to the door body, of the auxiliary door, the limiting fork being hinged to the auxiliary door. A first end of the limiting fork is located in the fork limiting groove, and a second end of the limiting fork extends in the direction close to the door body, so that the door body pushes the limiting fork to rotate through the second end of the limiting fork in the process that the door body slides towards the closed position, the first end of the limiting fork abuts against the door body, and the first end of the limiting fork abuts against an inner wall surface of the fork limiting groove.

In some embodiments, the limiting fork is connected to the auxiliary door through a limiting rotating shaft, and a torsion spring sleeves the limiting rotating shaft, so as to drive the limiting fork to rotate to an initial position through the torsion spring when the door body is in an open state.

In some embodiments, the transport case further includes: a push block, disposed on the door body, the push block protruding from the door body in a direction close to the auxiliary door. The push block includes a first pushing surface, a first angle being formed between the first pushing surface and the horizontal plane, so that the first pushing surface is in contact with the limiting fork to push the limiting fork to rotate in the sliding process of the door body.

In some embodiments, the side plate is provided with an insertion hole, and the transport case further includes: balance insertion pieces, disposed at the bottom of the auxiliary door, the balance insertion pieces being at least partially inserted into the insertion hole, and the auxiliary door driving the balance insertion pieces to be movably disposed in the vertical direction, so that the auxiliary door is inserted into the insertion hole or drawn out from the insertion hole. A plurality of balance insertion pieces are provided, and the plurality of balance insertion pieces are uniformly disposed on the auxiliary door at intervals.

By applying the technical solution of the present disclosure, the transport case includes the case body, the case body being internally provided with the containing space for containing the materials. The case body includes the supporting framework and the protective coating, the supporting framework being coated with the protective coating. The supporting framework is made of the metal material, and the protective coating is made of the plastic material. The overall transport case is supported by the supporting framework made of the metal material, and meanwhile, the supporting framework is coated with a layer of the protective coating, so that the bearing capacity of the supporting framework is further enhanced, lightweight of the transport case is achieved while the pressure bearing capacity of the transport case is met, and when transporting the chemically or physically unstable materials, the transport case is not prone to deformation or cracking.

### Brief Description of the Drawings

The accompanying drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the accompanying drawings:
Fig. 1 illustrates a schematic structural diagram of a transport case from a first perspective according to the present disclosure.
Fig. 2 illustrates a schematic structural diagram of a transport case from a second perspective according to the present disclosure.
Fig. 3 illustrates a schematic structural diagram of a transport case from a third perspective according to the present disclosure.
Fig. 4 illustrates a schematic structural diagram of a supporting framework according to the present disclosure.
Fig. 5 illustrates a schematic structural diagram of opening a door body in a transport case from a first perspective according to the present disclosure.
Fig. 6 illustrates an enlarged view of a part A according to Fig. 5.
Fig. 7 illustrates an enlarged diagram of a part B according to Fig. 5.
Fig. 8 illustrates a schematic structural diagram of opening a door body in a transport case from a second perspective according to the present disclosure.
Fig. 9 illustrates an enlarged view of a part C according to Fig. 8.
Fig. 10 illustrates a schematic fit diagram of an engaging part and an engaging support strip of a transport case according to the present disclosure.
Fig. 11 illustrates a schematic structural diagram of opening a door body in a transport case from a third perspective according to the present disclosure.
Fig. 12 illustrates an enlarged diagram of a part D according to Fig. 11.
Fig. 13 illustrates a schematic structural diagram of a transport case in a folded state according to the present disclosure.
Fig. 14 illustrates a schematic mounting diagram of a pivot assembly of a transport case according to the present disclosure.
Fig. 15 illustrates an enlarged diagram of a part F according to Fig. 14.
Fig. 16 illustrates a schematic structural diagram of a first embodiment of an auxiliary door of a transport case according to the present disclosure.
Fig. 17 illustrates a schematic structural diagram of a pivot assembly in a transport case according to the present disclosure.
Fig. 18 illustrates a section view of a pivot assembly in a transport case in a mounted state according to the present disclosure.
Fig. 19 illustrates a schematic structural diagram of a base in a transport case from a first perspective according to the present disclosure.
Fig. 20 illustrates an enlarged view of a part O according to Fig. 19.
Fig. 21 illustrates an enlarged view of a part P according to Fig. 19.
Fig. 22 illustrates a schematic structural diagram of a first side plate in a transport case according to the present disclosure.
Fig. 23 illustrates an enlarged view of a part T according to Fig. 22.
Fig. 24 illustrates a schematic structural diagram of a side plate framework of a first side plate in a transport case according to the present disclosure.
Fig. 25 illustrates an enlarged view of a part U according to Fig. 24.
Fig. 26 illustrates a side view of an insertion framework on a first side plate in a transport case according to the present disclosure.
Fig. 27 illustrates a front view of a side plate framework of a first side plate in a transport case according to the present disclosure.
Fig. 28 illustrates a schematic structural diagram of a base framework in a transport case according to the present disclosure.
Fig. 29 illustrates an enlarged view of a part S according to Fig. 28.
Fig. 30 illustrates an enlarged view of a part R according to Fig. 28.
Fig. 31 illustrates a schematic diagram of a side plate framework of a second side plate in a transport case according to the present disclosure.
Fig. 32 illustrates a schematic structural diagram of W according to Fig. 31.
Fig. 33 illustrates a schematic structural diagram of a second side plate in a transport case according to the present disclosure.
Fig. 34 illustrates an enlarged view of a part V according to Fig. 33.
Fig. 35 illustrates a side view of an insertion framework on a second side plate in a transport case according to the present disclosure.
Fig. 36 illustrates a front view of an insertion framework on a second side plate in a transport case according to the present disclosure.
Fig. 37 illustrates a schematic structural diagram of a base in a transport case from a second perspective according to the present disclosure.
Fig. 38 illustrates a schematic structural diagram of a base in a transport case from a third perspective according to the present disclosure.
Fig. 39 illustrates a first schematic structural diagram of a protection plate in a transport case in a shielded state according to the present disclosure.
Fig. 40 illustrates a second schematic structural diagram of a protection plate in a transport case in a shielded state according to the present disclosure.
Fig. 41 illustrates a schematic structural diagram of a socket component in a transport case according to the present disclosure.
Fig. 42 illustrates a schematic structural diagram of a base in a transport case from a fourth perspective according to the present disclosure.
Fig. 43 illustrates a schematic structural diagram of a foot in a transport case from a first perspective according to the present disclosure.
Fig. 44 illustrates a schematic structural diagram of a foot in a transport case from a second perspective according to the present disclosure.
Fig. 45 illustrates an enlarged view of a part K according to Fig. 42.
Fig. 46 illustrates an enlarged view of a part V according to Fig. 42.
Fig. 47 illustrates an enlarged view of a part I according to Fig. 44.
Fig. 48 illustrates a schematic structural diagram of an anti-slip pad in a transport case according to the present disclosure.
Fig. 49 illustrates a schematic structural diagram of a bolt in a transport case according to the present disclosure.
Fig. 50 illustrates a top view of a bolt in a transport case according to the present disclosure.
Fig. 51 illustrates a schematic mounting diagram of a buffer strip in a transport case according to the present disclosure.
Fig. 52 illustrates a schematic structural diagram of a buffer strip in a transport case according to the present disclosure.
Fig. 53 illustrates a schematic fit diagram of a buffer strip and a base in a transport case according to the present disclosure.
Fig. 54 illustrates a mounting section view of a buffer strip in a transport case according to the present disclosure.
Fig. 55 illustrates a section view of a nut mounting hole in a transport case according to the present disclosure.
Fig. 56 illustrates a schematic structural diagram of a nut in a transport case according to the present disclosure.
Fig. 57 illustrates a schematic structural diagram of an observation window in a transport case according to the present disclosure.
Fig. 58 illustrates a schematic mounting diagram of an observation window in a transport case according to the present disclosure.
Fig. 59 illustrates a schematic structural diagram of a second embodiment of an auxiliary door of a transport case according to the present disclosure.
Fig. 60 illustrates a schematic mounting diagram of an auxiliary door of a transport case in a second embodiment according to the present disclosure.
Fig. 61 illustrates an enlarged diagram of a part Z according to Fig. 60.

Herein, the above accompanying drawings include the following reference signs.
1. Case body; 10. First top surface; 11. Limiting slide; 12. Second top surface; 13. Limiting component; 130. Supporting column; 131. Limiting chuck; 14. Stop component; 141. First body; 142. Second body; 143. Third body; 1430. Avoidance notch; 144. First stop component; 146. Second stop component; 15. Baffle; 16. Middle stopper; 160. Limiting notch; 17. Lining body; 185. Conductive protrusion; 186. Grounding column;
100. Containing space; 18. Supporting framework; 19. Protective coating; 180. Supporting cross beam; 181. Supporting longitudinal beam; 1810. Circulation hole; 182. Side plate framework; 1821. Side plate framework body; 190. Side plate coating; 183. Base framework; 191. Base coating; 184. Door body framework; 192. Door body coating;
81. Drainage part; 810. Water inlet; 811. Drainage outlet; 82. First positioning part; 83. Second positioning part; 830. Insertion hole; 84. Baffle; 821. First positioning protrusion; 822. Second positioning protrusion; 823. Third positioning protrusion; 824. Fourth positioning protrusion; 831. First positioning groove; 832. Second positioning groove; 833. Third positioning groove; 834. Fourth positioning groove;
2. Door body; 20. Second fitting part; 201. Fitting column; 202. Limiting stopper; 21. Engaging part; 210. Engaging opening; 22. Engaging support strip; 23. Avoidance part; 24. Sliding plate; 240. Guide end surface; 25. Connecting piece; 250. Connecting recess; 26. Limiting groove; 27. First door body; 28. Second door body; 29. Locking assembly; 291. First locking part; 292. Second locking part; 2910. Blocking part; 2911. Elbow; 270. Mounting hole; 293. Operation handrail; 280. Pull handrail;
3. Hinged assembly; 31. First fan blade; 32. Second fan blade; 320. First fitting part; 33. Bearing component; 34. Support frame;
4. Base; 40. Temperature regulating assembly; 41. Socket component; 42. Bearing end surface; 401. Temperature regulating pad; 402. Regulating pad plug; 403. Power plug; 410. Socket body; 411. First socket; 412. Second socket; 413. Mounting channel; 414. Protective cover; 43. First discharge channel; 44. Second discharge channel; 430. First discharge port; 440. Second discharge port; 45. Protection plate; 441. First clamping part; 450. Second clamping part; 451. Protection body; 452. Operation body; 4520. First operation body; 4521. Second operation body; 46. Base body; 460. Foot mounting groove; 461. Groove bottom surface; 462. Groove side surface; 463. Mounting guide surface; 464. Transition connection surface; 465. Anti-slip pad insertion hole; 466. Partition; 467. Insertion cavity; 468. Limiting protrusion; 469. First baffle; 4610. Second baffle; 4611. Nut mounting hole; 4612. First mounting hole segment; 4613. Second mounting hole segment; 4614. Insertion mounting groove; 4615. Baffle framework; 4616. Baffle cladding layer; 4617. Baffle framework body; 4618. Mounting groove framework; 46181. First plate body; 46182. Second plate body; 46183. Third plate body; 46184. Fastening connection piece; 46140. First rotation stop part; 46141. First opening part; 46142. Second opening part; 46143. Arc-shaped groove; 46144. Insertion limiting groove; 46145. Second rotation stop part;
4619. Third mounting hole segment; 47. Middle leg; 471. Leg body; 472. First connecting plate; 478. Third connecting plate; 48. Foot; 481. Sliding surface; 482. Contact surface; 483. Foot body; 484. Second connecting plate; 485. Protrusion limiting groove; 487. Bolt insertion hole; 488. Third reinforcing rib; 49. Anti-slip pad; 491. Bottom pad; 492. Anti-slip insertion part; 493. Anti-slip insertion protrusion; 494. Insertion post; 495. First anti-slip insertion protrusion; 496. Second anti-slip insertion protrusion; 497. Insertion strip; 417. Mounting through hole; 418. Buffer strip mounting groove; 419. Clamping hole;
5. Side plate; 50. Side plate body; 5011. First end surface; 5012. Second end surface; 5013. Third end surface; 507. Auxiliary opening; 501. Side plate column; 502. First column; 503. Socket part; 5030. Insertion opening; 504. Second column; 505. Extension bracket; 5050. Top bracket; 506. Welding area; 51. First side plate; 510. First fitting end surface; 52. Second side plate; 520. Second fitting end; 53. First connecting part; 530. Connecting body; 531. Engaging groove; 5301. First notch; 5302. Second notch; 54. Second connecting part; 541. First rod body; 542. Second rod body; 55. Filling gap; 56. Filling block; 57. First fixing part; 570. First fixed block; 5701. First fixing groove; 5702. Locking groove; 5853. Insertion mounting part; 58531. Insertion body; 58532. Rotating part; 58533. Insertion limiting part; 58311. First insertion plate segment; 58312. Second insertion plate segment; 58534. Contact fit surface; 5856. Insertion framework; 58561. First supporting plate segment; 58312. Second supporting plate segment; 58563. Third supporting plate segment; 58564. Limiting support protrusion; 521. Fork limiting groove; 571. Fixing sleeve;
6. Auxiliary door; 60. Second fixing part; 601. Second fixed block; 602. Protruding block; 61. Avoidance space; 62. Observation window; 6261. Perspective plate; 6262. Insertion segment; 6263. Stop segment; 63. Operation handle; 630. Fastening screw; 64. Fixing insertion piece; 65. Limiting fork; 66. Push block; 67. Balance insertion piece; 68. Auxiliary door framework; 680. Auxiliary door protection layer;
7. Pivot assembly; 70. Rotating component; 701. Rotating shaft; 702. Connecting shaft; 703. Extension plate; 71. Connecting component; 710. Connecting channel; 711. First connecting plate; 712. Second connecting plate; 713. Third connecting plate; 714. Limiting plate body; 72. Fixed seat;
85. Buffer strip; 8581. Buffer strip body; 85811. Clamping piece arrangement groove; 8582. Elastic clamping piece; 85820. Clamping structure; 85821. Strip rod body; 85822. Clamping protrusion;
91. Nut; 911. Internal threaded sleeve; 912. Limiting stop plate; 913. Annular reinforcing rib; 92. Bolt; 922. Screw cap; 923. Strip insertion rod; 924. Cylindrical rod segment; 925. Threaded rod segment; 926. First reinforcing rib; 927. Second reinforcing rib; 93. Anti-loose structure; 931. First protrusion; 932. Second protrusion; 933. Stop surface; 934. Guide surface.

### Detailed Description of the Embodiments

It is to be noted that the embodiments in the present disclosure and features in the embodiments may be combined with each other without conflict. The present disclosure is described in detail below with reference to the accompanying drawings and in conjunction with the embodiments.

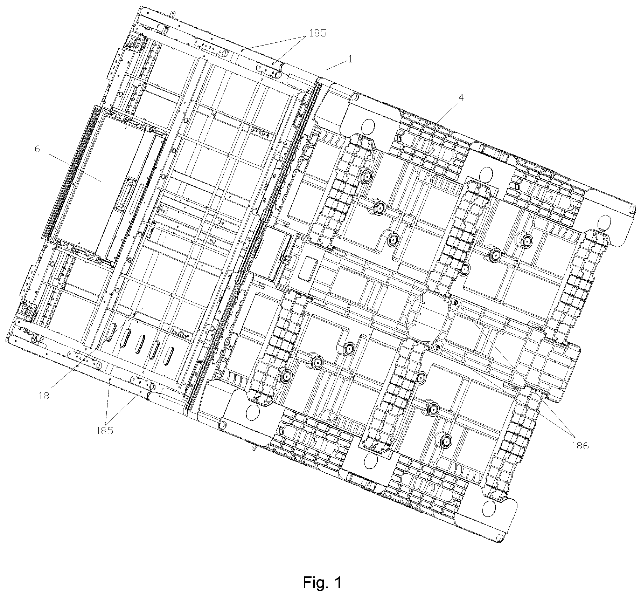

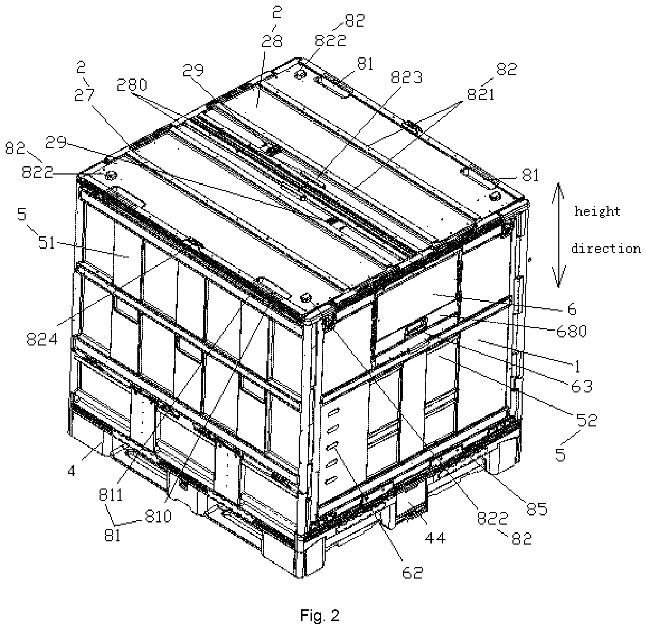

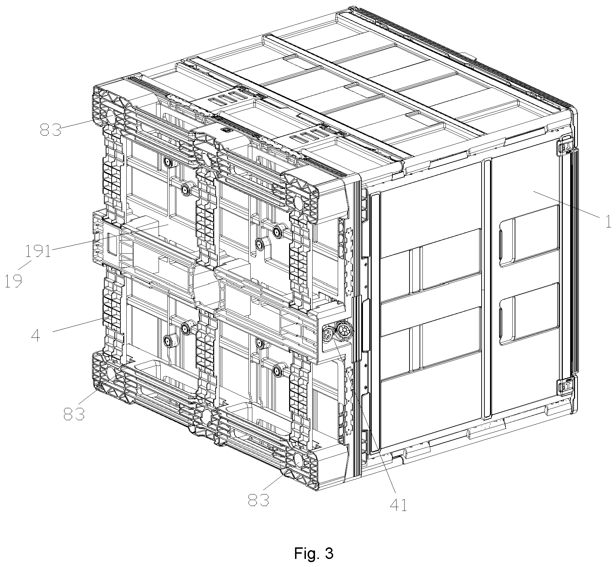

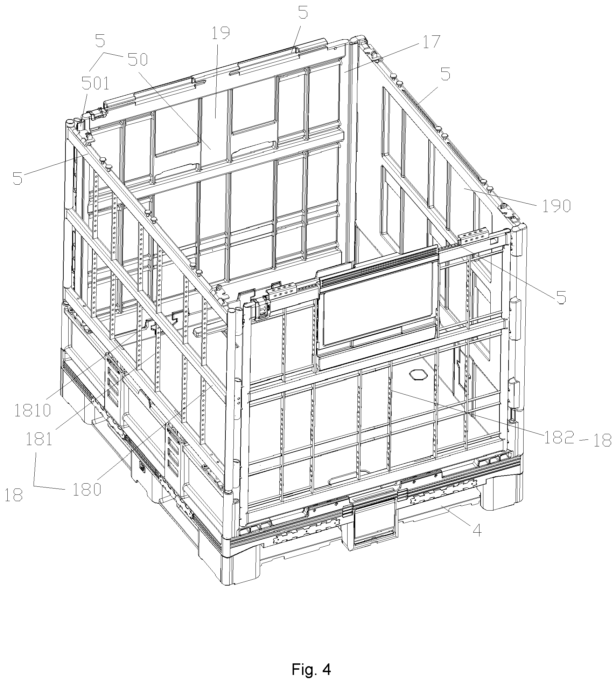

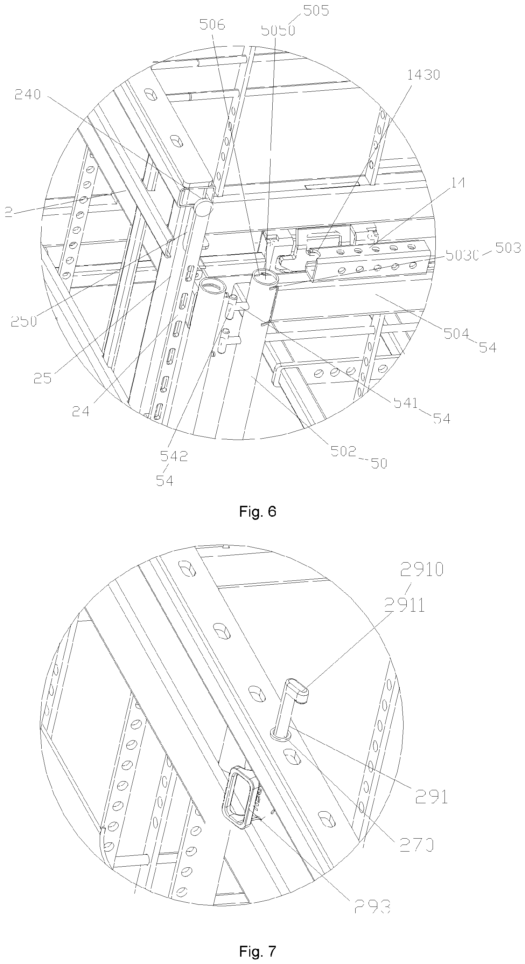

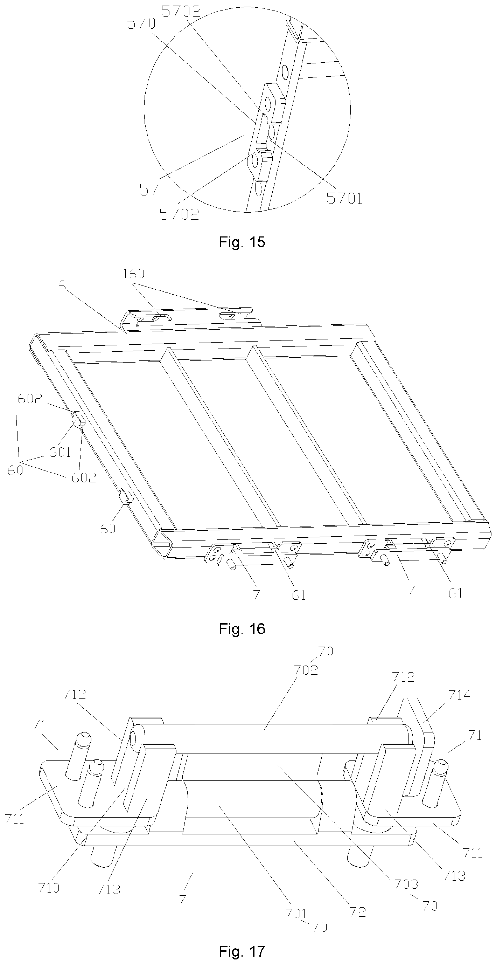

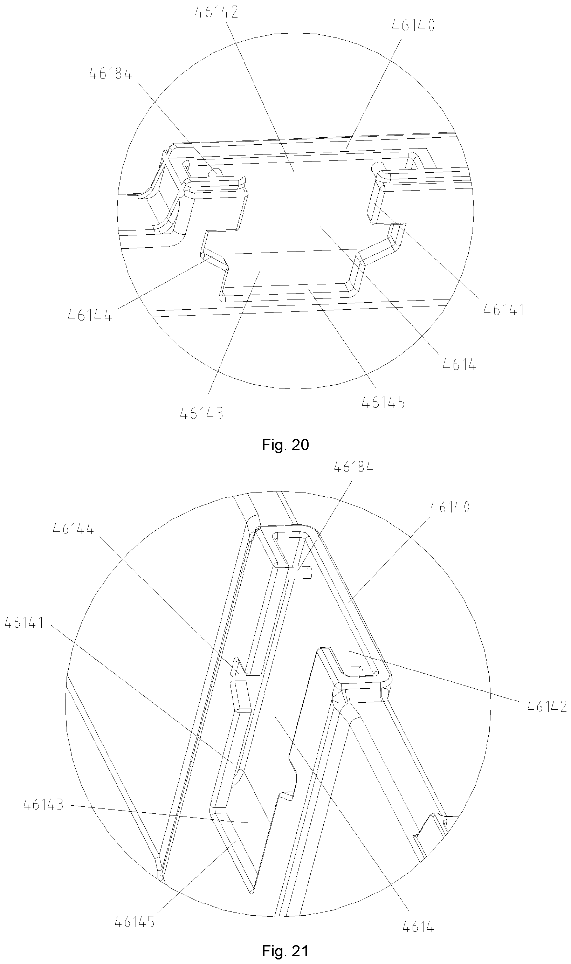

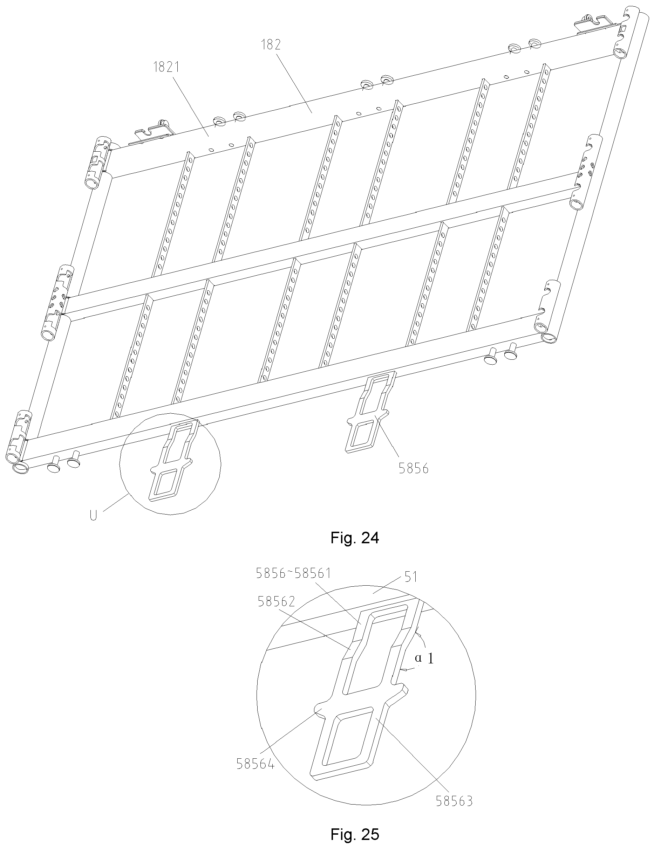

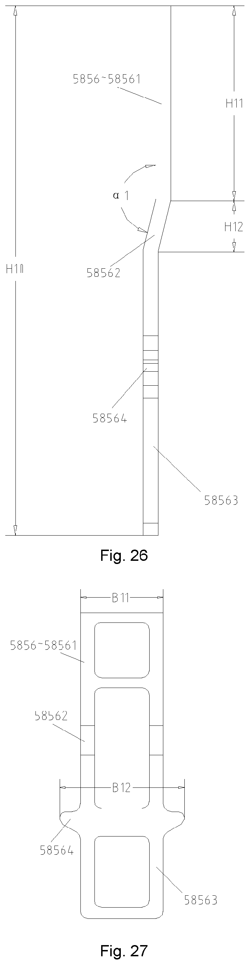

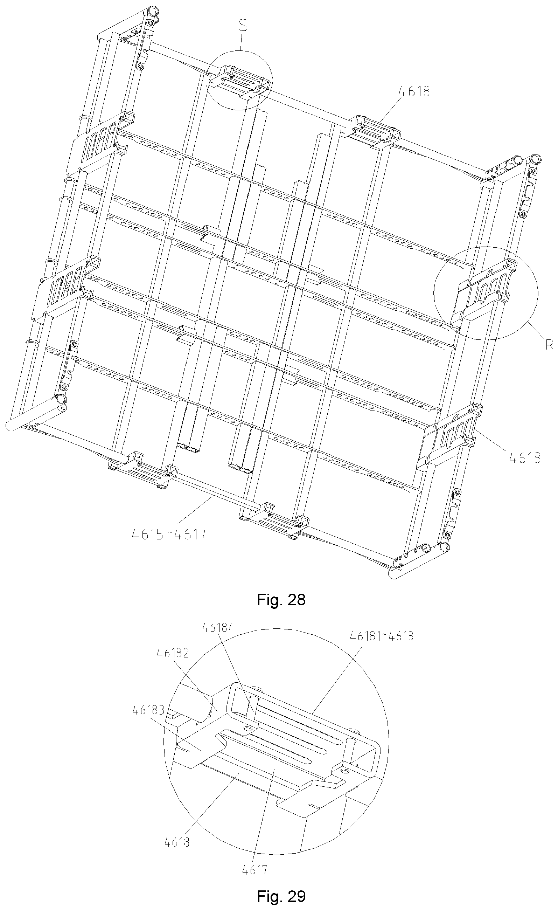

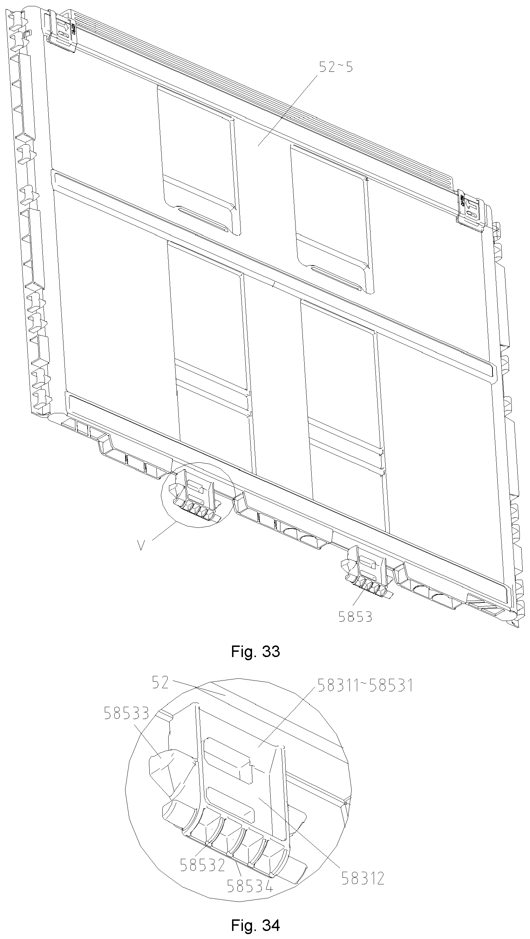

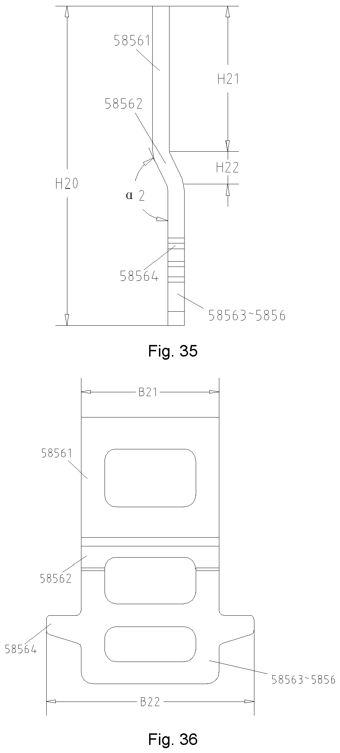

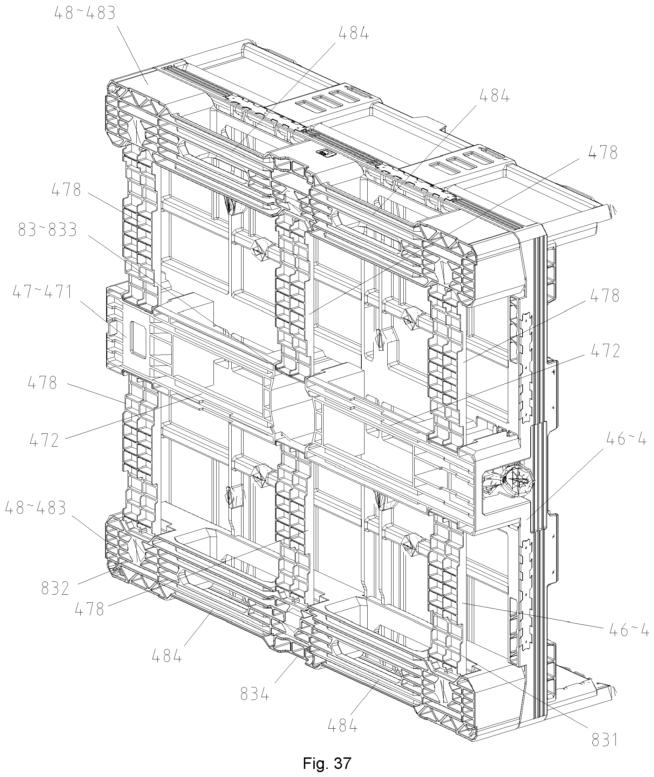

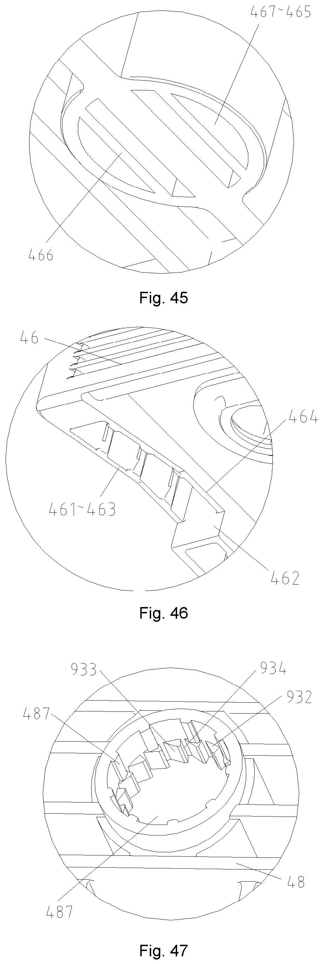

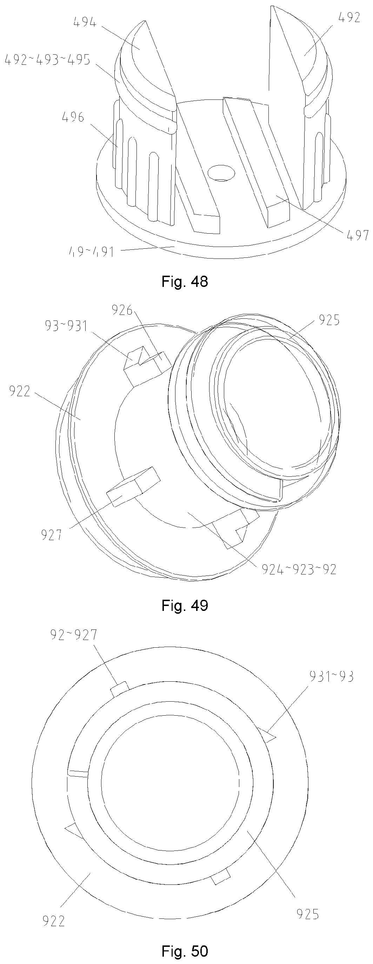

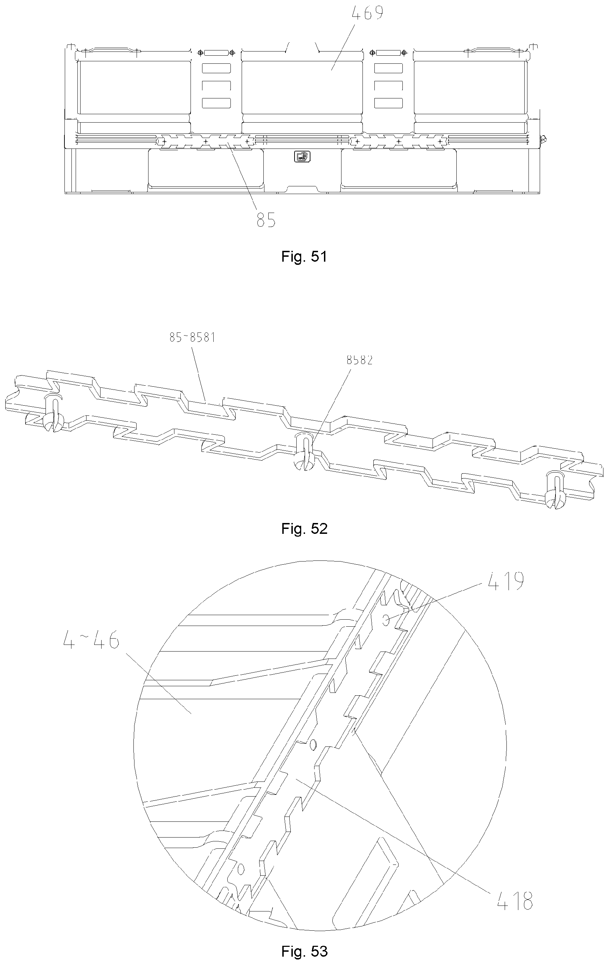

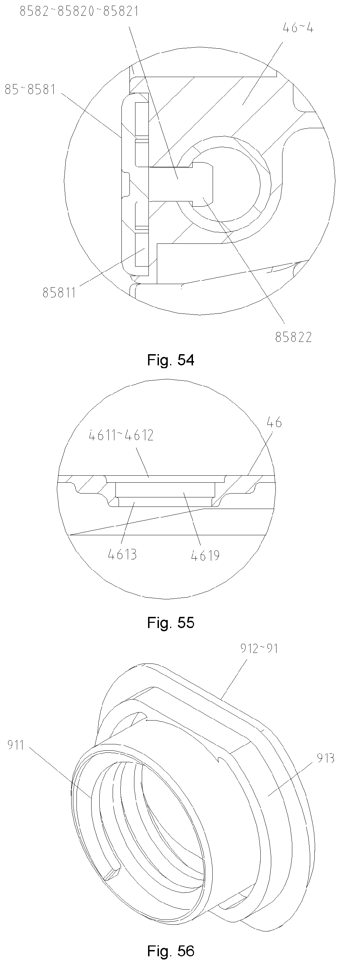

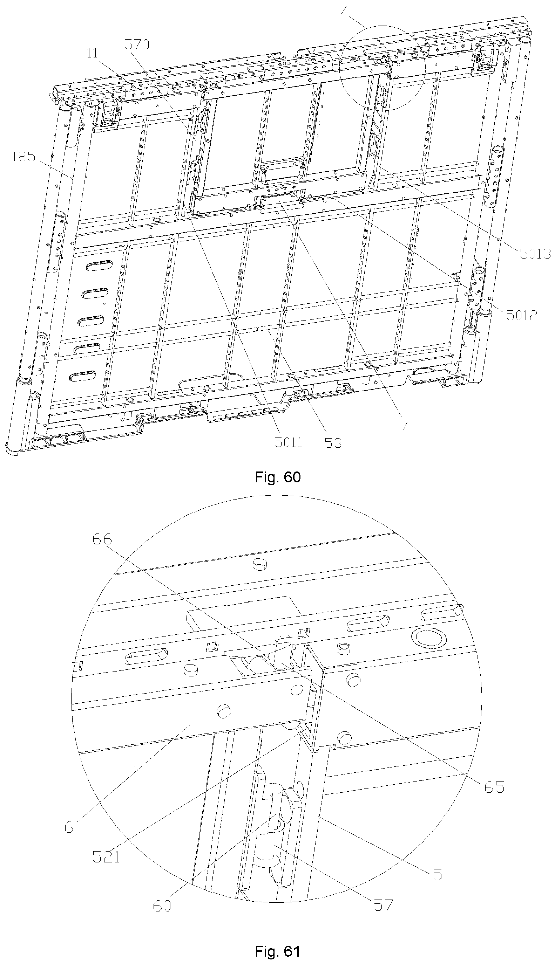

Referring to Fig. 1 to Fig. 61, the present disclosure provides a transport case, which includes a case body 1, the case body 1 being internally provided with a containing space 100 for containing materials. The case body 1 includes a supporting framework 18 and a protective coating 19, the supporting framework 18 being coated with the protective coating 19. The supporting framework 18 is made of a metal material, and the protective coating 19 is made of a plastic material.

In this way, the transport case in the present disclosure includes the case body 1, the case body 1 being internally provided with the containing space 100 for containing the materials. The case body 1 includes the supporting framework 18 and the protective coating 19, the supporting framework 18 being coated with the protective coating 19. The supporting framework 18 is made of the metal material, and the protective coating 19 is made of the plastic material. The overall transport case is supported by the supporting framework 18 made of the metal material, and meanwhile, the supporting framework 18 is coated with a layer of the protective coating 19, so that the bearing capacity of the supporting framework 18 is further enhanced, lightweight of the transport case is achieved while the pressure bearing capacity of the transport case is met, and when transporting the chemically or physically unstable materials, the transport case is not prone to deformation or cracking.

The protective coating 19 is provided with a first avoidance opening, and the supporting framework 18 is in contact with the materials through the first avoidance opening, so that the materials are grounded.

The supporting framework 18 is provided with a conductive protrusion 185. The protective coating 19 is provided with a second avoidance opening, and the conductive protrusion 185 is disposed in the second avoidance opening in a penetrating manner, so that an end surface of the conductive protrusion 185 is in contact with the materials, and then the materials are grounded. In this way, the materials are conveniently grounded, and the supporting framework 18 is also conveniently clamped by utilizing the conductive protrusion 185 in the injection molding process of the case body, so that the uniformity of the protective coating 19 is sequentially improved.

In some embodiments, a plurality of conductive protrusions 185 are provided, and the plurality of conductive protrusions 185 are disposed on the supporting framework 18 at intervals. A plurality of second avoidance openings are provided, and the plurality of second avoidance openings and the plurality of conductive protrusions 185 are disposed in one-to-one correspondingly manner.

The conductive protrusion 185 includes a first end surface and a second end surface which are oppositely disposed, the first end surface being connected to the supporting framework 18, and the second end surface of the conductive protrusion 185 and a surface of the protective coating 19 being located in the same plane. Through the arrangement, an inner wall surface of the containing space 100 can be flat and the problem that the conductive protrusion 185 protruding the protective coating 19 may scratch a transport bag is avoided.

In some embodiments, a bottom surface of the case body 1 is provided with a grounding column 186, and the grounding column 186 is connected with the supporting framework 18, so that the materials are grounded through the grounding column 186. In some embodiments, the grounding column 186 is disposed in the middle of the base 4 of the case body 1, with a large force in the middle. Meanwhile, in the process of transporting the case body, the work of a forklift truck is not affected. In the actual application process, after the transport bag is in contact with the conductive protrusion 185, the static electricity is conducted to the support framework 18 through the conductive protrusion 185, so as to be conducted to the grounding column 186 for grounding.

In some embodiments, the supporting framework 18 includes: supporting cross beams 180, a plurality of supporting cross beams 180 being provided, and the plurality of supporting cross beams 180 being disposed side by side; and supporting longitudinal beams 181, the supporting longitudinal beams 181 being sequentially disposed on the plurality of supporting cross beams 180 in a penetrating manner, a plurality of supporting longitudinal beams 181 being provided, and the plurality of supporting longitudinal beams 181 being disposed at intervals in a length direction of the supporting cross beam 180. In some embodiments, the supporting cross beams 180 and the supporting longitudinal beams 181 are perpendicular to each other, and the supporting longitudinal beams 181 are disposed in the supporting cross beams 180 in a penetrating manner. Compared with a connection manner of connecting a surface of the supporting longitudinal beam 181 to a surface of the supporting cross beam 180, the present disclosure causes the supporting cross beams 180 and the supporting longitudinal beams 181 to be connected more tightly, and when the pressure in the containing space 100 increases, deformation of the supporting cross beams 180 and the supporting longitudinal beams 181 is avoided through the mutual stopping effect of both.

In some embodiments, the supporting cross beam 180 is a tube body, the supporting longitudinal beam 181 is a rod body, the supporting longitudinal beam 181 is provided with a plurality of circulation holes 1810, and the plurality of circulation holes 1810 are disposed at intervals in a length direction of the supporting longitudinal beam 181. The supporting cross beam 180 is disposed to be the tube body, and the plurality of supporting longitudinal beams 181 are disposed at intervals in the length direction of the supporting cross beam 180, so that the supporting cross beam 180 is supported by using the plurality of supporting longitudinal beams 181. When the supporting cross beam 180 receives a large pressure, the supporting longitudinal beams 181 have a blocking effect on the supporting cross beam 180, and the two adjacent supporting longitudinal beams 181 divide the whole supporting cross beam 180 into a plurality of segments with a short distance, so that the supporting cross beam 180 is prevented from being prone to deformation or even breakage.

In some embodiments, the thickness of the protective coating 19 ranges from 2 mm to 4 mm. The protective coating 19 is formed by injection molding. In the manufacturing process, liquid injection molding raw materials flow from one side surface of the supporting longitudinal beam 181 to the other side surface through the circulation holes 1810, so that by arranging the plurality of circulation holes 1810, the effect of reducing weight is achieved, and the supporting longitudinal beam 181 is uniformly coated with the injection molding raw materials, and moreover, the circulation holes 1810 are filled with the injection molding raw materials, so that the bearing capacity of the supporting longitudinal beam 181 is improved. The appearance of the transport case is more attractive by using the protective coating 19, and the safety of the transport case is improved by means of the fitting of the protective coating 19 and the supporting framework 18, so that the transport case is not prone to deformation when the transport case falls or is subjected to internal and external extrusion.

In some embodiments, the transport case further includes a plurality of side plates 5, the plurality of side plates 5 being sequentially disposed in a circumferential direction of the transport case to enclose the containing space 100. Each side plate 5 includes a side plate body. The supporting framework 18 includes a side plate framework 182, the protective coating 19 includes a side plate coating 190, the side plate framework 182 is coated with the side plate coating 190, and the side plate framework 182 is disposed on the side plate body. The side plate framework 182 includes a plurality of side plate supporting cross beams disposed side by side and a plurality of side plate supporting longitudinal beams disposed in parallel, the side plate supporting longitudinal beams being sequentially disposed in the plurality of side plate supporting cross beams in a penetrating manner. Through the side plate coating 190, a gap between each side plate supporting cross beam and each side plate supporting longitudinal beam is filled, thereby improving the pressure bearing capacity of the side plate 5, and meanwhile, an inner wall surface of the side plate 5 is made flat by using the side plate coating 190, thereby avoiding the damage to the transport bag caused by the side plate framework 182.

The transport case in the present disclosure further includes a base 4, the base 4 including a base body 46. The supporting framework 18 includes a base framework 183, the protective coating 19 includes a base coating 191, the base framework 183 is coated with the base coating 191, and the base framework 183 is disposed on the base body 46. The base framework 183 includes a plurality of base supporting cross beams disposed side by side and a plurality of base supporting longitudinal beams disposed in parallel, the base supporting longitudinal beams being sequentially disposed in the plurality of base supporting cross beams in a penetrating manner. Through the base coating 191, a gap between each base supporting cross beam and each base supporting longitudinal beam is filled, thereby improving the bearing capacity of the base 4, and meanwhile, a bearing end surface of the base 4 is made flat by using the base coating 191, thereby avoiding the damage to the transport bag caused by the base framework 183.

The transport case in the present disclosure further includes a door body 2. The supporting framework 18 includes a door body framework 184, the protective coating 19 includes a door body coating 192, the door body framework 184 is coated with the door body coating 192, and the door body framework 184 is disposed on the door body 2. The transport case is opened or closed by the door body 2, the door body framework 184 includes a plurality of door body supporting cross beams disposed side by side and a plurality of door body supporting longitudinal beams disposed in parallel, where the door body supporting cross beam is a tube body, and the door body supporting longitudinal beam is a solid rod body. The door body 2 needs to be opened or closed, so that the door body supporting longitudinal beam is disposed to be the solid rod body to improve the pressure bearing capacity of the door body 2, and the door body coating 192 fits with the door body framework 184 to avoid deformation of the door body 2.

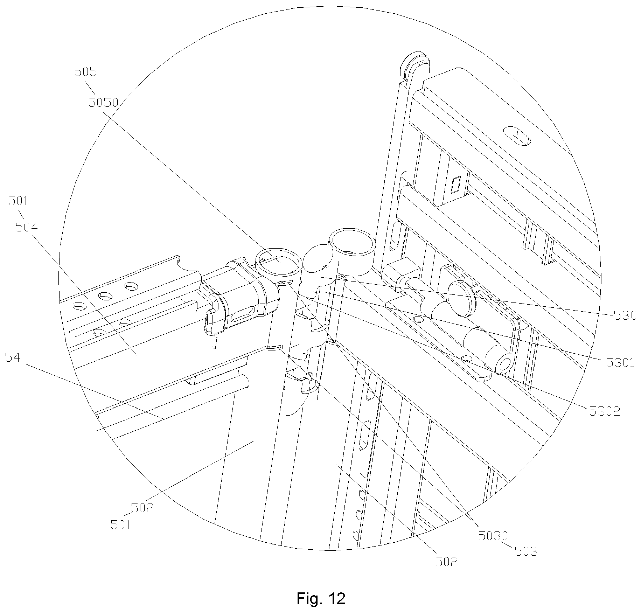

In the embodiments provided in the present disclosure, as shown in Fig. 1 to Fig. 3, the plurality of side plates 5 are disposed on the base 4, the plurality of side plates 5 are sequentially disposed in the circumferential direction of the base 4 to enclose the containing space 100, and each side plate 5 is foldably disposed relative to the base 4. The door body 2 is disposed at the top of the plurality of side plates 5, the door body 2 is slidably disposed relative to the plurality of side plates 5 to open or close the containing space 100. When the door body 2 slides to a predetermined open position, the door body 2 is flipped until the door body 2 is located at the side of the side plate 5. By folding each side plate 5 relative to the base 4, when the transport case is not used for storage or transportation, each side plate 5 is flipped towards the middle of the base 4 , so that the side plate is in a folded state, and the door body 2 is disposed at the side of the side plate 5 after being opened and is kept connected with the side plate 5, so that the door body is driven to flip while the side plate 5 is flipped, and the transport case is integrally folded in a folded state as shown in Fig. 12.

In order to avoid water accumulation on a top surface of the door body 2, the door body 2 is provided with drainage parts 81, and each drainage part 81 includes a water inlet 810 and a drainage outlet 811 which communicate with each other. The water inlet 810 is disposed on the top surface of the door body 2, and the drainage outlet 811 is disposed on a side surface of the door body 2. A plurality of drainage parts 81 are provided, and the plurality of drainage parts 81 are disposed at intervals in a circumferential direction of the door body 2. The water inlet 810 communicates with the drainage outlet 811 through a drainage channel, which is inclined to the top surface of door body 2, so that the water inlet 810 is disposed on the top surface of the door body 2, the drainage outlet 811 is disposed at the side surface of the door body 2, and meanwhile, the plurality of drainage parts 81 are disposed to drain water on the top surface of the door body 2 to the side surface of the door body 2 through the water inlet 810 and discharge the water along the side surface of the case body 1.

When the transport cases are stacked as a whole for transportation or storage, in order to avoid the space occupation or the risk that the transport case falls off due to relative movement between two adjacent transport cases, the top surface of the door body 2 is provided with first positioning parts 82, a bottom surface of the base 4 is provided with second positioning parts 83, and the first positioning parts 82 of one transport case of the two stacked transport cases are inserted into the second positioning parts 83 of the other transport case to position the two adjacent transport cases.

In some embodiments, the first positioning parts 82 protrude relative to the top surface of the door body 2, a plurality of first positioning parts 82 are provided, and the plurality of first positioning parts 82 are disposed at intervals in the circumferential direction of the door body 2. Each second positioning part 83 includes an insertion hole 830, the first positioning part 82 being at least partially inserted into the insertion hole 830. The insertion hole 830 is disposed on a foot 48 of the base 4. The first positioning part 82 includes a first positioning protrusion 821, a second positioning protrusion 822 and a third positioning protrusion 823. The second positioning part 83 includes a first positioning groove 831, a second positioning groove 832 and a third positioning groove 833.

When the plurality of transport cases are sequentially stacked in a vertical direction, the base of the upper transport case of the two adjacent transport cases is aligned with the door body of the lower transport case without multiple adjustments, which solves the problem in the related art that the time required for stacking the transport cases is long, and improves the stacking efficiency, and the two adjacent transport cases are positioned by a positioning structure, so that the upper transport case cannot slide relatively in a direction parallel to a supporting base surface of the transport case, thereby improving the stacking safety.

In some embodiments, the case body 1 is a cuboid. A plurality of first positioning protrusions 821 are disposed above the door body 2, the plurality of first positioning protrusions 821 are disposed at intervals in a first direction, and each first positioning protrusion 821 is of a strip structure extending in a second direction. A plurality of first positioning grooves 831 are disposed below the base 4, and the plurality of first positioning grooves 831 and the plurality of first positioning protrusions 821 are disposed in a one-to-one correspondingly manner. And/or, four second positioning protrusions 822 are disposed above the door body 2, and the four second positioning protrusions 822 are respectively disposed at four corners of the door body 2. Four second positioning grooves 832 are disposed below the base 4, and the four second positioning grooves 832 and the four second positioning protrusions 822 are disposed in a one-to-one correspondingly manner. And/or, a plurality of third positioning protrusions 823 are disposed above the door body 2, and the plurality of third positioning protrusions 823 are disposed in the middle of the door body 2 at intervals. A plurality of third positioning grooves 833 are disposed below the base 4, and the plurality of third positioning grooves 833 and the plurality of third positioning protrusions 823 are disposed in a one-to-one correspondingly manner. Two fourth positioning protrusions 824 are disposed above the door body 2, and the two fourth positioning protrusions 824 are disposed at intervals in the first direction and respectively located at two opposite sides of the door body 2. Two fourth positioning grooves 834 are disposed below the base, and the two fourth positioning grooves 834 and the two fourth positioning protrusions 824 are disposed in a one-to-one correspondingly manner. The first direction and the second direction are perpendicular to each other and parallel to the supporting base surface of the base 4.

In some embodiments, the base 4 includes: the base body 46; a middle leg 47, the middle leg 47 disposed in the middle of the base body 46; and a plurality of feet 48, the plurality of feet 48 being disposed below the base body 46 at intervals in the first direction, and each foot 48 being detachably connected to the base body 46. The base body 46 is provided with at least one foot mounting groove 460 for mounting the foot 48, the foot mounting groove 460 includes a groove bottom surface 461 and a groove side surface 462 which are connected with each other, the groove bottom surface 461 being in contact with a top surface of the foot 48, and the groove side surface 462 being located at the side, far away from the middle leg 47, of the groove bottom surface 461 and disposed at a predetermined angle with the supporting base surface to be in contact with a side surface of the side, close to the middle leg 47, of the foot 48, so as to limit and stop the mounting action of the foot 48.

In some embodiments, the middle leg 47 includes a plurality of leg bodies 471, the plurality of leg bodies 471 being disposed at intervals in the second direction, an upper side of each leg body 471 being connected with the base body 46, and two adjacent leg bodies 471 being connected through a first connecting plate 472 extending in the second direction. The first connecting plate 472 and the base body 46 are disposed at intervals to form a first avoidance space for causing the fork of the forklift truck to be inserted. And/or, the foot 48 includes a plurality of foot bodies 483, the plurality of foot bodies 483 being disposed at intervals in the second direction, an upper side of each foot body 483 being connected to the base body 46, and two adjacent foot bodies 483 being connected through a second connecting plate 484 extending in the second direction. The second connecting plate 484 and the base body 46 are disposed at intervals to form a second avoidance space for causing the fork of the forklift truck to be inserted. And/or, the middle leg 47 and the foot 48 are connected through a third connecting plate 478 extending in the first direction. The third connecting plate 478 and the base body 46 are disposed at intervals to form a third avoidance space for causing the forklift truck to be inserted.

In some embodiments, the first positioning groove 831 is disposed on the third connecting plate 478. And/or, the second positioning groove 832 is disposed on the foot body 483. And/or, the third positioning groove 833 is disposed on the foot body 471. The fourth positioning groove is disposed on the foot body 483.

In some embodiments, the number of the foot mounting grooves 460 is two, and the two foot mounting grooves are 460 respectively disposed at two opposite sides of the middle leg 47. The number of the feet 48 is two, and the two feet 48 are disposed in one-to-one correspondence with the two foot mounting grooves 460.

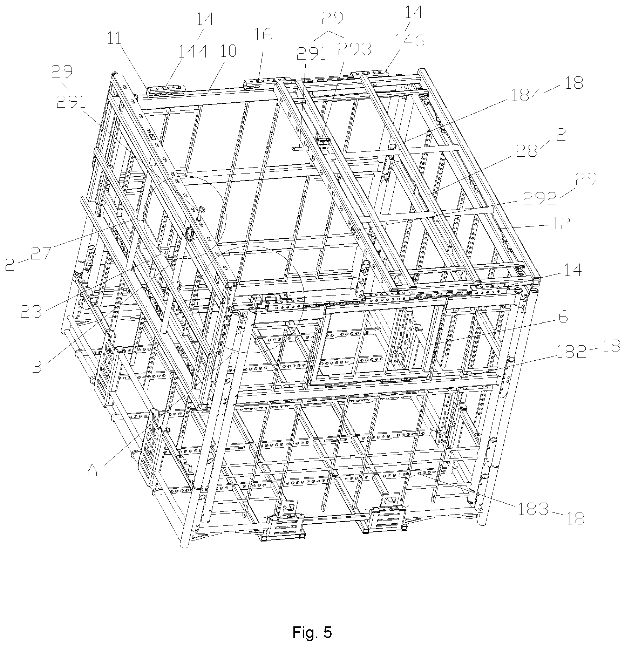

As shown in Fig. 5 to Fig. 12, the plurality of side plates 5 include first side plates 51 and second side plates 52 adjacent to each other. The transport case further includes: hinged assemblies 3, disposed on the first side plates 51, each hinged assembly 3 including a first fan blade 31 and a second fan blade 32 which are hinged to each other, the first fan blade 31 being fixedly connected with the first side plate 51, and the second fan blade 32 being provided with a first fitting part 320. The door body 2 is provided with a second fitting part 20, when the door body 2 is opened to the predetermined open position, the second fitting part 20 is clamped to the first fitting part 320, and the door body 2 is flipped along with the second fan blade 32, so that the door body 2 moves to the side of the first side plate 51. Through the arrangement, in the process that the door body 2 slides from the closed position to the open position, when sliding to the predetermined open position, the second fitting part 20 on the door body 2 is clamped into the first fitting part 320, the door body 2 continues to move to drive the second fan blade 32 to flip relative to the first fan blade 31, the door body 2 is flipped to the side of the case body 1 along with the second fan blade 32, so that the door body 2 is in the open position. The second fitting part 20 is clamped to the first fitting part 320, so that the door body 2 is kept in the open position. In this way, when the door body 2 is in the open position, material arrangement by an operator is not affected, and the door body 2 can be opened from the top of the case body 1 to the side of the case body 1, thereby solving the problem in the related art that the opening range is limited due to the fact that the door body 2 is directly hinged to the case body 1.

In the present disclosure, by only arranging the hinged assembly 3 on the case body 1, the second fan blade 32 in the hinged assembly 3 detachably fits with the door body 2, and meanwhile, the opening manner of the door body 2 is changed, that is, a conventional manner of directly flipping the door body 2 open is changed into a manner of sliding combined with flipping, and then the door body 2 fits with the second fan blade 32 when sliding to the predetermined open position, thereby achieving flipping of the door body 2.

The second side plate 52 is provided with a limiting slide 11, an opening of the limiting slide 11 faces an inner side of the case body 1, and the door body 2 is at least partially inserted into the limiting slide 11, and moves in an extension direction of the limiting slide 11. Through the arrangement, the door body 2 is limited by using a top surface of the limiting slide 11, so that when the pressure in the case body 1 increases, the door body 2 is prevented from being pushed open and the strength of the door body 2 is improved through the limiting effect of the limiting slide 11 on the door body 2.

The transport case further includes: limiting components 13, disposed on the first side plate 51, the first side plate 51 being provided with a second top surface 12, the limiting components 13 protruding relative to the second top surface 12. The second side plate 52 is provided with a first top surface 10. The door body 2 is provided with clamping parts 21, and the engaging parts 21 are at least partially clamped to the limiting components 13, so that the door body 2 is in a closed position. Through the arrangement, in the process of closing the door body 2, the engaging parts 21 are clamped to the limiting components 13 to remind the operator that the door body 2 has slid to the closed position, thereby preventing the door body 2 from exceeding the sliding stroke.

In the present disclosure, a plurality of limiting components 13 are provided, and the plurality of limiting components 13 are disposed at intervals in an extension direction of the second top surface 12. A plurality of clamping parts 21 are provided, and the plurality of clamping parts 21 are disposed in one-to-one correspondence with the plurality of limiting components 13. Through the arrangement, the plurality of clamping parts 21 fit with the plurality of limiting components 13 to position the door body 2, so as to ensure the fitting accuracy between the door body 2 and the case body 1.

In the embodiments provided in the present disclosure, the limiting component 13 includes: a supporting column 130, disposed on the second top surface 12; and a limiting chuck 131, disposed on the supporting column 130, a projection area of an orthographic projection of the limiting chuck 131 on a horizontal plane being greater than a projection area of an orthographic projection of the supporting column 130 on the horizontal plane. The engaging part 21 includes an engaging opening 210, the supporting column 130 being at least partially clamped into the engaging opening 210. The projection area of the orthographic projection of the limiting chuck 131 on the horizontal plane is greater than the projection area of the orthographic projection of the supporting column 130 on the horizontal plane, so that when the door body 2 is in the closed position, the door body 2 is prevented from being jacked up by means of fitting with the limiting slide 11 through the blocking effect of the limiting chuck 131 and the engaging part 21 in the vertical direction.

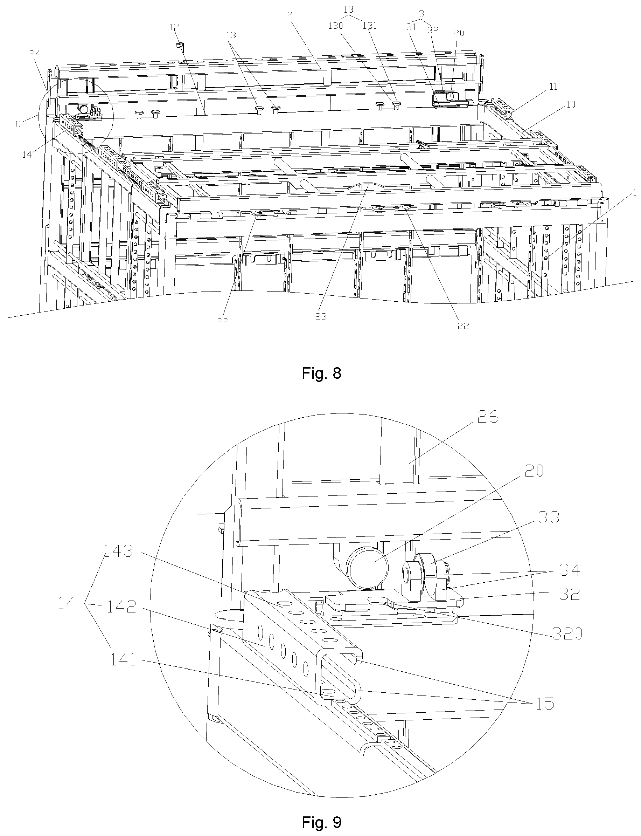

In some embodiments, as shown in Fig. 8, the door body 2 is further provided with an engaging support strip 22, both sides of the engaging support strip 22 are respectively spaced apart from the door body 2 and the second top surface 12, and the engaging opening 210 is disposed on the engaging support strip 22. Through the blocking effect of the limiting chuck 131 on a body of the engaging support strip 22 enclosing the engaging opening 210, the strength of the door body 2 in the closed position is ensured, and the tightness and the pressure bearing performance of the case body 1 are ensured.

In order to cause the door body 2 to slide smoothly, as shown in Fig. 8, the door body 2 is provided with an avoidance part 23, the avoidance part 23 is recessed relative to an inner wall surface of the door body 2. In the process of the movement of the door body 2, the limiting component 13 is avoided through the avoidance part 23.

As shown in Fig. 9, the case body 1 is provided with a stop component 14, the stop component 14 includes a first body 141, a second body 142 and a third body 143 which are sequentially connected, the first body 141 being disposed on the first top surface 10 of the case body 1, and being opposite to the third body 143 to enclose the limiting slide 11 between the first body 141, the second body 142 and the third body 143. The first body 141 and the third body 143 are respectively provided with a baffle 15, the baffle 15 is opposite to the second body 142, and a passing gap for causing the door body 2 to pass is formed between the two baffles 15. The door body 2 is blocked by the baffles 15, so that the door body 2 always keeps sliding in the limiting slide 11, and meanwhile, the door body 2 is prevented from being pushed open through the blocking effect of the third body 143 on the door body 2 in the vertical direction.

In some embodiments, the stop component 14 includes a first stop component 144 and a second stop component 146, the first stop component 144 and the second stop component 146 being respectively disposed on both sides of a middle stopper 16. The first door body 27 is limited and guided by the first stop component 144, and the second door body 28 is limited and guided by the second stop component 146.

In some embodiments, the transport case further includes: a sliding plate 24, disposed on the door body 2, the sliding plate 24 being connected to the door body 2 through a connecting piece 25, and an angle being formed between a plate surface of the sliding plate 24 and a surface of the connecting piece 25. The sliding plate 24 fits with the limiting slide 11, so that the door body 2 slides in the extension direction of the limiting slide 11. In some embodiments, the sliding plate 24 and the connecting plate 25 are perpendicular to each other, the sliding plate 24 and the first top surface 10 are perpendicular to each other, and the connecting piece 25 is parallel to the first top surface. In this way, the sliding plate 24 is blocked by the baffles 15 to prevent the sliding plate 24 from being disengaged from the limiting slide 11, and meanwhile, the sliding plate 24 is connected to the door body 2 through the connecting piece 25, and the connecting piece 25 passes through the passing gap between the two baffles 15.

An end of the sliding plate 24 is provided with a guide end surface 240, the guide end surface 240 is a curved surface, the third body 143 is provided with an avoidance notch 1430, and the guide end surface 240 is at least partially in contact with an end surface, enclosing the avoidance notch 1430, of the third body 143, so that the sliding plate 24 moves into the limiting slide 11. In this way, when the door body 2 moves from the open position to the closed position, first, the door body 2 is lifted, and the sliding plate 24 is inserted into the limiting slide 11. In order to avoid jamming of the door body 2 due to the fact that the sliding plate 24 and the limiting slide 11 are staggered, the guide end surface 240 at the end of the sliding plate 24 is attached to the avoidance notch 1430 on the third body 143, so that when the door body 2 is lifted and gradually moves to the horizontal position, the sliding plate 24 is guided to ensure that the door body 2 can slide to the closed position in the horizontal direction.

In some embodiments, the transport case further includes: the middle stopper 16, disposed on the first top surface 10 of the case body 1 and located in the middle of the first top surface 10, the middle stopper 16 being cylindrical, and a body of the middle stopper 16 being provided with limiting notches 160. The connecting piece 25 is provided with a connecting recess 250, the connecting recess 250 is at least partially engaged with the limiting notches, and the door body 2 is in the closed position through the blocking effect of the limiting notch on the connecting recess 250.

Two first side plates 51 are provided, the two first side plates 51 are oppositely disposed at intervals in the first direction, two second side plates 52 are provided, the two second side plates 52 are oppositely disposed at intervals in the second direction, the two first side plates 51 are respectively provided with the hinged assembly 3, and the two second side plates 52 are respectively provided with the limiting slide 11. The door body 2 includes a first door body 27 and a second door body 28. The first door body 27 and the second door body 28 are opened to the sides of the two first side plates 51 respectively. The two second side plates 52 are respectively provided with the middle stopper 16, the middle stopper 16 is located in the middle of a top surface of the second side plate 52, the middle stopper 16 extends in a sliding direction of the door body 2, both ends of the middle stopper 16 are respectively provided with the limiting notch 160, and the first door body 27 and the second door body 28 are respectively in contact with the limiting notches 160, so that the first door body 27 and the second door body 28 are in a closed position. In some embodiments, the connecting piece 25 on the first door body 27 and the connecting piece 25 on the second door body 28 are respectively provided with the connecting recess 250, the connecting recess 250 is at least partially engaged with the limiting notches, and the door body 2 is in the closed position through the blocking effect of the limiting notches 160 on the connecting recess 250.

An opening for placing the materials is jointly enclosed by the two first top surfaces 10 and the two second top surfaces 12, and the door body 2 corresponds to the opening to open or close the case body 1.

The first fitting part 320 is in interference fit with the second fitting part 20, the first fitting part 320 is a fitting opening, and the second fitting part 20 is a fitting projection. The first fitting part 320 is in interference fit with the second fitting part 20, so that the door body 2 can use the second fitting part 20 to drive the second fan blade 32 to flip and keep the door body 2 in the open position.

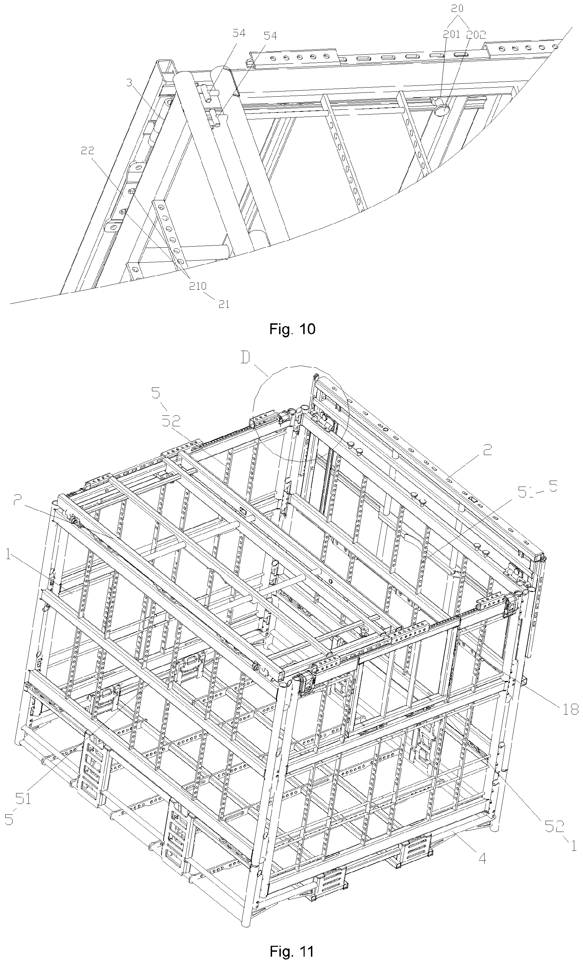

In some embodiments, the first fitting part 320 is the fitting opening, and the second fitting part 20 includes: a fitting column 201, disposed on the door body 2; and a limiting stopper 202, disposed on the fitting column 201, the fitting column 201 being at least partially clamped into the fitting opening and causing the limiting stopper 202 to drive the second fan blade 32 to flip. The door body 2 is located at the side of the case body 1 through the blocking effect of the fitting opening on the fitting column 201. Fig. 11 shows a split structure of the door body 2 and the hinged assembly 3, where the fitting column 201 and the fitting opening are clamped to each other, and meanwhile, under the blocking effect of the limiting stopper 202 on the second fan blade 32, the door body 2 drives the second fan blade 32 to flip to the side of the case body 1, at this time, the fitting column 201 is blocked by the body, enclosing the fitting opening, of the second fan blade 32, so that the door body 2 is kept in the open position.

In some embodiments, the second fan blade 32 is provided with an initial position and a flipping position, and the second fan blade 32 is at least partially located above the first fan blade 31 and is provided with a passing gap with the first fan blade 31, so that the second fan blade 32 is in the initial position. The second fitting part 20 is at least partially clamped to the first fitting part 320 through the passing gap. When the door body 2 is in the closed position, the second fan blade 32 is in the initial position correspondingly. When the door body 2 needs to be opened, the door body 2 is in the predetermined open position, where the limiting stopper 202 is in contact with the second fan blade 32 through the passing gap, the fitting column 201 is clamped into the fitting opening, the door body 2 is continued to be slid, the second fan blade 32 is driven by the limiting stopper 202 to flip, the door body 2 is driven to flip at the same time, and when the second fan blade 32 is flipped by 90 degrees, the door body 2 is flipped to the side of the case body 1. When the second fan blade 32 is in the initial position, the passing gap is disposed between the second fan blade 32 and the first fan blade 31 to ensure that the fitting column 201 can be clamped into the fitting opening, and meanwhile, the limiting stopper 202 fits with the second fan blade 32.

In some embodiments, the second fan blade 32 includes a hinged end and a fitting end which are oppositely disposed, the hinged end of the second fan blade 32 being hinged to the first fan blade 31, and the fitting end of the second fan blade 32 extending towards the inner side of the case body 1. The first fitting part 320 is disposed at the fitting end of the second fan blade 32. The first fitting part 320 is the fitting opening, and the fitting opening faces the inner side of the case body 1. Through the arrangement, it is ensured that the second fan blade 32 accurately fits with door body 2, so that the door body 2 can be completely opened.

The hinged assembly 3 further includes: a bearing component 33, disposed on the second fan blade 32, the bearing component 33 being provided with a bearing end surface, and the bearing end surface being a curved surface. The bearing end surface is at least partially in contact with the door body 2 to support the door body 2. By arranging the bearing component 33, an error in fitting with the second fan blade 32 caused by the deformation of the door body 2 in the process of repeated sliding is avoided, and meanwhile, the door body 2 is prevented from extruding the materials in the case body 1 by using the supporting effect of the bearing end surface.

In the present disclosure, the second fan blade 32 includes a first flipping surface and a second flipping surface which are oppositely disposed, the first flipping surface being opposite to the first fan blade 31, and the bearing component 33 being disposed on the second flipping surface. In this way, the overall structure of the hinged assembly 3 is more compact, without the need to arrange the bearing component 33 separately on the case body 1 to support the door body 2, and through the fitting between the bearing component 33 and the first fitting part 320, it is ensured that the door body 2 can accurately fit with the first fitting part 320 under the bearing effect of the bearing component 33.

In order to facilitate the fixing of the bearing component 33, the hinged assembly 3 further includes: support frames 34, disposed on the second fan blade 32, the support frames 34 protruding relative to a surface of the second fan blade 32, two support frames 34 being provided, the two support frames 34 being oppositely disposed at intervals, the bearing component 33 being disposed between the two support frames 34, and the bearing component 33 being respectively connected to the two support frames 34. The support frame 34 is provided with a rotating shaft, the bearing component 33 is disposed in the rotating shaft in a penetrating manner, and the bearing end surface protrudes relative to the top surface of the support frame 34, so that the bearing end surface is in contact with the door body 2 in preference to the support frame 34.

In some embodiments, the door body 2 is provided with a limiting groove 26 fitting with the bearing component 33, the limiting groove 26 extends in the sliding direction of the door body 2, the bearing component 33 is at least partially located in the limiting groove 26, and the bearing end surface is at least partially in contact with a groove bottom surface of the limiting groove 26. Through the arrangement, the door body 2 slides along a predetermined trajectory through the stopping effect of the bearing component 33 and the groove side wall surface of the limiting groove 26, so that the deviation of the movement trajectory of the door body 2 in the process of repeated sliding is avoided, and the fitting accuracy of the door body 2 and the hinged assembly 3 is improved.

In the embodiments provided in the present disclosure, the bearing component 33 is rotationally disposed around a second predetermined axis. And/or, the bearing component 33 is a bearing. Through the arrangement, the door body 2 moves more smoothly, and the friction between door body 2 and the bearing component 33 is reduced.

In the present disclosure, the structures of the first door body 27 and the second door body 28 are consistent, the two first side plates 51 are respectively provided with the hinged assembly 3, and the two second side plates 52 are respectively provided with the limiting slide 11 and the middle stopper 16.

The first door body 27 is provided with a first closed end surface, the second door body 28 is provided with a second closed end surface, and the first closed end surface and the second closed end surface are attached to each other, so that the first door body 27 and the second door body 28 are in the closed position, the first closed end surface is provided with a first closed step structure, and the second closed end surface is provided with a second closed step structure, When the first door body 27 and the second door body 28 are in a closed state, the first closed step structure and the second closed step structure are embedded to each other to form a labyrinth structure, which can improve the sealing effect between the first door body 27 and the second door body 28 and improve the waterproof performance.

In order to ensure that the first door body 27 and the second door body 28 are locked to each other in the closed position, the transport case further includes a locking assembly 29, the locking assembly 29 including a first locking part 291 and a second locking part 292, the first locking part 291 and the second locking part 292 being hooked to each other, so that the first locking part 291 and the second locking part 292 are blocked from each other. The first locking part 291 or the second locking part 292 is rotationally disposed around a predetermined axis. The first locking part 291 is disposed on the first door body 27, and the second locking part 292 is disposed on the second door body 28. Or, the first locking part 291 is disposed on the second door body 28, and the second locking part 292 is disposed on the first door body 27. Through the arrangement, the first locking part 291 and the second locking part 292 are hooked to each other, so that the first locking part 291 and the second locking part 292 are blocked from each other to prevent the first door body 27 and the second door body 28 moving towards the opening direction, and improve the locking strength of the first door body 27 and the second door body 28. When the case body 1 needs to be opened, only the first locking part 291 or the second locking part 292 needs to be rotated for separation, thereby opening the case body 1.

In some embodiments of the present disclosure, the first door body 27 is provided with the first locking part 291 and the second locking part 292 which are disposed at intervals, the second door body 28 is provided with the first locking part 291 and the second locking part 292 which are disposed at intervals, the first locking part 291 on the first door body 27 and the second locking part 292 on the second door body 28 are hooked to each other, and the second locking part 292 on the first door body 27 and the first locking part 291 on the second door body 28 are hooked to each other, so as to ensure the strength of the first door body 27 and the second door body 28 in the closed state, thereby avoiding the problem that the first door body 27 or the second door body 28 is opened due to shaking and bumping in the transportation process.

In some embodiments, as shown in Fig. 5 to Fig. 7, the first locking part 291 is provided with a blocking part 2910, and a preset angle is formed between an extension direction of the blocking part 2910 and an extension direction of the first locking part 291. The second locking part 292 is blocked by the blocking part 2910. By arranging the blocking part 2910, the fitting strength of the first locking part 291 and the second locking part 292 is improved.

In the embodiments provided in the present disclosure, the first locking part 291 includes a latch, the second locking part 292 includes an insertion hole, and the blocking part 2910 is disposed at an end of the latch. The latch is at least partially disposed in the insertion hole in a penetrating manner, so that a body, enclosing the insertion hole, of the second door body 28 is blocked by the blocking part 2910. After the latch passes through the insertion hole, the blocking part 2910 is in a blocking position by rotating the first locking part 291, so that the first door body 27 and the second door body 28 are locked, and then the blocking part 2910 is in the open position by reversely rotating the first locking part 291, so that the first door body 27 and the second door body 28 can slide. Optionally, the insertion hole extends in the sliding direction of the first door body 27 or the second door body 28.

In some embodiments, the blocking part 2910 includes an elbow 2911, the elbow 2911 being disposed at the end of the latch, the elbow 2911 and the latch being of an integrated structure, and the body, enclosing the insertion hole, of the second door body being blocked by the elbow 291. Through the arrangement, the structure is simple and convenient to implement, so that the first door body 27 and the second door body 28 are prevented from being pushed open by high-pressure materials in the case body 1 through the blocking effect of the insertion hole on the latch.

In some embodiments, the second locking part 292 includes a strip hole, and the first locking part 291 is rotationally disposed around a predetermined axis. The first locking part 291 is provided with a locking position and an open position. When the first locking part 291 rotates to the open position, the elbow 2911 rotates to a direction parallel to an extension direction of the strip hole, so that the first locking part 291 can be drawn out from the strip hole, and then the first door body 27 and the second door body 28 can be opened smoothly. When the first door body 27 and the second door body 28 are in the closed position, the first locking part 291 is inserted into the strip hole, the first locking part 291 is rotated, and the elbow 2911 is rotated to a position where a certain angle is formed in the extension direction of the strip hole, so that the elbow 2911 can block the body of the second door body 28 enclosing the strip hole, and then the first door body 27 and the second door body 28 are locked.

The first door body 27 or the second door body 28 is provided with a mounting hole 270, the first locking part 291 is at least partially disposed in the mounting hole 270 in a penetrating manner, and the locking assembly 29 further includes: an operation handrail 293, connected to the first locking part 291, the operation handrail 293 being operated to drive the first locking part 291 to rotate. In this way, the operator can conveniently rotate the first locking part 291 to open or close the first door body 27 and the second door body 28.

In order to facilitate operation of the first door body 27 and the second door body 28 to slide, the first door body 27 and the second door body 28 are respectively provided with a pull handrail 280, the pull handrails 280 protrude relative to the surfaces of the first door body 27 and the second door body 28, and the pull handrails 280 are operated to drive the first door body 27 and the second door body 28 to slide.

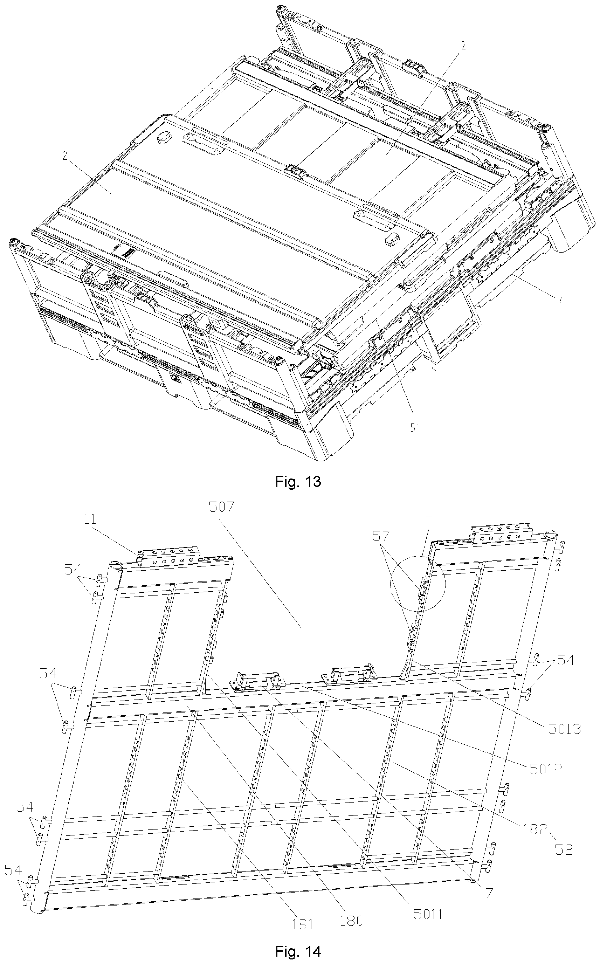

In a first embodiment of the auxiliary door provided in the present disclosure, as shown in Fig. 14 to Fig. 18, the second side plate 52 is provided with an auxiliary opening 507, and the transport case further includes: an auxiliary door 6, disposed on the second side plate 52 and located at the auxiliary opening 507, the auxiliary door 6 being provided with an open position and a closed position to open or close the auxiliary opening 507. A plate body, enclosing the auxiliary opening 507, of the second side plate 52 is provided with a first fixing part 57, a circumferential side surface of the auxiliary door 6 is provided with a second fixing part 60, and the first fixing part 57 is clamped to the second fixing part 60, so that the auxiliary door 6 is in a closed position. The second side plate 52 is provided with the auxiliary opening 507 and the auxiliary door 6, the transport bag in the transport case is conveniently disposed by opening or closing the auxiliary door 6, so as to prevent the transport bag from being wrinkled to extrude the materials. In addition, the first fixing part 57 and the second fixing part 60 are clamped to each other, so that the auxiliary door 6 is fixed in the closed position to avoid the problem that the auxiliary door 6 is opened due to shaking or bumping in the transportation process of the transport case.

The transport case further includes a pivot assembly 7, the pivot assembly 7 including: a rotating component 70, disposed on the plate body, enclosing the auxiliary opening 507, of the second side plate 52, the rotating component 70 being rotationally disposed around a predetermined axis; and a connecting component 71, disposed on the auxiliary door 6, the connecting component 71 including a connecting channel 710, the rotating part 70 being at least partially disposed in the connecting channel 710 in a penetrating manner, and the auxiliary door 6 being rotated through the stopping effect of the rotating component 70 and an inner wall surface of the connecting channel 710. Through the connection between the rotating component 70 and the connecting component 71, the auxiliary door 6 can be rotationally disposed to open or close. When the auxiliary door 6 is opened, the rotating component 70 is disposed in the connecting channel 710 in a penetrating manner, so that the separation of the auxiliary door 6 and the second side plate 52 is avoided through the blocking effect of the rotating component 70 and the connecting channel 710. In the use process, the operator only needs to pull the auxiliary door 6 with force, so that the first fixing part 57 is separated from the second fixing part 60, that is, the auxiliary door 6 is opened.

In some embodiments, the second side plate 52 with a first end surface 5011, a second end surface 5012 and a third end surface 5013 which are connected with each other, and the first end surface 5011 is opposite to the third end surface 5013 to enclose the auxiliary opening 507 between the first end surface 5011, the second end surface 5012 and the third end surface 5013. The first fixing part 57 is disposed on at least one of the first end surface 5011 and/or the third end surface 5013, and the rotating component 70 is disposed on the second end surface 5012. In some embodiments, the first end surface 5011 and the third end surface 5013 are respectively provided with the first fixing part 57, the auxiliary door 6 is provided with a first mounting surface opposite to the first end surface 5011 and a third mounting surface opposite to the third end surface 5013, and the first mounting surface and the third mounting surface are respectively provided with the second fixing part 60. In this way, when the auxiliary door 6 is opened, the auxiliary door 6 can be suspended towards the base 4 under its own gravity, so that the auxiliary door 6 does not need to be fixed, and meanwhile, the auxiliary door 6 does not affect the operator to arrange the transport bag.

The connecting channel 710 extends in the horizontal direction, the rotating component 70 is in interference fit with the connecting channel 710, and the connecting component 71 is driven by the auxiliary door 6 to be movably disposed in the vertical direction. Through the arrangement, when the auxiliary door 6 is lifted upwards, a second fixed block 601 driving the second fixing part 60 is drawn out from a locking groove 5702 of the first fixing part 57 to rotate the auxiliary door 6.

In order to facilitate the pivot connection between the auxiliary door 6 and the second side plate 52, the pivot assembly 7 further includes a fixed seat 72, the fixed seat 72 being disposed on the second side plate 52. The rotating component 70 includes: a rotating shaft 701, disposed on the fixed seat 72, the rotating shaft 701 being rotationally disposed on its own axis relative to the fixed seat; and a connecting shaft 702, connected with the rotating shaft 701 through an extension plate 703, an end of the connecting shaft 702 being disposed in the connecting channel 710 in a penetrating manner. Through the arrangement, the connection with the auxiliary door 6 is achieved by the connecting shaft 702, and the connecting shaft 702 is connected with the rotating shaft 701 through the extension plate 703, so that the connecting shaft 702 drives the auxiliary door 6 to rotate around the rotating shaft 701.

In a specific implementation, the connecting component 71 further includes: a first connecting plate 711, connected to the auxiliary door 6; and a second connecting plate 712 and a third connecting plate 713 which are disposed on the first connecting plate 711, the second connecting plate 712 and the third connecting plate 713 being oppositely disposed at intervals to form the connecting channel 710 between the second connecting plate 712 and the third connecting plate 713. The auxiliary door 6 is driven to rotate through the stopping effect between the connecting shaft 702 and the second connecting plate 712 and the third connecting plate 713, so that when the auxiliary door 6 is in the open position, the connecting shaft 702 applies an acting force to the first connecting plate 711 to prevent the auxiliary door 6 from falling.

The auxiliary door 6 is provided with an avoidance space 61, the avoidance space 61 extends towards the middle of the auxiliary door 6, and the second connecting plate 712 and the third connecting plate 713 extend into the avoidance space 61. Through the arrangement, the gap between the bottom surface of the auxiliary door 6 and the second end surface 5012 is reduced, and the tightness of the transport case is improved.

In order to avoid the relative movement with the connecting shaft 702 in the horizontal direction when the auxiliary door 6 is lifted upwards, the connecting component 71 further includes: a limiting plate body 714, disposed on the auxiliary door 6 and located at an end of the connecting channel 710, the limiting plate body 714 being at least partially in contact with an end of the rotating component 70 to block the rotating component 70 through the limiting plate body 714. It is to be noted here that the upward direction is a height direction shown in Fig. 1, and the horizontal direction and the height direction are perpendicular to each other. The end of the connecting shaft 702 is blocked by the limiting plate body 714 to limit the connecting shaft 702.

In the present disclosure, the first fixing part 57 includes: a first fixed block 570, disposed on the second side plate 52, the first fixed block 570 being provided with a first fixing groove 5701, and a notch of the first fixing groove 5701 facing an outer side of the transport case. The second fixing part 60 is at least partially clamped into the first fixing groove 5701. The second fixing part 60 is in interference fit with the first fixing groove 5701 to ensure the connection tightness between the first fixing part 57 and the second fixing part 60.

In some embodiments, the first fixing groove 5701 includes a first groove side wall surface and a second groove side wall surface which are oppositely disposed, the first groove side wall surface and the second groove side wall surface being respectively provided with a locking groove 5702, and the second fixing part 60 being at least partially clamped into the locking groove 5702. The auxiliary door 6 is movably disposed in the vertical direction to drive the second fixing part 60 to be disengaged from the locking groove 5702. In this way, through the fitting of the second fixing part 60 and the locking groove 5702, in the use process of the transport case, the pressure bearing performance of a joint of the auxiliary door 6 and the second side plate 52 can be improved, and the problem that the auxiliary door 6 is extruded to be opened due to excessive pressure in the transport case is avoided.

In a specific implementation, the second fixing part 60 includes: the second fixed block 601, disposed on the auxiliary door 6, the second fixed block 601 being at least partially clamped to the first fixing groove 5701, two opposite side surfaces of the second fixed block 601 being respectively provided with a protruding block 602, and the protruding block 602 being at least partially clamped to the locking groove 5702. In the use process, the auxiliary door 6 is first lifted upwards, at this time, the relative distance between the first connecting plate 711 and the axis of the connecting shaft 702 changes, the protruding block 602 is driven to be disengaged from the locking groove 5702, and then the auxiliary door 6 is flipped to the outer side of the transport case through the blocking effect between the connecting shaft 702 and the second connecting plate 712 or the third connecting plate 713. In the closing process, the second fixed block 601 is first clamped into the first fixing groove 5701, and then the auxiliary door 6 is moved downwards, so that the protruding block 602 is clamped into the locking groove 5702, and then the auxiliary door 6 is fixed.

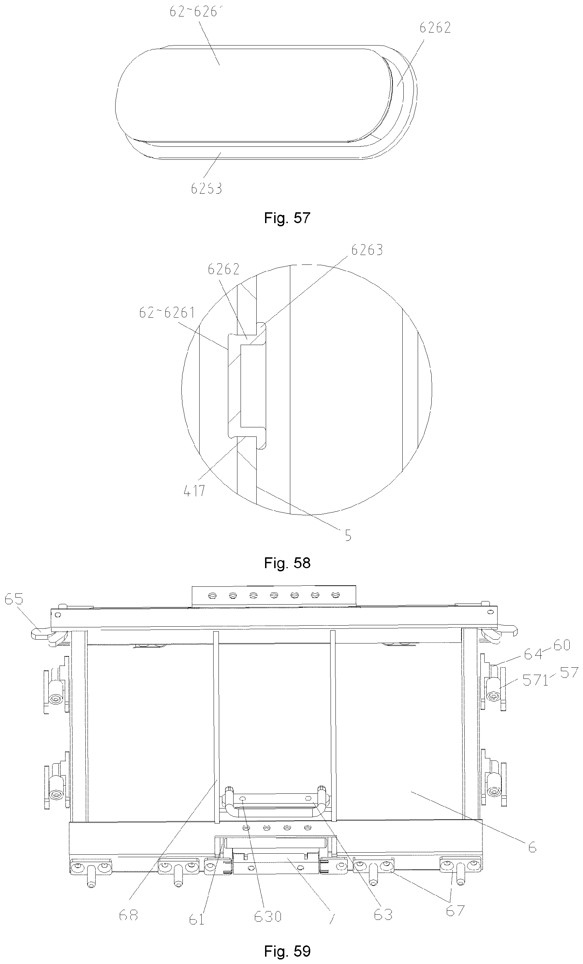

In a second embodiment of the auxiliary door provided in the present disclosure, as shown in Fig. 59 to Fig. 61, the embodiment differs from the first embodiment of the auxiliary door in that the second side plate 52 is provided with an auxiliary opening 507, and the transport case further includes: an auxiliary door 6, disposed on the second side plate 52 and located at the auxiliary opening 507, the auxiliary door 6 being provided with an open position and a closed position to open or close the auxiliary opening 507. A plate body, enclosing the auxiliary opening 507, of the second side plate 52 is provided with a first fixing part 57, a circumferential side surface of the auxiliary door 6 is provided with a second fixing part 60, and the second fixing part 57 is at least partially inserted into the first fixing part 57, so that the auxiliary door 6 is in the closed position. The second side plate 52 is provided with the auxiliary opening 507 and the auxiliary door 6, the transport bag in the transport case is conveniently disposed by opening or closing the auxiliary door 6, so as to prevent the transport bag from being wrinkled to extrude the materials. In addition, the first fixing part 57 and the second fixing part 60 are clamped to each other, so that the auxiliary door 6 is fixed in the closed position to avoid the problem that the auxiliary door 6 is opened due to shaking or bumping in the transportation process of the transport case. The auxiliary door 6 is provided with an operation handle 63, and the operation handle 63 is operated to open or close the auxiliary door 6 to facilitate the arrangement of the transport bag in the transport case. The operation handle 63 is mounted on the auxiliary door 6 by a fastening screw 630. An operation end of the fastening screw 630 is located at the side, far away from the containing space, of the auxiliary door 6, that is, the outer side of the case body 1, so as to avoid the risk of scratching the transport bag when the fastening screw 630 is located at the inner side of the case body 1.

In some embodiments, the first fixing part 57 includes a fixing sleeve 571. The second fixing part 60 includes a fixing insertion piece 64, the fixing insertion piece 64 being at least partially inserted into the fixing sleeve 571, so that the auxiliary door 6 is in the closed position. When the auxiliary door 6 needs to be opened, the operation handle 63 is operated to lift the auxiliary door 6 upwards, so that the fixing insertion piece 64 is drawn out from the fixing sleeve 571, thereby driving the auxiliary door 6 to open. Optionally, two groups of the first fixing parts 57 are provided, the two groups of the first fixing part 57 are respectively disposed on two opposite side surfaces of the side plate 5, two groups of the second fixing parts 60 are provided, and the two groups of the second fixing part 60 are respectively disposed on two opposite side surfaces of the auxiliary door 6 and are disposed in one-to-one correspondence with the two groups of the first fixing parts 57.

An end surface, facing the auxiliary door 6, of the second side plate 52 is provided with a fork limiting groove 521, and the transport case further includes: a limiting fork 65, disposed at one end, close to the door body 2, of the auxiliary door 6, the limiting fork 65 being hinged to the auxiliary door 6. A first end of the limiting fork 65 is located in the fork limiting groove 521, and a second end of the limiting fork 65 extends in the direction close to the door body 2, so that the door body 2 pushes the limiting fork 65 to rotate through the second end of the limiting fork 65 in the process that the door body 2 slides towards the closed position, the first end of the limiting fork 65 abuts against the door body 2, and the first end of the limiting fork 65 abuts against an inner wall surface of the fork limiting groove 521. In the specific use process, the auxiliary door 6 is opened only when the door body 2 is opened. In order to ensure that the door body 2 is in a closed state, that is, in the use process of the transport case, the strength of the auxiliary door 6 is improved, and deformation and upward movement of the auxiliary door 6 are avoided, so that the limiting fork 65 is provided. In the process that the door body 2 slides to the closed position, the limiting fork 65 is pushed to rotate, after the door body 2 slides to the closed position, the second end of the limiting fork 65 abuts against the top wall surface of the fork limiting groove 521, so that the limiting fork 65 abuts against the top wall surface of the fork limiting groove 521 to limit the auxiliary door 6. The fork limiting groove 521 extends in the vertical direction.

In some embodiments, the limiting fork 65 is connected to the auxiliary door 6 through a limiting rotating shaft, and a torsion spring sleeves the limiting rotating shaft, so as to drive the limiting fork 65 to rotate to an initial position through the torsion spring when the door body 2 is in an open state. In this way, after the door body 2 is opened, the limiting fork 65 automatically rotates to the initial position, that is, the second end of the limiting fork 65 rotates in the direction far away from the top wall surface of the fork limiting groove 521, so that the auxiliary door 6 can be lifted upwards to open the auxiliary door 6.

In a specific implementation, the transport case further includes: a push block 66, disposed on the door body 2, the push block 66 protruding from the door body 2 in a direction close to the auxiliary door 6. The push block 66 includes a first pushing surface, a first angle being formed between the first pushing surface and the horizontal plane, so that the first pushing surface is in contact with the limiting fork 65 to push the limiting fork 65 to rotate in the sliding process of the door body 2. By arranging the pushing block 66, the contact with the limiting fork 65 is ensured and a blocking force is formed on the limiting fork 65.

A bottom surface, enclosing the auxiliary opening 507, of the second side plate 52 is provided with an insertion hole, balance insertion pieces 67 are disposed at the bottom of the auxiliary door 6, the balance insertion pieces 67 are at least partially inserted into the insertion hole, and the auxiliary door 6 drives the balance insertion pieces 67 to be movably disposed in the vertical direction, so that the auxiliary door 6 is inserted into the insertion hole or drawn out from the insertion hole. A plurality of balance insertion pieces 67 are provided, and the plurality of balance insertion pieces 67 are uniformly disposed on the auxiliary door 6 at intervals. In this way, in the process of transporting the materials, when the case body is deformed, the auxiliary door 6 can be prevented from being disengaged from the side plate after deformation through the balance insertion pieces 67.

The auxiliary door 6 includes an auxiliary door framework 68 and an auxiliary door protection layer 680, the auxiliary door framework 68 being coated with the auxiliary door protection layer 680, so that the tightness between the auxiliary door 6 and the second side plate 52 is improved through the auxiliary door protection layer 680 and the side plate coating 190, and the structural strength of the auxiliary door 6 is also improved.

In the present disclosure, as shown in Fig. 10 to Fig. 12, the plurality of side plates 5 include the first side plates 51 and the second side plates 52 adjacent to each other. The first side plate 51 includes a first fitting end surface 510 opposite to the second side plate 52, and the second side plate 52 includes a second fitting end surface 520 opposite to the first side plate 51. The maximum vertical distance between the first fitting end surface 510 and the second fitting end surface 520 is less than or equal to 2 mm. It is to be noted here that the first fitting end surface 510 and the second fitting end surface 520 are the surfaces formed by the protective coating 19 after the side plate framework 182 and the injection molding raw materials are injection-molded, and the maximum vertical distance between the first fitting end surface 510 and the second fitting end surface 520 is limited to ensure the tightness between the side plates 5.

The transport case further includes: a connecting assembly, the connecting assembly including a first connecting part 53 and a second connecting part 54, the first connecting part 53 being disposed on the first fitting end surface 510, and the second connecting part 54 being disposed on the second fitting end surface 520. The first connecting part 53 is clamped to the second connecting part 54, so that the plurality of side plates are in an open position. In this way, the first connecting part 53 is disposed on the first fitting end surface 510, and the second connecting part 54 is disposed on the second fitting end surface 520, so that when the plurality of side plates are in the open position, the adjacent first side plate 51 and the second side plate 52 can be tightly attached, thereby avoiding the problem of weak pressure bearing capability caused by the excessive gap between the first side plate 51 and the second side plate 52.

In some embodiments, the second connecting part 54 extends from the second fitting end surface 520 in a direction close to the first side plate 51, and the first connecting part 53 includes: a connecting body 530, disposed on the first fitting end surface 510, the connecting body 530 being provided with an engaging groove 531, and the second connecting part 54 being at least partially clamped into the engaging groove 531 and in interference fit with the engaging groove 531. Through the interference fit between the second connecting part 54 and the engaging groove 531, the first side plate 51 and the second side plate 52 are connected more tightly. The first side plate 51 and the second side plate 52 are kept in the open position through the mutual blocking effect between the second connecting part 54 and the engaging groove 531. When the transport case needs to be folded, the second side plate 52 is manually pushed towards an inner side of the transport case to overcome the interaction force between the engaging groove 531 and the second connecting part 54, so that the second connecting part 54 is disengaged from the engaging groove 531, the second side plate 52 is in a folded position, and then the first side plate 51 is moved to cause the first side plate 51 in the folded position.

In a specific implementation process, the connecting body 530 is provided with a first notch 5301 and a second notch 5302 which are connected to each other, the first notch 5301 faces the inner side of the transport case, the second notch 5302 faces the first fitting end surface of the second side plate 52. The first notch 5301 and the second notch 5302 communicate with the engaging groove 531. The second connecting part 54 passes through the first notch 5301 and the second notch 5302 and then is clamped to the engaging groove 531. Through the arrangement, when the side plate 5 is in the open position, the second connecting part 54 is avoided by the second notch 5302, so that the second side plate 52 can be completely opened and preferably perpendicular to the bearing end surface of the base, and meanwhile, the second connecting part 54 can be completely engaged into the engaging groove 531 through the first notch 5301.

In some embodiments, the first notch 5301 extends in a length direction of the connecting body 530, and the second notch 5302 extends in a width direction of the connecting body 530. The second connecting part 54 includes: a first rod body 541, disposed on the second side plate 52, the first rod body 541 extending from the second fitting end surface 520 in the direction close to the first side plate 41; and second rod bodies 542, disposed at ends of the first rod body 541, a predetermined angle being formed between an extension direction of the second rod body 542 and the first rod body 541, the second rod body 542 being engaged into the engaging groove 531 through the first notch 5301, and the second rod body 542 being at least partially clamped to the second notch 5302. Through the arrangement, the contact area between the second rod body 542 and the engaging groove 531 can be increased, so that the engaging strength between the two is improved.

In the embodiments provided in the present disclosure, the connecting body 530 is provided with a plurality of engaging grooves 531, and the plurality of engaging grooves 531 are disposed at intervals in the length direction of the connecting body 530. A plurality of second connecting parts 54 are provided, and the plurality of second connecting parts 54 are disposed in one-to-one correspondence with the plurality of engaging grooves 531. The plurality of engaging grooves 531 are disposed to fit with the plurality of second connecting parts 54, so that the connection stability between the first side plate 51 and the second side plate 52 and the pressure-bearing performance of the connecting assembly are improved.

In a specific implementation process, a plurality of first connecting parts 53 are provided, the plurality of first connecting parts 53 are disposed at intervals in a height direction of the first side plate 51 to form a filling gap 55 between the two adjacent first connecting parts 53. The plurality of second connecting parts 54 are provided, the plurality of second connecting parts 54 are in one-to-one correspondence with the plurality of first connecting parts 53, and the transport case further includes: a filling block 56, disposed on the second side plate 52 and located between the two adjacent second connecting parts 54, the filling block 56 being at least partially located in the filling gap 55 and in interference fit with the two first connecting parts 53. The plurality of first connecting parts 53 are disposed at intervals in the height direction of the first side plate to reduce the weight of the transport case. The filling gap 55 is filled with the filling block 56 to avoid the extrusion of the materials from the filling gap 55. The first connecting part 53 is made of a metal material and the filling block 56 is made of a plastic material, thereby achieving the purpose of reducing weight.

In the embodiments provided in the present disclosure, the first connecting part 53 includes the connecting body 530, the connecting body 530 being provided with the engaging groove 531. The second connecting part 54 includes the first rod body 541 and the second rod bodies 542, the first rod body 541 being disposed in the second side plate 52 in a penetrating manner, both ends of the first rod body 541 being provided with the second rod bodies 542, a predetermined angle being formed between the second rod body 542 and the first rod body 541, and the first rod body 541 and the second rod bodies 542 being integrally formed. The first rod body 541 and the second rod body 542 are disposed to be of an integrated structure, so as to improve the structural strength of the second connecting part 54, so that the second connecting part 54 is not prone to deformation when being extruded by the materials in the transport case.

The base 4 is a rectangle, two first side plates 51 are provided, and the two first side plate 51 are oppositely disposed. Two second side plates 52 are provided, and the two second side plates 52 are oppositely disposed. Both sides of the first side plate 51 are respectively provided with the first connecting part 53, and both sides of the second side plate 52 are respectively provided with the second connecting part 54 to form the containing space for containing the materials between the two first side plates 51, two second side plates 52 and the base 4.

In order to facilitate the folding of the transport case, the base 4 is provided with a bearing end surface. The maximum distance from the bottom surface of the second side plate 52 to the bearing end surface is L1, and the minimum distance from the bottom surface of the first side plate 51 to the bearing end surface is L2. L2 > L1. Through the arrangement, when the transport case is in the folded state, if L1 is equal to L2, then one end of the second side plate 52 is tilted, which does not facilitate stacking and storage of the transport case in the folded state. If L2 > L1, when the first side plate 51 is folded first, the second side plate 52 remains in a horizontal state on the first side plate 51, thereby facilitating stacking and storage of the transport case in the folded state.

In the present disclosure, the side plate 5 includes: a side plate body 50; and a plurality of side plate columns 501, disposed on the side plate body 50, the plurality of side plate columns 501 being sequentially connected in a circumferential direction of the side plate body 50. The connecting assembly is disposed on the side plate column 501. The strength of the side plate body 50 is enhanced through the side plate column 501.

In some embodiments, the plurality of side plate columns 501 include: a first column 502, the connecting assembly being disposed on the first column 502, and the first column 502 being provided with a socket part 503; and a second column 504, an extension direction of the second column 504 and an extension direction of the first column 502 being perpendicular to each other, the second column 504 being provided with extension brackets 505, and the extension brackets 505 being at least partially inserted into the socket part 503. The extension brackets 505 and the second column 504 are of an integrated structure. In this way, the connection strength between the first column 502 and the second column 504 can be ensured, thereby improving the pressure bearing capability of the side plate 5, and through the mutual stopping effect of the extension brackets 505 and the socket part 503, when the pressure in the transport case increases, the extension brackets 505, the first column 502 and the second column 504 are not prone to bending, and the side plate 5 is not prone to deformation.

In one embodiment provided in the present disclosure, the socket part 503 includes a slot, and an extension direction of the slot being perpendicular to the extension direction of the first column 502. The extension brackets 505 are inserted into the slot. In the embodiment, the extension brackets 505 are in interference with the slot to ensure a tight connection between the two.

In another embodiment provided in the present disclosure, the first column 502 is cylindrical, the socket part 503 includes insertion openings 5030, the insertion openings 5030 being disposed on the first column 502 and communicating with a cylinder cavity of the first column 502. The extension brackets 505 are inserted into the first column 502 through the insertion openings 5030, each extension bracket 505 is provided with a contact end surface attached to an inner wall surface of the first column 502, and an extension direction of the contact end surface adapts to the inner wall surface of the first column 502. The first column 502 is disposed to be cylindrical to reduce the weight of the transport case.

A plurality of insertion openings 5030 are provided, and the plurality of insertion openings 5030 are disposed at intervals in a length direction of the first column 502. A plurality of extension brackets 505 are provided, and the plurality of extension brackets 505 are disposed in one-to-one correspondence with the plurality of insertion openings 5030. The plurality of extension brackets 505 include a top bracket 5050 located at the top of the second column 504, and a predetermined distance is formed between the top bracket 5050 and a top opening of the first column 502 to form a welding area 506 between a cylinder body of the first column 502 and the extension brackets 505. The reserved welding area 506 adopts a full welding process, so that the second column 504 and the top bracket 5050 are connected stably.

In a specific implementation, the transport case further includes: a lining body 17, disposed on the plate surface of the side plate body 50, the lining body 17 facing the containing space of the transport case, and the side plate column 501 being located at the side, far away from the containing space, of the lining body 17. Through the arrangement, the problem that a certain position of the transport bag is easily damaged after being extruded due to the contact between the material transport bag in the transport case and the connecting assembly is avoided, and meanwhile, the transport bag is prevented from being extruded into the gap between the first side plate 51 and the second side plate 52 under the flowing of the fluid materials.

The base 4 is at least configured to form a bottom surface of the containing space. The base 4 includes: the base body 46 and a plurality of baffles 84 which are disposed around a peripheral side of the base body 46 and protrude above the base body 46, the plurality of baffles 5 being disposed in one-to-one correspondence with the plurality of side plates 84. The baffle 84 is provided with an insertion mounting groove 4614, the side plate 5 is provided with an insertion mounting part 5853, the insertion mounting part 5853 is inserted into the insertion mounting groove 4614 and rotationally disposed around a predetermined axis, and the side plate 5 is driven by the insertion mounting part 5853 to fold towards the base body 46. The side, far away from the containing space, of the insertion mounting groove 4614 is provided with a first rotation stop part 46140 configured to stop the rotation of the side, far away from the containing space, of the insertion mounting part 5853.

In this way, in the transport case of the present disclosure, the side, far away from the containing space, of the insertion mounting groove 4614 is provided with the first rotation stop part 46140 to stop the rotation of the side, far away from the containing space, of the insertion mounting part 5853, so that the purpose that the insertion mounting part 5853 only rotates towards the side close to the containing space is achieved, the reliability and safety of the transport case of the present disclosure is improved, and the problem in the related art of leakage and damage of the materials caused by the fact that the side plate of the transport case easily rotates outwards to open the transport case due to the extrusion of internal materials is solved.

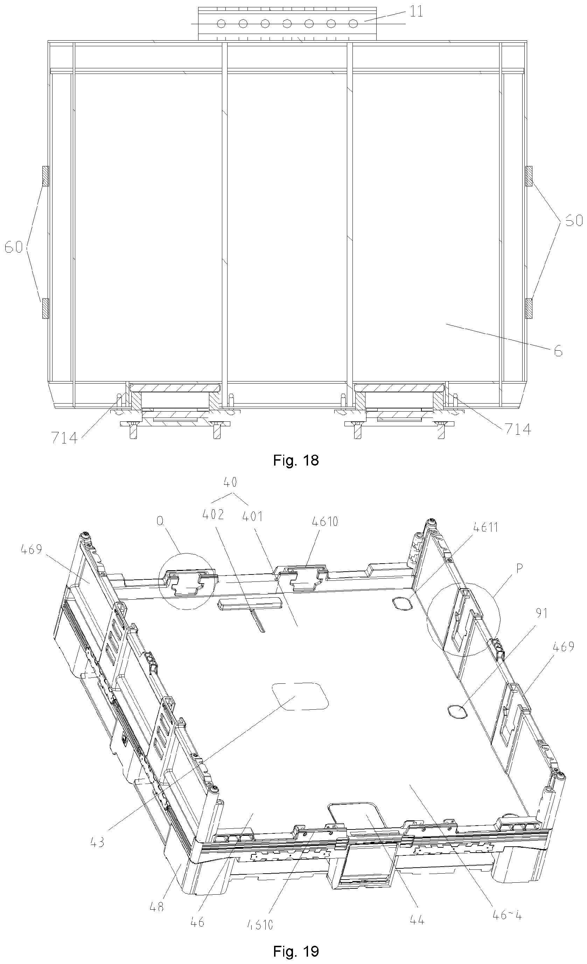

As shown in Fig. 19 to Fig. 36, the side, close to the containing space, of the insertion mounting groove 4614 is provided with a first opening part 46141, and the side, close to the side plate 5, of the insertion mounting groove 4614 is provided with a second opening part 46142, and the first opening part 46141 communicates with the second opening part 46142 to jointly avoid the rotation of the insertion mounting part 5853, so that the insertion mounting part 5853 rotates towards the side close to the containing space.

The insertion mounting part 5853 includes an insertion body 58531 and a rotating part 58532 disposed at the side, far away from the side plate 5, of the insertion body 58531, the rotating part 58532 being at least part of a cylinder, and the bottom of the insertion mounting groove 4614 being provided with an arc-shaped groove 46143 in running fit with the rotating part 58532. The insertion body 58531 is further provided with an insertion limiting part 58533, the insertion limiting part 58533 is located above the rotating part 58532 and located at the side, close to the containing space, of the rotating part 58532, and the side, close to the containing space, of the insertion mounting groove 4614 is provided with an insertion limiting groove 46144 for mounting the insertion limiting part 58533. The side, close to the containing space, of the arc-shaped groove 46143 is provided with a second rotation stop part 46145, the rotating part 58532 is provided with a contact fit surface 58534 in contact fit with the second rotation stop part 46145 to stop the rotation of the side, far away from the containing space, of the insertion mounting part 5853.

The length of the arc-shaped groove 46143 is greater than the width of the first opening part 46141. The cross section of the arc-shaped groove 46143 is composed of a quarter arc and two straight lines, one of which is located at the side, close to the containing space, of the arc-shaped groove 46143, and the other is located at the side, far away from the supporting base, of the arc-shaped groove 46143.

In some embodiments, the insertion body 58531 includes a first insertion plate segment 58311 and a second insertion plate segment 58312 which are connected to each other, the first insertion plate segment 58311 and the side plate 5 being disposed at a predetermined angle, the first insertion plate segment 58311 extending in a direction close to the containing space and close to a supporting base surface of the case body 1, the second insertion plate segment 58312 being parallel to the side plate 5 and extending in the direction close to the supporting base surface, and the second insertion plate segment 58312 being connected to the side plate 5 through the first insertion plate segment 58311. The rotating part 58532 is disposed at the side, far away from the first insertion plate segment 58311, of the second insertion plate segment 58312, the insertion limiting part 58533 is disposed on the second insertion plate segment 58312, and the width of the rotating part 58532 and the width of the insertion limiting part 58533 are greater than the width of the second insertion plate segment 58312.

The width of the first opening part 46141 is equal to the width of the second insertion plate segment 58312.

In some embodiments, the insertion body 58531 further includes a third insertion plate segment parallel to the second insertion plate segment 58312, the first insertion plate segment 58311 being connected to the side plate 5 through the third insertion plate segment.

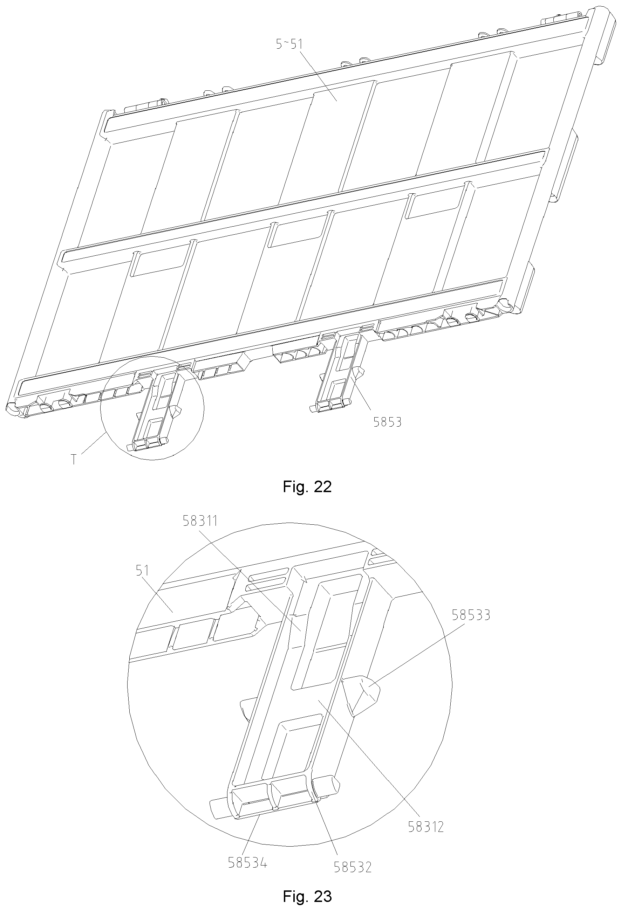

As shown in Fig. 23 to Fig. 26, the insertion body 58531 of the first side plate 51 includes the third insertion plate segment, the first insertion plate segment 58311 and the second insertion plate segment 58312 which are sequentially connected.

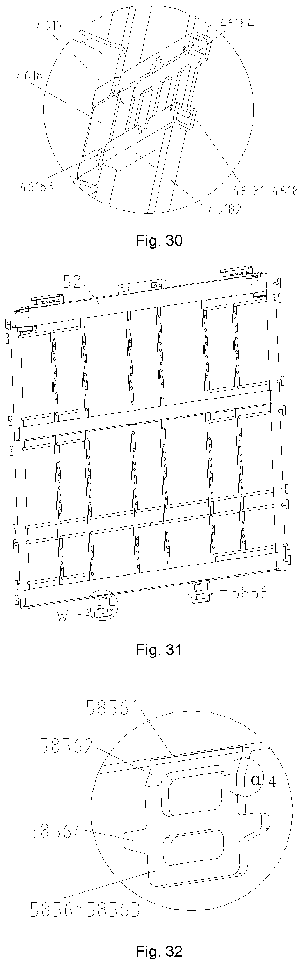

As shown in Fig. 30 to Fig. 35, the insertion body 58531 of the second side plate 52 includes the first insertion plate segment 58311 and the second insertion plate segment 58312 which are sequentially connected.

The baffle includes a baffle framework 4615 and a baffle cladding layer 4616 coating the baffle framework 4615, the baffle framework 4615 including a baffle framework body 4617 and a mounting groove framework 4618 disposed on the baffle framework body 4617, the mounting groove framework 4618 including: a first plate body 46181, the first plate body 46181 being parallel to the baffle framework body 4617 and extending in a direction far away from the supporting base surface; two second plate bodies 46182, disposed at the side, close to the containing space, of the first plate body 46181 at intervals in a direction parallel to the supporting base surface, and respectively connected to two opposite side surfaces of the first plate body 46181, each second plate body 46182 being perpendicular to the baffle framework body 4617 and extending in the direction far away from the supporting base surface; and two third plate bodies 46183, disposed at the sides, close to the containing space, of the two second plate bodies 46182 at intervals in the direction parallel to the supporting base surface, and respectively connected to side surfaces, far away from the first plate body 46181, of the two second plate bodies 46182, each third plate body 46183 being parallel to the first plate body 46181. The insertion mounting groove 4614 is jointly enclosed by the first plate body 46181, the two second plate bodies 46182 and the two third plate bodies 46183.

The baffle framework body 4617 is provided with a plurality of overflow holes, and the plurality of overflow holes are disposed in a matrix. In the production process, the baffle framework 4615 is coated with the liquid raw materials through the plurality of overflow holes to form the baffle cladding layer 4616.

The mounting groove framework 4618 includes two fastening connection assemblies, the two fastening connection assemblies being disposed corresponding to the two third plate bodies 46183, each of the fastening connection assemblies including at least one fastening connection piece 46184, one end of the fastening connection piece 46184 being connected to the corresponding third plate body 46183, and the other end of the fastening connection piece 46184 being connected to the first plate body 46181, so as to enhance the overall strength of the mounting groove framework 4618.

The side plate 5 includes a side plate framework 182 and a side plate coating 190 which coats the side plate framework 182, the side plate framework 182 including a side plate framework body 1821 and an insertion framework 5856 located below the side plate framework body 1821, the insertion framework 5856 being an insertion plate, the insertion plate including a first supporting plate segment 58561, a second supporting plate segment 58562 and a third supporting plate segment 58563 which are sequentially connected, the first supporting plate segment 58561 and the third supporting plate segment 58563 being parallel to the side plate framework body 1821 and extending in the direction close to the supporting base surface, the second supporting plate segment 58562 and the side plate framework body being disposed at a predetermined angle, and the second supporting plate segment 58562 extending in the direction close to the containing space and close to the supporting base surface. The third supporting plate segment 58563 is provided with a limiting support protrusion 58564 for supporting the insertion limiting part 58533.

One part of the first supporting plate segment 58561 overlaps with the side plate framework 182, and the other part is located below the side plate framework 182.

The base body 46 is a cuboid, and the plurality of baffles include: two first baffles 469 which are disposed at two opposite sides of the base body 46 at intervals in the first direction and protrude above the base body 46, and two second baffles 4610 which are disposed at two opposite sides of the base body 46 at intervals in the second direction and protrude above the base body 46. The plurality of side plates 5 include two first side plates 51 respectively located above the two first baffles 469 and two second side plates 52 respectively located above the two second baffles 4610.

In some embodiments, the height of the first baffle 469 is greater than the height of the second baffle 4610. The height of the first side plate 51 is less than the height of the second side plate 52. The sum of the height of the first baffle 469 and the height of the first side plate 51 is equal to the sum of the height of the second baffle 4610 and the height of the second side plate 52.

In some embodiments, the depth of the insertion mounting groove 4614 on the first baffle 469 in a direction perpendicular to the supporting base surface is greater than the depth of the insertion mounting groove 4614 on the second baffle 4610 in the direction perpendicular to the supporting base surface. The length of the insertion mounting part 5853 on the first side plate 51 in the direction perpendicular to the supporting base surface is greater than the length of the insertion mounting part 5853 on the second side plate 52 in the direction perpendicular to the supporting base surface.

In some embodiments, in the insertion framework 5856 of the first side plate 51, an angle between the second supporting plate segment 58562 and the third supporting plate segment 58563 is a1, and a value of α1 ranges from 160 degrees to 170 degrees. And/or, in the insertion framework 5856 of the second side plate 52, an angle between the second supporting plate segment 58562 and the third supporting plate segment 58563 is a2, and a value of α2 ranges from 150° degrees to 160 degrees.

In some embodiments, α1 is 167 degrees, and α2 is 155 degrees.

In the insertion framework 5856 of the first side plate 51, the length H10 of the insertion framework 5856 in the direction perpendicular to the supporting base surface of the base 4 is 221 mm, the length H11 of the first supporting plate segment 58561 in the direction perpendicular to the supporting base surface of the base 4 is 81 mm, the length H12 of the second supporting plate segment 58562 in the direction perpendicular to the supporting base surface of the base 4 is 103 mm, the width B11 of the part of the insertion framework 5856 except the limiting support protrusion 58564 is 59 mm, the width B12 of the limiting support protrusion 58564 is 89 mm, and the thickness of the insertion framework 5856 is 6 mm.

In the insertion framework 5856 of the second side plate 52, the length H20 of the insertion framework 5856 in the direction perpendicular to the supporting base surface of the base 4 is 115 mm, the length H21 of the first supporting plate segment 58561 in the direction perpendicular to the supporting base surface of the base 4 is 52 mm, the length H22 of the second supporting plate segment 58562 in the direction perpendicular to the supporting base surface of the base 4 is 66 mm, the width B11 of the part of the insertion framework 5856 except the limiting support protrusion 58564 is 59 mm, the width B12 of the limiting support protrusion 58564 is 89 mm, and the thickness of the insertion framework 5856 is 6 mm.

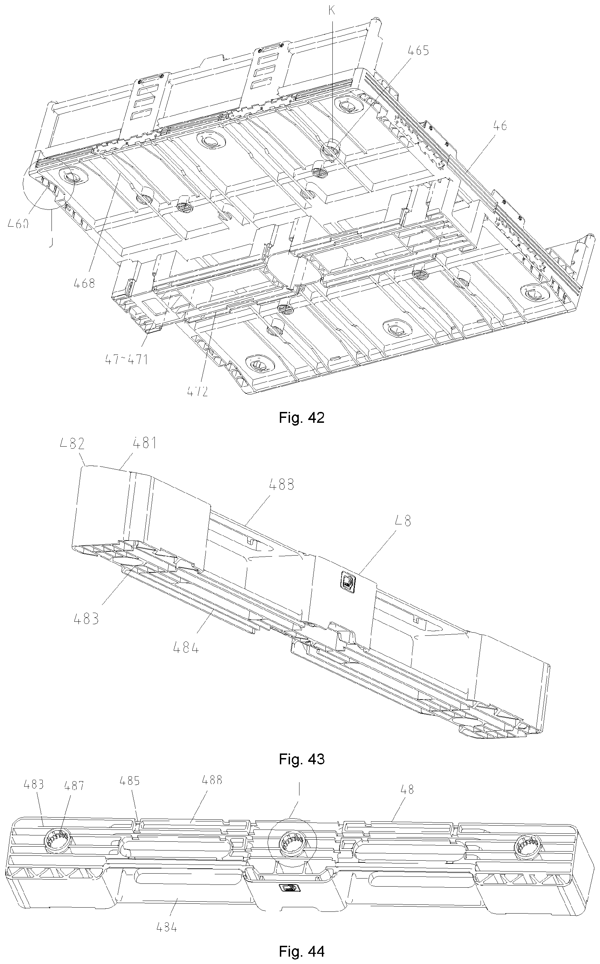

As shown in Fig. 42 to Fig. 58, the base includes a base body 46 and feet 48 disposed below the base body 46, the feet 48 below the base 4 being connected through a fastening assembly, the fastening assembly including: a nut 91, the nut 91 being disposed on one of the base 4 and the foot 48; a bolt 92, a threaded end of the bolt 92 passing through the other one of the base 4 and the foot 48 and then being in threaded connection with the nut 91; and an anti-loose structure 93, a first part of the anti-loose structure 93 being disposed on the nut 91 or the bolt 92, and a second part of the anti-loose structure 93 being disposed on the base 4 or the foot 49 to jointly prevent loosening between the bolt 92 and the nut 91.

In this way, by arranging the anti-loose structure 93 in the present disclosure, the nut 91 or bolt 92 can only rotate in one direction to be tightened with each other, thereby avoiding the phenomenon that the nut 91 or the bolt 92 is loosened due to reverse rotation, improving the stability and reliability of the connection between the feet and the base, and solving the problem in the related art that the bolt and nut assemblies for connecting the base and the feet in the transport case is prone to loosening or even disengagement.

In some embodiments, the nut 91 is disposed on the base 4, and the base body 46 is provided with a nut mounting hole 4611 for mounting the nut 91. The threaded end of the bolt 92 upwards passes through the foot 48 and then is in threaded connection with the nut 91, and the foot 48 is provided with a bolt insertion hole 487 for causing the bolt 92 to be inserted.

In some embodiments, the anti-loose structure 93 includes: a plurality of first protrusions 931, the plurality of first protrusions 931 being disposed on a peripheral surface of the bolt 92 at intervals around a center line of the bolt 92, and each first protrusion 931 protruding in a direction far away from the center line of the bolt 92 in a radial direction of the bolt 92; and a plurality of second protrusions 932, the plurality of second protrusions 932 being disposed on an inner wall surface of the bolt insertion hole 487 at intervals around a center line of the bolt insertion hole 487, and each first protrusion 931 protruding in a direction close to the center line of the bolt insertion hole 487 in a radial direction of the bolt insertion hole 487. The second protrusion 932 includes a stop surface 933 and a guide surface 934 which are disposed at intervals in a circumferential direction of the bolt insertion hole 487 and respectively located at two opposite sides of the second protrusion 932, and a groove part for causing one end, far away from the center line of the bolt 92, of the first protrusion 931 to be inserted is formed between any two adjacent second protrusions 932.

In some embodiments, the first protrusion 931 extends in a length direction of the bolt 92. The cross section of the first protrusion 931 is a first right triangle, and one right-angle side of the first right triangle is located at the side, close to the peripheral surface of the bolt 92, of a hypotenuse. Or, the cross section of the first protrusion 931 is a first right trapezoid, and a lower bottom of the first right trapezoid is located at the side, close to the peripheral surface of the bolt 92, of an upper bottom. The second protrusion 932 extends in a length direction of the bolt insertion hole 487. The cross section of the second protrusion 932 is a second right triangle, and one right-angle side of the second right triangle is located at the side, close to the inner wall surface of the bolt insertion hole 487, of a hypotenuse. Or, the cross section of the second protrusion 932 is a second right trapezoid, and a lower bottom of the second right trapezoid is located at the side, close to the inner wall surface of the bolt insertion hole 498, of an upper bottom.

In some embodiments, the bolt 92 includes a screw cap 922 and a strip insertion rod 923 which are connected to each other, the strip insertion rod 923 including a cylindrical rod segment 924 and a threaded rod segment 925 which are sequentially connected in a direction far away from the screw cap 922, the first protrusion 931 being disposed on the cylindrical rod segment 924, and the threaded rod segment 925 being in threaded connection with the nut 91.

In some embodiments, the bolt 92 is provided with a plurality of first reinforcing ribs 926, the plurality of first reinforcing ribs 926 are disposed on the cylindrical rod segment 924 at intervals around the peripheral surface of the bolt 92, the plurality of first reinforcing ribs 926 are disposed in one-to-one correspondence with the plurality of first protrusions 931, and each first reinforcing rib 926 is located at the side, far away from the screw cap 922, of the corresponding first protrusion 931 to be connected to the screw cap 922 through the corresponding first protrusion 931.

In some embodiments, the bolt 92 is provided with a plurality of second reinforcing ribs 927, the plurality of second reinforcing ribs 927 are disposed on the cylindrical rod segment 924 at intervals around the peripheral surface of the bolt 92, and one second reinforcing rib 927 is disposed between two adjacent first protrusions 931.

In some embodiments, the foot 48 is provided with a plurality of third reinforcing ribs 488, the plurality of third reinforcing ribs 488 are disposed in one-to-one correspondence with the plurality of second protrusions 932, and each third reinforcing rib 488 is located at the side, far away from the base 4, of the corresponding second protrusion 932. The height of the third reinforcing rib 488 in the radial direction of the bolt insertion hole 487 is less than the height of the second protrusion 932 in the radial direction of the bolt insertion hole 487.

In some embodiments, the nut 91 includes an internal threaded sleeve 911 and a limiting stop plate 912 disposed at the side, far away from the foot 48, of the internal threaded sleeve 911. The nut mounting hole 4611 of the limiting stop plate 912 includes a first mounting hole segment 4612 and a second mounting hole segment 4613 which are sequentially connected in a direction close to the foot 48. The limiting stop plate 912 is inserted into the first mounting hole segment 4612 to abut against a hole bottom surface of the first mounting hole segment 4612, and the internal threaded sleeve 911 is inserted into the second mounting hole segment 4613.

In some embodiments, the nut 91 includes an annular reinforcing rib 913 which is disposed at the side, close to the internal threaded sleeve 911, of the limiting stop plate 912 and sleeves the internal threaded sleeve 911. The nut mounting hole 4611 includes a third mounting hole segment 4619 in insertion fit with the annular reinforcing rib 913. The height of the annular reinforcing rib 913 is less than the height of the internal threaded sleeve 911.

The plurality of feet 48 are disposed below the base body 46 at intervals in the first direction parallel to the supporting base surface of the base 4, and each foot 48 is detachably connected to the base body 46. The base body 46 is provided with at least one foot mounting groove 460 for mounting the foot 48, the foot mounting groove 460 includes a groove bottom surface 461 and a groove side surface 462 which are connected to each other, the groove bottom surface 461 being in contact with a top surface of the foot 48, and the groove side surface 462 being located at the side, far away from the middle leg 47, of the groove bottom surface 461 and disposed at a predetermined angle with the supporting base surface to be in contact with the side surface of the side, close to the middle leg 47, of the foot 48, so as to limit and stop the mounting action of the foot 48.

In this way, the transport case of the present disclosure guides the mounting of the foot 48 by arranging the foot mounting groove 460 on the base body 46, which solves the problem in the related art that the relative position between the foot and the base body needs to be adjusted multiple times in the process of mounting the foot of the transport case on the base body, ensures the accuracy of the mounting position of the foot, reduces the time required for the mounting of the foot, and improves the mounting efficiency of the foot.

In some embodiments, the groove bottom surface 461 includes a mounting guide surface 463, the mounting guide surface 463 and the supporting base surface being disposed at an acute angle, and a distance between the mounting guide surface 463 and the supporting base surface gradually increasing in a direction close to the middle leg 47. The foot 48 is provided with a sliding surface 481 parallel to the mounting guide surface 463 to be in contact fit with the mounting guide surface 463, so as to guide 48 the mounting action of the foot 48.

In some embodiments, the groove bottom surface 461 includes a transition connection surface 464, the transition connection surface 464 being parallel to the supporting base surface, and the mounting guide surface 463 being connected to the groove side surface 462 through the transition connection surface 464. The foot 48 is provided with a contact surface 482 parallel to the transition connection surface 482 to be in contact fit with the transition connection surface 464.

In some embodiments, the middle leg 47 includes a plurality of leg bodies 471, the plurality of leg bodies 471 being disposed at intervals in the second direction, an upper side of each leg body 471 being connected to the base body 46, and two adjacent leg bodies 471 being connected through the first connecting plate 472 extending in the second direction. The first connecting plate 472 and the base body 46 are disposed at intervals to form the first avoidance space for causing the fork of the forklift truck to be inserted. And/or, the foot 48 includes the plurality of foot bodies 483, the plurality of foot bodies 483 being disposed at intervals in the second direction, the upper side of each foot body 483 being connected to the base body 46, and two adjacent foot bodies 483 being connected through the second connecting plate 484 extending in the second direction. The second connecting plate 484 and the base body 46 are disposed at intervals to form the second avoidance space for causing the fork of the forklift truck to be inserted. And/or, the middle leg 47 and the foot 48 are connected through the third connecting plate 478 extending in the first direction. The third connecting plate 478 and the base body 46 are disposed at intervals to form the third avoidance space for causing the forklift truck to be inserted. The first direction and the second direction are perpendicular to each other.

In some embodiments, the base body 46 is provided with a limiting protrusion 468, and the limiting protrusion 468 is disposed below the base body 46 and extends in the first direction. The foot 48 is provided with a protrusion limiting groove 485 in insertion fit with the limiting protrusion 468, the protrusion limiting groove 485 is through in the first direction, and the protrusion limiting groove 485 sleeves the limiting protrusion 468 and is slidably disposed relative to the limiting protrusion 468 in the first direction. The first direction and the second direction are perpendicular to each other.

In some embodiments, the number of the foot mounting grooves 460 is two, and the two foot mounting grooves are 460 respectively disposed at two opposite sides of the middle leg 47. The number of the feet 48 is two, and the two feet 48 are disposed in one-to-one correspondence with the two foot mounting grooves 460.

In some embodiments, the transport case includes a plurality of anti-slip pads 49, the plurality of anti-slip pads 49 being disposed on the base body 46 at intervals and at least partially located at the side, close to the supporting base surface of the case body 1, of the base body 46, so as to be in contact with the fork of the forklift truck inserted below the base body 46.

In some embodiments, the anti-slip pad 49 includes a bottom pad 491 and an anti-slip insertion part 492 disposed above the bottom pad 491. The base body 46 is provided with an anti-slip pad insertion hole 465 for causing the anti-slip insertion part 492 to be inserted, and a peripheral surface of the anti-slip insertion part 492 is in insertion fit with an inner wall surface of the anti-slip pad insertion hole 465. The peripheral surface of the anti-slip insertion part 492 is provided with an anti-slip insertion protrusion 493 to be in interference fit with the anti-slip pad insertion hole 465 through the anti-slip insertion protrusion 493.

In some embodiments, the anti-slip insertion part 492 includes a plurality of insertion posts 494 disposed at intervals around a center line of the anti-slip pad 49, and a peripheral surface of the insertion post 494 is provided with: a first anti-slip insertion protrusion 495, the first anti-slip insertion protrusion 495 extending in a circumferential direction of the anti-slip insertion part 492; and a second anti-slip insertion protrusion 496, the second anti-slip insertion protrusion 496 extending along the center line of the anti-slip pad 49.

In some embodiments, the anti-slip insertion part 492 includes at least one insertion strip 497 disposed in the middle of the plurality of insertion posts 494, and the insertion strip 497 extending in a direction parallel to the bottom pad 491. The anti-slip pad insertion hole 465 is internally provided with a plurality of partitions 466 to divide the anti-slip pad insertion hole 465 into a plurality of insertion cavities 467, and each insertion post 494 and the insertion strip 497 are respectively inserted into one of the plurality of insertion cavities 467.

The base 4 is provided with a temperature regulating assembly 40 and a socket component 41, the temperature in the containing space being regulated by the temperature regulating assembly 40. One end of the socket component 41 is connected to a power supply, and the other end of the socket component 41 is electrically connected to the temperature regulating assembly 40 to supply power to the temperature regulating assembly 40 through the socket component 41. In this way, in the transportation process, when the environment temperature is relatively low, the temperature regulating assembly 40 can be powered to increase the temperature in the containing space so as to ensure the transported materials to be at a constant temperature, thereby minimizing the influence of the environment temperature. In addition, the materials, only limited to materials whose properties are not changed after being heated, can be heated, the fluidity of the materials is improved, and discharging is facilitated.

In some embodiments, the base 4 includes a bearing end surface 42 for bearing the materials, the temperature regulating assembly 40 being at least partially laid on the bearing end surface 42. Through the arrangement, the contact area between the temperature regulating assembly 40 and the material transport bag can be increased, thereby improving the heating efficiency and heating uniformity of the materials.

In a specific implementation, the temperature regulating assembly 40 includes: a temperature regulating pad 401, laid on the bearing end surface 42; and a regulating pad plug 402, electrically connected to the temperature regulating pad 401, the regulating pad plug 402 being provided with a power plug 403, and the socket part 41 being connected to the power plug 403. A resistance wire is laid in the temperature regulating pad 401, and after the regulating pad plug 402 is connected to the socket component 41, the resistance wire is heated to adjust the temperature in the containing space.

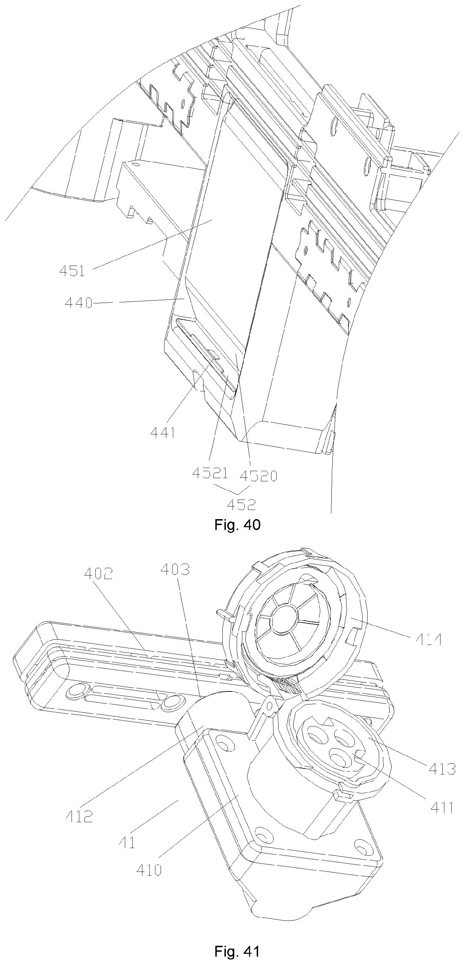

In the present disclosure, as shown in Fig. 41 the socket component 41 includes: a socket body 410, disposed on the base 4; a first socket 411, disposed on the socket body 410, the first socket 411 facing an outer side of the transport case, and the first socket 411 being connected to the power supply; and a second socket 412, disposed on the socket body 410, one end of the second socket 412 being connected to the first socket 411, and the other end of the second socket 412 being connected to the temperature regulating assembly 40. Both end of the socket component 41 are respectively provided with the first socket 411 and the second socket 412, so that the problem of large occupied space caused by the extension of an electrode of the plug when the base 4 is provided with the plug is avoided. Optionally, the center line of the first socket 411 is perpendicular to the center line of the second socket 412, so that the relative position relationship between the first socket 411 and the second socket 412 is more consistent with the structure of the base 4, and the overall structure of the base 4 is more compact.

In some embodiments, the socket component 41 further includes: a mounting channel 413, disposed on the socket body 410, the first socket 411 being disposed in the mounting channel 413; and a protective cover 414, movably disposed on the socket body 410 to open or close the mounting channel 413 to shield or avoid the first socket 411. The socket body 410 is provided with the two sockets in the present disclosure, and then the first socket 411 is mounted in the mounting channel 413, so that the volume of the mounting channel 413 can be reduced. The first socket 411 is protected by the protective cover 414 to prevent the protective cover 414 from protruding the side surface of the base 4, thereby reducing the placement space occupied by the base 4.

In order to facilitate discharging, the base 4 is provided with a first discharge channel 43 and a second discharge channel 44, the first discharge channel 43 is located in the middle of the base 4, and a first discharge port 430 of the first discharge channel 43 faces the bottom of the base 4. The temperature regulating assembly 40 is at least partially disposed around a feed port of the first discharge channel 43. A second discharge port 440 of the second discharge channel 44 faces the side of the base 4, and the second discharge channel 42 is obliquely disposed relative to the bearing end surface 42 of the base 4. In the use process, discharging is performed in the first discharge channel 43 and the second discharge channel 44 separately or simultaneously. When discharging is performed in the first discharge channel 43, the transport bag is extruded by an extrusion roller, thereby reducing the residual materials in the transport bag. In addition, the second discharge channel 44 is obliquely disposed relative to the bearing end surface 42 of the base 4, so that the materials flow out along the second discharge channel 44 under the action of its own gravity, and the first discharge channel 43 and the second discharge channel 44 fit with each other, thereby improving the discharge efficiency, and meanwhile, transport bags in different discharge manners can be applicable, so that the universality of the base 4 is improved.

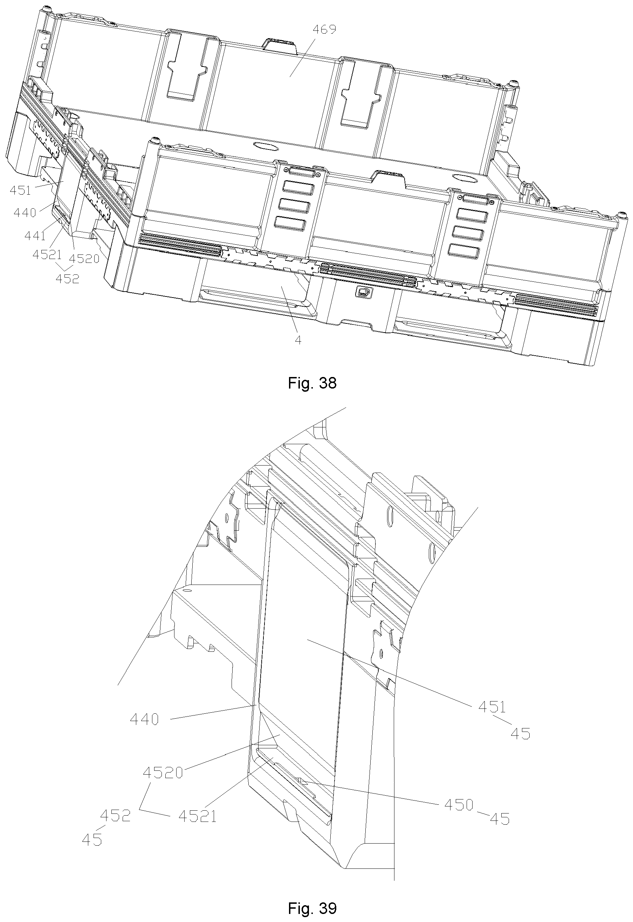

In order to avoid debris such as dust from entering the second discharge channel 44, as shown in Fig. 38 and Fig. 39, the transport case further includes: a protection plate 45, movably disposed on the base 4 and located at the second discharge port 440. An inner wall surface of the second discharge channel 44 is provided with a first clamping part 441, and the protection plate 45 is provided with a second clamping part 450 clamped to the first clamping part 441. The second discharge port 440 is opened or closed through the protection plate 45.

The first clamping part 441 protrudes relative to the inner wall surface of the second discharge channel 44, the second clamping part 450 includes a clamping hole, the first clamping part 441 being at least partially clamped into the clamping hole. In this way, when the protection plate 45 is in a shielding position, the protection plate 45 is prevented from moving.

In some embodiments, the protection plate 45 includes: a protection body 451, disposed at the second discharge port 440; an operation body 452, connected to the protection body 451, the operation body 452 including a first operation body 4520 and a second operation body 4521 which are connected to each other, a predetermined angle being formed between the first operation body 4520 and the second operation body 4521, the first operation body 4520 being connected to the protection body 451, and the second clamping part 450 being disposed on the second operation body 4521. When the second discharge port 440 needs to be opened, the predetermined angle is formed between the first operation body 4520 and the second operation body 4521, so that the first operation body 4520 can move relative to the second operation body 4521. After the operator lifts the first operation body 4520 upwards a certain distance, the first clamping part 441 is disengaged from the clamping hole.

In order to prevent the protection plate 45 from being easily lost in the open state, the protection plate 45 includes a first connecting end and a second connecting end which are oppositely disposed, the first connecting end of the protection plate 45 being hinged to the base 4, and the second clamping part 450 being disposed 4 on the second connecting end of the protection plate 45.

As shown in Fig. 57 and Fig. 58, the transport case includes: an observation window 62, the observation window 62 being made of a transparent material, the observation window 62 including a perspective plate 6261, an insertion segment 6262 and a stop segment 6263 which are sequentially connected, the dimension of a peripheral surface of the perspective plate 6261 and the dimension of a peripheral surface of the stop segment 6263 being greater than the dimension of a peripheral surface of the insertion segment 6262. The case body 1 is provided with a mounting through hole 417 configured to communicate the containing space and the outside of the case body 1 to mount the observation window 62, the insertion segment 6262 is in insertion fit with the mounting through hole 417, and the perspective plate 6261 and the stop segment 6263 are respectively located at two opposite ends of the mounting through hole 417. In this way, the operator can observe the real-time status of the materials in the case body 1 through the observation window 62, so as to timely find whether the materials are displaced or damaged, thereby improving the safety of the transport case in the transportation process, and solving the problem in the related art that the operator cannot observe the real-time status of the goods in the case body of the transport case in real time.

In some embodiments, the perspective plate 6261 is located at the side, far away from the containing space, of the mounting through hole 417, and the stop segment 6263 is located at the side, close to the containing space, of the mounting through hole 417. The mounting through hole 417 is a slotted hole, the insertion segment 6262 is a long annular sleeve in insertion fit with the slotted hole, the perspective plate 6261 is a long circular plate body, and the stop segment 6263 is a long annular plate body.

The observation window 62 is formed by rotating a predetermined cross section by 180 degrees around its center line. In the predetermined cross section, a difference H01 between the distance between the outer side of the perspective plate 6261 and the center line of the observation window 62 and the distance between the outer side of the insertion section 6262 and the center line of the observation window 62 is 0.5 mm to 3 mm, and a difference H02 between a distance between the outer side of the stop segment 6263 and the center line of the observation window 62 and a distance between the outer side of the insertion segment 6262 and the center line of the observation window 62 is 5 mm to 40 mm.

In one embodiment of the observation window of the present disclosure, the transport case includes an observation window group including a plurality of observation windows 62 disposed at intervals in the vertical direction.

In one embodiment of the observation window of the present disclosure, the transport case includes a plurality of observation window groups. The plurality of observation window groups are disposed at intervals around the peripheral side of the case body 1, and each observation window group includes a plurality of observation windows 62 disposed at intervals in the vertical direction.

In some embodiments, the transport case includes at least one observation window group, the observation window group including a plurality of observation windows 62, and the plurality of observation windows 62 being disposed on the case body 1 at intervals in the vertical direction, so as to ensure the observation view of the operator while ensuring the structural strength of the case body 1.

In some embodiments, the case body 1 includes: a base 4, at least configured to form a bottom surface of the containing space; a door body 2, located above the base 4 and spaced apart from the base 4 to form a top surface of the containing space; and a plurality of side plates 5, disposed between the base 4 and the door body 2 to form a plurality of side surfaces of the containing space. The base 4 is provided with the observation window 62. And/or, the side plate 5 is provided with the observation window 62.

In some embodiments, the base 4 includes: a base body 46, the base body 46 being a cuboid; two first baffles 469 which are disposed at two opposite sides of the base body 46 at intervals in the first direction and protrude above the base body 46; and two second baffles 4610 which are disposed at two opposite sides of the base body 46 at intervals in the second direction and protrude above the base body 46. The plurality of side plates 5 include two first side plates 51 respectively located above the two first baffles 469 and two second side plates 52 respectively located above the two second baffles 4610.

In some embodiments, the height of the first baffle 469 is greater than the height of the second baffle 4610. The height of the first side plate 51 is less than the height of the second side plate 52. The sum of the height of the first baffle 469 and the height of the first side plate 51 is equal to the sum of the height of the second baffle 4610 and the height of the second side plate 52.

In some embodiments, the first baffle 469 is provided with the observation window 62. And/or, the second baffle 4610 is provided with the observation window 62. And/or, the first side plate 51 is provided with the observation window 62. And/or, the second side plate 52 is provided with the observation window 62.

The transport case in the present disclosure further includes a buffer strip 85, the buffer strip 85 being disposed on the case body 1. The buffer strip 85 includes a buffer strip body 8581 and elastic clamping pieces 8582 disposed at the side, close to the containing space, of the buffer strip body 8581. The case body 1 is provided with a buffer strip mounting groove 418 for mounting the buffer strip body 8581 and clamping holes 419 located on a groove bottom surface of the buffer strip mounting groove 418. The buffer strip body 8581 is mounted in the buffer strip mounting groove 418, one end, far away from the buffer strip body 8581, of the elastic clamping piece 8582 passes through the corresponding clamping hole 419 and then is clamped to the side, far away from the buffer strip mounting groove 418, of the corresponding clamping hole 419.

The elastic clamping piece 8582 includes a plurality of clamping structures 85820 disposed around a predetermined center line at intervals, each clamping structure 85820 including a strip rod body 85821 and a clamping protrusion 85822 disposed at one end, far away from the buffer strip body 8581, of the strip rod body 85821. When the buffer strip body 8581 is mounted in the buffer strip mounting groove 418, the clamping protrusion 85822 passes through the clamping hole 419 and then is clamped to the side, far away from the buffer strip mounting groove 418, of the clamping hole 419.

The transport case includes a plurality of buffer strips 85, the plurality of buffer strips 85 are disposed at intervals around the peripheral side of the case body 1, and the case body 1 is provided with a plurality of buffer strip mounting grooves 418 for causing the plurality of buffer strips 85 to be mounted. And/or, the buffer strip 85 includes a plurality of elastic clamping pieces 8582, the plurality of elastic clamping pieces 8582 being disposed at intervals in an extension direction of the buffer strip body 8581, and the groove bottom surface of the corresponding buffer strip mounting groove 418 being provided with a plurality of clamping holes 419 for causing the plurality of elastic clamping pieces 8582 to be inserted in a one-to-one correspondence manner.

In some embodiments, the plurality of buffer strip mounting grooves 418 are disposed at intervals around the peripheral side of the base 4, so that the plurality of buffer strips 85 are mounted on the base 4.

The side, close to the containing space, of the buffer strip body 8581 is provided with a clamping piece arrangement groove 85811, one end of each elastic clamping piece 8582 is disposed in a groove bottom surface of the clamping piece arrangement groove 85811, and the other end extends in the direction far away from the groove bottom surface of the clamping piece arrangement groove 85811.

In some embodiments, the extension direction of the buffer strip body 8581 is parallel to the supporting base surface of the case body 1. The buffer strip 85 includes three elastic clamping pieces 8582, the three elastic clamping pieces 8582 being disposed at intervals in the extension direction of the buffer strip body 8581. The groove bottom surface of the corresponding buffer strip mounting groove 418 is provided with three clamping holes 419 for causing the three elastic clamping pieces 8582 to be inserted in a one-to-one correspondence manner.

From the above description, it may be seen that the above embodiments of the present disclosure achieve the following technical effects.

The transport case provided in the present disclosure includes the case body 1, the case body 1 being internally provided with the containing space 100 for containing the materials. The case body 1 includes the supporting framework 18 and the protective coating 19, the supporting framework 18 being coated with the protective coating 19. The supporting framework 18 is made of the metal material, and the protective coating 19 is made of the plastic material. The overall transport case is supported by the supporting framework 18 made of the metal material, and meanwhile, the supporting framework 18 is coated with a layer of the protective coating 19, so that the bearing capacity of the supporting framework 18 is further enhanced, lightweight of the transport case is achieved while the pressure bearing capacity of the transport case is met, and when transporting the chemically or physically unstable materials, the transport case is not prone to deformation or cracking.

The above is only the preferred embodiments of the present disclosure, and is not intended to limit the present disclosure, and for those of ordinary skill in the art, various modifications and changes may be made to the present disclosure. Any modifications, equivalent substitutions, improvements, etc. within the spirit and scope of the present disclosure shall be included in the scope of protection of the present disclosure.

## Claims

1. A transport case, comprising:
a case body (1) comprising a containing space (100) for containing materials;
the case body (1) comprises a supporting framework (18) and a protective coating (19), the supporting framework (18) being coated with the protective coating (19);
wherein the supporting framework (18) is made of a metal material, and the protective coating (19) is made of a plastic material.

2. The transport case as claimed in claim 1, wherein the protective coating (19) is provided with a first avoidance opening, and the supporting framework (18) is in contact with the materials through the first avoidance opening, so that the materials are grounded.

3. The transport case as claimed in claim 1, wherein the supporting framework (18) is provided with a conductive protrusion (185); and
the protective coating (19) is provided with a second avoidance opening, and the conductive protrusion (185) is disposed in the second avoidance opening in a penetrating manner, so that an end surface of the conductive protrusion (185) is in contact with the materials, and then the materials are grounded.

4. The transport case as claimed in claim 3, wherein a plurality of conductive protrusions (185) are provided, and the plurality of conductive protrusions (185) are disposed on the supporting framework (18) at intervals; and
a plurality of second avoidance openings are provided, and the plurality of second avoidance openings and the plurality of conductive protrusions (185) are disposed in one-to-one correspondingly manner.

5. The transport case as claimed in claim 3, wherein the conductive protrusion (185) comprises a first end surface and a second end surface which are oppositely disposed, the first end surface being connected with the supporting framework (18), and the second end surface of the conductive protrusion (185) and a surface of the protective coating (19) being located in a same plane.

6. The transport case as claimed in claim 3, wherein a bottom surface of the case body (1) is provided with a grounding column (186), and the grounding column (186) is connected with the supporting framework (18), so that the materials are grounded through the grounding column (186).

7. The transport case as claimed in claim 1, wherein the supporting framework (18) comprises:
supporting cross beams (180), a plurality of supporting cross beams (180) being provided, and the plurality of supporting cross beams (180) being disposed side by side; and
supporting longitudinal beams (181), each of the supporting longitudinal beams (181) being sequentially disposed on the plurality of supporting cross beams (180) in a penetrating manner, a plurality of supporting longitudinal beams (181) being provided, and the plurality of supporting longitudinal beams (181) being disposed at intervals in a length direction of one of the supporting cross beams (180).

8. The transport case as claimed in claim 7, wherein each of the supporting cross beams (180) is a tube body, each of the supporting longitudinal beams (181) is a rod body, each of the supporting longitudinal beams (181) is provided with a plurality of circulation holes (1810), and the plurality of circulation holes (1810) are disposed at intervals in a length direction of each of the supporting longitudinal beams (181).

9. The transport case as claimed in claim 1, wherein a thickness of the protective coating (19) ranges from 2 mm to 4 mm.

10. The transport case as claimed in claim 1, further comprising a plurality of side plates (5), the plurality of side plates (5) being sequentially disposed in a circumferential direction of the transport case to enclose the containing space (100); each of the side plates (5) comprises a side plate body; and
the supporting framework (18) comprises a side plate framework (182), the protective coating (19) comprises a side plate coating (190), the side plate framework (182) is coated with the side plate coating (190), and the side plate framework (182) is disposed on the side plate body.

11. The transport case as claimed in claim 1, further comprising a base (4), the base (4) comprising a base body (46); and
the supporting framework (18) comprises a base framework (183), the protective coating (19) comprises a base coating (191), the base framework (183) is coated with the base coating (191), and the base framework (183) is disposed on the base body (46).

12. The transport case as claimed in claim 1, further comprising a door body (2); and
the supporting framework (18) comprises a door body framework (184), the protective coating (19) comprises a door body coating (192), the door body framework (184) is coated with the door body coating (192), and the door body framework (184) is disposed on the door body (2).

13. The transport case as claimed in claim 1, wherein the case body (1) comprises:
a base (4);
a plurality of side plates (5), disposed on the base (4), the plurality of side plates (5) being sequentially disposed in a circumferential direction of the base (4) to enclose the containing space (100), and each of the plurality of side plates (5) being foldably disposed relative to the base (4); and
a door body (2), disposed at a top of the plurality of side plates (5), the door body (2) being slidably disposed relative to the plurality of side plates (5) to open or close the containing space (100); when the door body (2) slides to a predetermined open position, the door body (2) is flipped until the door body (2) is disposed at a side of the side plate (5).

14. The transport case as claimed in claim 13, wherein the door body (2) is provided with a drainage part (81), and the drainage part (81) comprises a water inlet (810) and a drainage outlet (811) which communicate with each other; and
the water inlet (810) is disposed on a top surface of the door body (2), and the drainage outlet (811) is disposed on a side surface of the door body (2).

15. The transport case as claimed in claim 13, wherein the top surface of the door body (2) is provided with a first positioning part (82), a bottom surface of the base (4) is provided with a second positioning part (83), and the first positioning part (82) of one transport case of two stacked transport cases are inserted into the second positioning part (83) of an other transport case of the two stacked transport cases to position two adjacent transport cases.

16. The transport case as claimed in claim 15, wherein the first positioning part (82) protrudes relative to the top surface of the door body (2), a plurality of first positioning parts (82) are provided, and the plurality of first positioning parts (82) are disposed at intervals in a circumferential direction of the door body (2); and
the second positioning part (83) comprises an insertion hole (830), at least partially of the first positioning part (82) being inserted into the insertion hole (830).

17. The transport case as claimed in claim 16, wherein the plurality of side plates (5) comprise a first side plate (51) and a second side plate (52) adjacent to each other; the transport case further comprises:
a hinged assembly (3), disposed on the first side plate (51), the hinged assembly (3) comprising a first fan blade (31) and a second fan blade (32) which are hinged to each other, the first fan blade (31) being fixedly connected with the first side plate (51), and the second fan blade (32) being provided with a first fitting part (320); the door body (2) is provided with a second fitting part (20), when the door body (2) is opened to the predetermined open position, the second fitting part (20) is clamped to the first fitting part (320), and the door body (2) is flipped along with the second fan blade (32), so that the door body (2) moves to a side of the first side plate (51).

18. The transport case as claimed in claim 17, wherein the second side plate (52) is provided with a limiting slide (11), an opening of the limiting slide (11) faces an inner side of the case body (1), and the door body (2) is at least partially inserted into the limiting slide (11), and moves along an extension direction of the limiting slide (11).

19. The transport case as claimed in claim 18, wherein two first side plates (51) are provided, the two first side plates (51) are oppositely disposed at intervals in a first direction, two second side plates (52) are provided, the two second side plates (52) are oppositely disposed at intervals in a second direction, the two first side plates (51) are respectively provided with the hinged assembly (3), and the two second side plates (52) are respectively provided with the limiting slide (11);
the door body (2) comprises a first door body (27) and a second door body (28); the first door body (27) and the second door body (28) are opened to sides of the two first side plates (51) respectively;
wherein the two second side plates (52) are respectively provided with a middle stopper (16), the middle stopper (16) is disposed in middle of a top surface of each of the two second side plates (52), the middle stopper (16) extends in a sliding direction of the door body (2), both ends of the middle stopper (16) are respectively provided with a limiting notch (160), and the first door body (27) and the second door body (28) are respectively in contact with two limiting notches (160), so that the first door body (27) and the second door body (28) are in a closed position.

20. The transport case as claimed in claim 17, wherein the second side plate (52) is provided with an auxiliary opening (507), and the transport case further comprises:
an auxiliary door (6), disposed on the second side plate (52) and located at the auxiliary opening (507), the auxiliary door (6) being provided with an open position and a closed position, so that the auxiliary opening (507) is opened or closed.

21. The transport case as claimed in claim 16, wherein the plurality of side plates (5) comprise a first side plate (51) and a second side plate (52) adjacent to each other; the first side plate (51) comprises a first fitting end surface (510) opposite to the second side plate (52), and the second side plate (52) comprises a second fitting end surface (520) opposite to the first side plate (51);
wherein a maximum vertical distance between the first fitting end surface (510) and the second fitting end surface (520) is less than or equal to 2 mm.

22. The transport case as claimed in claim 21, further comprising:
a connecting assembly, the connecting assembly comprising a first connecting part (53) and a second connecting part (54), the first connecting part (53) being disposed on the first fitting end surface (510), the second connecting part (54) being disposed on the second fitting end surface (520), and the first connecting part (53) being clamped to the second connecting part (54), so that the plurality of side plates are in an open position.

23. The transport case as claimed in claim 1, comprising:
a door body (2), slidably disposed on the case body (1) to open or close the case body (1); and
a hinged assembly (3), disposed on the case body (1), the hinged assembly (3) comprising a first fan blade (31) and a second fan blade (32) which are hinged to each other, the first fan blade (31) being fixedly connected with the case body (1), the second fan blade (32) being provided with a first fitting part (320), the door body (2) being provided with a second fitting part (20), when the door body (2) is opened to a predetermined open position, the second fitting part (20) being clamped to the first fitting part (320), and the door body (2) being flipped along with the second fan blade (32), so that the door body (2) is disposed at a side of the case body (1).

24. The transport case as claimed in claim 23, wherein the first fitting part (320) is in interference fit with the second fitting part (20), the first fitting part (320) is a fitting opening, and the second fitting part (20) is a fitting projection.

25. The transport case as claimed in claim 23, wherein the first fitting part (320) is a fitting opening, and the second fitting part (20) comprises:
a fitting column (201), disposed on the door body (2); and
a limiting stopper (202), disposed on the fitting column (201), the fitting column (201) being at least partially clamped into the fitting opening and causing the limiting stopper (202) to drive the second fan blade (32) to flip; the door body (2) is disposed at the side of the case body (1) through a blocking effect of the fitting opening on the fitting column (201).

26. The transport case as claimed in claim 23, wherein the second fan blade (32) is provided with an initial position and a flipping position, and the second fan blade (32) is at least partially disposed above the first fan blade (31) and is provided with a passing gap with the first fan blade (31), so that the second fan blade (32) is in the initial position; and
the second fitting part (20) is at least partially clamped to the first fitting part (320) through the passing gap.

27. The transport case as claimed in claim 23, wherein the second fan blade (32) comprises a hinged end and a fitting end which are oppositely disposed, the hinged end of the second fan blade (32) being hinged to the first fan blade (31), and the fitting end of the second fan blade (32) extending towards an inner side of the case body (1);
the first fitting part (320) is disposed at the fitting end of the second fan blade (32); and
the first fitting part (320) is a fitting opening, and the fitting opening faces the inner side of the case body (1).

28. The transport case as claimed in claim 23, wherein the hinged assembly (3) further comprises:
a bearing component (33), disposed on the second fan blade (32), the bearing component (33) being provided with a bearing end surface, and the bearing end surface being a curved surface; the bearing end surface is at least partially in contact with the door body (2) to support the door body (2).

29. The transport case as claimed in claim 28, wherein the second fan blade (32) comprises a first flipping surface and a second flipping surface which are oppositely disposed, the first flipping surface being opposite to the first fan blade (31), and the bearing component (33) being disposed on the second flipping surface.

30. The transport case as claimed in claim 28, wherein the hinged assembly (3) further comprises: support frames (34), disposed on the second fan blade (32), the support frames (34) protruding relative to a surface of the second fan blade (32), two support frames (34) being provided, the two support frames (34) being oppositely disposed at intervals, the bearing component (33) being disposed between the two support frames (34), and the bearing component (33) being respectively connected with the two support frames (34).

31. The transport case as claimed in claim 28, wherein,
the door body (2) is provided with a limiting groove (26) fitting with the bearing component (33), the limiting groove (26) extends in a sliding direction of the door body (2), the bearing component (33) is at least partially disposed in the limiting groove (26), and the bearing end surface is at least partially in contact with a groove bottom surface of the limiting groove (26).

32. The transport case as claimed in claim 1, comprising:
a door body (2), slidably disposed on the case body (1) to open or close the case body (1);
wherein a first top surface (10) of the case body (1) is provided with a limiting slide (11), an opening of the limiting slide (11) faces an inner side of the case body (1), and the door body (2) is at least partially inserted into the limiting slide (11), and moves in an extension direction of the limiting slide (11).

33. The transport case as claimed in claim 32, further comprising:
a limiting component (13), disposed on a second top surface (12) of the case body (1), the limiting component (13) protruding relative to the second top surface (12); a first angle is formed between the first top surface (10) and the second top surface (12); and
the door body (2) is provided with an engaging part (21), and the engaging part (21) is at least partially clamped to the limiting component (13), so that the door body (2) is in a closed position.

34. The transport case as claimed in claim 33, wherein the limiting component (13) comprises:
a supporting column (130), disposed on the second top surface (12); and
a limiting chuck (131), disposed on the supporting column (130), a projection area of an orthographic projection of the limiting chuck (131) on a horizontal plane being greater than a projection area of an orthographic projection of the supporting column (130) on the horizontal plane;
the engaging part (21) comprises an engaging opening (210), the supporting column (130) being at least partially clamped into the engaging opening (210).

35. The transport case as claimed in claim 34, wherein the door body (2) is further provided with an engaging support strip (22), both sides of the engaging support strip (22) are respectively spaced apart from the door body (2) and the second top surface (12) of the case body (1), and the engaging opening (210) is disposed on the engaging support strip (22).

36. The transport case as claimed in claim 32, wherein the case body (1) is provided with a stop component (14), the stop component (14) comprises a first body (141), a second body (142) and a third body (143) which are sequentially connected, the first body (141) being disposed on the first top surface (10) of the case body (1), and being opposite to the third body (143) to enclose the limiting slide (11) between the first body (141), the second body (142) and the third body (143); and
the first body (141) and the third body (143) are respectively provided with a baffle (15), the baffle (15) is opposite to the second body (142), and a passing gap for causing the door body (2) to pass is formed between two baffles (15).

37. The transport case as claimed in claim 36, further comprising:
a sliding plate (24), disposed on the door body (2), the sliding plate (24) being connected with the door body (2) through a connecting piece (25), and an angle being formed between a plate surface of the sliding plate (24) and a surface of the connecting piece (25);
the sliding plate (24) fits with the limiting slide (11), so that the door body (2) slides in the extension direction of the limiting slide (11).

38. The transport case as claimed in claim 37, wherein an end of the sliding plate (24) is provided with a guide end surface (240), the guide end surface (240) is a curved surface, the third body (143) is provided with an avoidance notch (1430), and the guide end surface (240) is at least partially in contact with an end surface, enclosing the avoidance notch (1430), of the third body (143), so that the sliding plate (24) moves into the limiting slide (11).

39. The transport case as claimed in claim 37, further comprising:
a middle stopper (16), disposed on the first top surface (10) of the case body (1) and disposed in a middle of the first top surface (10), the middle stopper (16) being cylindrical, and a body of the middle stopper (16) being provided with a limiting notch (160);
the connecting piece (25) is provided with a connecting recess (250), the connecting recess (250) is at least partially engaged with the limiting notch (160), and the door body (2) is in the closed position through a blocking effect of the limiting notch (160) on the connecting recess (250).

40. The transport case as claimed in claim 1, comprising:
a first door body (27) and a second door body (28), the first door body (27) and the second door body (28) being disposed on the case body (1), and the first door body (27) and the second door body (28) being relatively slidably disposed to open or close the case body (1); and
a locking assembly (29), the locking assembly (29) comprising a first locking part (291) and a second locking part (292), the first locking part (291) and the second locking part (292) being hooked to each other, so that the first locking part (291) and the second locking part (292) are blocked from each other; the first locking part (291) or the second locking part (292) is rotationally disposed around a predetermined axis;
wherein the first locking part (291) is disposed on the first door body (27), and the second locking part (292) is disposed on the second door body (28); or, the first locking part (291) is disposed on the second door body (28), and the second locking part (292) is doisposed on the first door body (27).

41. The transport case as claimed in claim 40, wherein the first locking part (291) is provided with a blocking part (2910), a preset angle is formed between an extension direction of the blocking part (2910) and an extension direction of the first locking part (291), and the second locking part (292) is blocked by the blocking part (2910).

42. The transport case as claimed in claim 41, wherein the first locking part (291) comprises a latch, the second locking part (292) comprises an insertion hole, and the blocking part (2910) is disposed at an end of the latch; and
the latch is at least partially disposed in the insertion hole in a penetrating manner, so that a body, enclosing the insertion hole, of the second door body (28) is blocked by the blocking part (2910).

43. The transport case as claimed in claim 42, wherein the blocking part (2910) comprises an elbow (2911), the elbow (2911) being disposed at the end of the latch, the elbow (2911) and the latch being of an integrated structure, and the body, enclosing the insertion hole, of the second door body (28) being blocked by the elbow (2911).

44. The transport case as claimed in claim 40, wherein the first door body (27) is provided with a mounting hole (270), the first locking part (291) is at least partially disposed in the mounting hole (270) in a penetrating manner, and the locking assembly (29) further comprises:
an operation handrail (293), connected with the first locking part (291), the operation handrail (293) being operated to drive the first locking part (291) to rotate, so that the first locking part (291) and the second locking part (292) are separated.

45. The transport case as claimed in claim 44, wherein the first door body (27) is provided with an avoidance groove (271), the avoidance groove (271) is recessed relative to a surface of the first door body (27), and the operation handrail (293) is disposed in the avoidance groove (271).

46. The transport case as claimed in claim 45, wherein the locking assembly (29) further comprises:
a protective cover (294), movably disposed on the first door body (27), the avoidance groove (271) being shielded or avoided by the protective cover (294).

47. The transport case as claimed in claim 1, wherein the case body (1) comprises:
a base (4), which is at least configured to form a bottom surface of the containing space, and comprises a base body (46) and a plurality of baffles which are disposed around a peripheral side of the base body (46) and protrude above the base body (46);
a door body (2), disposed above the base (4) and spaced apart from the base (4) to form a top surface of the containing space; and
a plurality of side plates (5), disposed between the base (4) and the door body (2) to form a plurality of side surfaces of the containing space, the plurality of side plates (5) and the plurality of baffles being disposed in a one-to-one correspondingly manner;
wherein each of the plurality of baffles is provided with an insertion mounting groove (4614), each of the plurality of side plates (5) is provided with an insertion mounting part (5853) which is rotationally inserted into the insertion mounting groove (4614) around a predetermined axis, and a side, far away from the containing space, of the insertion mounting groove (4614) is provided with a first rotation stop part (46140) configured to stop the rotation of the side, far away from the containing space, of the insertion mounting part (5853).

48. The transport case as claimed in claim 47, wherein a side, close to the containing space, of the insertion mounting groove (4614) is provided with a first opening part (46141), and a side, close to a side plate (5) of the plurality of side plates (5), of the insertion mounting groove (4614) is provided with a second opening part (46142), and the first opening part (46141) communicates with the second opening part (46142) to jointly avoid the rotation of the insertion mounting part (5853), so that the insertion mounting part (5853) rotates towards the side close to the containing space.

49. The transport case as claimed in claim 47, wherein,
the insertion mounting part (5853) comprises an insertion body (58531) and a rotating part (532) disposed at a side, far away from a side plate (5) of the plurality of side plates (5), of the insertion body (58531), the rotating part (532) being at least part of a cylinder, and a bottom of the insertion mounting groove (4614) being provided with an arc-shaped groove (46143) in running fit with the rotating part (532);
the insertion body (58531) is further provided with an insertion limiting part (533), the insertion limiting part (533) is disposed above the rotating part (532) and disposed at a side, close to the containing space, of the rotating part (532), and a side, close to the containing space, of the insertion mounting groove (4614) is provided with an insertion limiting groove (46144) for mounting the insertion limiting part (533); and
a side, close to the containing space, of the arc-shaped groove (46143) is provided with a second rotation stop part (46145), the rotating part (532) is provided with a contact fit surface (534) in contact fit with the second rotation stop part (46145) to stop the rotation of the side, far away from the containing space, of the insertion mounting part (5853).

50. The transport case as claimed in claim 49, wherein,
the insertion body (58531) comprises a first insertion plate segment (5311) and a second insertion plate segment (5312) which are connected with each other, the first insertion plate segment (5311) and a side plate (5) of the plurality of side plates (5) being disposed at a predetermined angle, the first insertion plate segment (5311) extending in a direction close to the containing space and close to a supporting base surface of the case body (1), the second insertion plate segment (5312) being parallel to the side plate (5) and extending in a direction close to the supporting base surface, and the second insertion plate segment (5312) being connected with the side plate (5) through the first insertion plate segment (5311);
wherein the rotating part (532) is disposed at a side, far away from the first insertion plate segment (5311), of the second insertion plate segment (5312), the insertion limiting part (533) is disposed on the second insertion plate segment (5312), and a width of the rotating part (532) and a width of the insertion limiting part (533) are greater than a width of the second insertion plate segment (5312).

51. The transport case as claimed in claim 50, wherein the baffle comprises a baffle framework (4615) and a baffle cladding layer (4616) coating the baffle framework (4615), the baffle framework (4615) comprising a baffle framework body (4617) and a mounting groove framework (4618) disposed on the baffle framework body (4617), the mounting groove framework (4618) comprising:
a first plate body (46181), the first plate body (46181) being parallel to the baffle framework body (4617) and extending in a direction far away from the supporting base surface;
two second plate bodies (46182), disposed at a side, close to the containing space, of the first plate body (46181) at intervals in a direction parallel to the supporting base surface, and respectively connected with two opposite side surfaces of the first plate body (46181), each of the two second plate bodies (46182) being perpendicular to the baffle framework body (4617) and extending in the direction far away from the supporting base surface; and
two third plate bodies (46183), disposed at sides, close to the containing space, of the two second plate bodies (46182) at intervals in the direction parallel to the supporting base surface, and respectively connected with side surfaces, far away from the first plate body (46181), of the two second plate bodies (46182), each of the two third plate bodies (46183) being parallel to the first plate body (46181);
wherein the insertion mounting groove (4614) is jointly enclosed by the first plate body (46181), the two second plate bodies (46182) and the two third plate bodies (46183).

52. The transport case as claimed in claim 51, wherein the mounting groove framework (4618) comprises two fastening connection assemblies, the two fastening connection assemblies being disposed corresponding to the two third plate bodies (46183), each of the two fastening connection assemblies comprising at least one fastening connection piece (46184), one end of a fastening connection piece (46184) being connected with a corresponding third plate body (46183), and an other end of the fastening connection piece (46184) being connected with the first plate body (46181).

53. The transport case as claimed in claim 50, wherein the side plate (5) comprises a side plate framework (182) and a side plate coating (190) which coats the side plate framework (182), the side plate framework (182) comprising a side plate framework body (1821) and an insertion framework (5856) disposed below the side plate framework body (1821), the insertion framework (5856) being an insertion plate, the insertion plate comprising a first supporting plate segment (561), a second supporting plate segment (562) and a third supporting plate segment (563) which are sequentially connected, the first supporting plate segment (561) and the third supporting plate segment (563) being parallel to the side plate framework body (1821) and extending in the direction close to the supporting base surface, the second supporting plate segment (562) and the side plate framework body (1821) being disposed at a predetermined angle, and the second supporting plate segment (562) extending in the direction close to the containing space and close to the supporting base surface, wherein the third supporting plate segment (563) is provided with a limiting support protrusion (564) for supporting the insertion limiting part (533).

54. The transport case as claimed in claim 53, wherein,
the base body (46) is a cuboid, and the plurality of baffles comprise: two first baffles (469) which are disposed at two opposite sides of the base body (46) at intervals in a first direction and protrude above the base body (46), and two second baffles (4610) which are disposed at two opposite sides of the base body (46) at intervals in a second direction and protrude above the base body (46);
the plurality of side plates (5) comprise two first side plates (51) respectively disposed above the two first baffles (469) and two second side plates (52) respectively disposed above the two second baffles (4610);
wherein the first direction and the second direction are perpendicular to each other and parallel to the supporting base surface of the case body (1).

55. The transport case as claimed in claim 54, wherein,
a height of each of the two first baffles (469) is greater than a height of each of the two second baffles (4610);
a height of each the two first side plates (51) is less than a height of each of the two second side plate (52); and
a sum of the height of each of the two first baffles (469) and the height of each of the two first side plates (51) is equal to a sum of the height of each of the two second baffles (4610) and the height of each of the two second side plates (52).

56. The transport case as claimed in claim 55, wherein,
a depth of a insertion mounting groove (4614) on each of the two first baffles (469) in a direction perpendicular to the supporting base surface is greater than a depth of a insertion mounting groove (4614) on each of the two second baffles (4610) in the direction perpendicular to the supporting base surface; and
a length of a insertion mounting part (5853) on each of the two first side plates (51) in the direction perpendicular to the supporting base surface is greater than a length of a insertion mounting part (5853) on each of the two second side plates (52) in the direction perpendicular to the supporting base surface.

57. The transport case as claimed in claim 56, wherein,
in a insertion framework (5856) of each of the two first side plates (51), an angle between the second supporting plate segment (562) and the third supporting plate segment (563) is α1, and a value of α1 ranges from 160 degrees to 170 degrees; or,
in a insertion framework (5856) of each of the two second side plates (52), an angle between the second supporting plate segment (562) and the third supporting plate segment (563) is α2, and a value of α2 ranges from 150 degrees to 160 degrees.

58. The transport case as claimed in claim 22, wherein the second connecting part (54) extends from the second fitting end surface (520) in a direction close to the two first side plates (51), and the first connecting part (53) comprises:
a connecting body (530), disposed on the first fitting end surface (510), the connecting body (530) being provided with an engaging groove (531), and the second connecting part (54) being at least partially clamped into the engaging groove (531) and in interference fit with the engaging groove (531).

59. The transport case as claimed in claim 58, wherein the connecting body (530) is provided with a first notch (5301) and a second notch (5302) which are connected with each other, the first notch (5301) faces an inner side of the transport case, the second notch (5302) faces the first fitting end surface of the second side plate (52); the first notch (5301) and the second notch (5302) communicate with the engaging groove (531); and
the second connecting part (54) passes through the first notch (5301) and the second notch (5302) and then is clamped to the engaging groove (531).

60. The transport case as claimed in claim 59, wherein the first notch (5301) extends in a length direction of the connecting body (530), and the second notch (5302) extends in a width direction of the connecting body (530);
the second connecting part (54) comprises:
a first rod body (541), disposed on the second side plate (52), the first rod body (541) extending from the second fitting end surface (520) in a direction close to the first side plate (51); and
second rod bodies (542), disposed at ends of the first rod body (541), a predetermined angle being formed between an extension direction of the second rod body (542) and the first rod body (541), the second rod body (542) being engaged into the engaging groove (531) through the first notch (5301), and the second rod body (542) being at least partially clamped to the second notch (5302).

61. The transport case as claimed in claim 22, wherein a plurality of first connecting parts (53) are provided, the plurality of first connecting parts (53) are disposed at intervals in a height direction of the first side plate (51) to form a filling gap (55) between two adjacent first connecting parts (53); a plurality of second connecting parts (54) are provided, the plurality of second connecting parts (54) and the plurality of first connecting parts (53) are disposed in one-to-one correspondingly manner, and the transport case further comprises:
a filling block (56), disposed on the second side plate (52) and located between two adjacent second connecting parts (54), the filling block (56) being at least partially located in the filling gap (55) and in interference fit with the two adjacent first connecting parts (53).

62. The transport case as claimed in claim 22, wherein the first connecting part (53) comprises a connecting body (530), the connecting body (530) being provided with an engaging groove (531); and
the second connecting part (54) comprises a first rod body (541) and a second rod body (542), the first rod body (541) being disposed in the second side plate (52) in a penetrating manner, both ends of the first rod body (541) being provided with the second rod body (542), a predetermined angle being formed between the second rod body (542) and the first rod body (541), and the first rod body (541) and the second rod bodies (542) being integrally formed.

63. The transport case as claimed in claim 22, wherein each of the side plates (5) comprises:
a side plate body (50); and
a plurality of side plate columns (501), dispoed on the side plate body (50), the plurality of side plate columns (501) being sequentially connected in a circumferential direction of the side plate body (50);
the connecting assembly is disposed on the side plate column (501).

64. The transport case as claimed in claim 63, wherein the plurality of side plate columns (501) comprise:
a first column (502), the connecting assembly being disposed on the first column (502), and the first column (502) being provided with a socket part (503); and
a second column (504), an extension direction of the second column (504) and an extension direction of the first column (502) being perpendicular to each other, the second column (504) being provided with an extension bracket (505), and the extension bracket (505) being at least partially inserted into the socket part (503);
the extension bracket (505) and the second column (504) are of an integrated structure.

65. The transport case as claimed in claim 64, wherein the socket part (503) comprises a slot, an extension direction of the slot being perpendicular to the extension direction of the first column (502); and
the extension bracket (505) is inserted into the slot.

66. The transport case as claimed in claim 65, wherein the first column (502) is cylindrical, the socket part (503) comprises an insertion opening (5030), the insertion opening (5030) being disposed on the first column (502) and communicating with a cylinder cavity of the first column (502); and
the extension bracket (505) is inserted into the first column (502) through the insertion openings (5030), the extension bracket (505) is provided with a contact end surface attached to an inner wall surface of the first column (502), and an extension direction of the contact end surface adapts to the inner wall surface of the first column (502).

67. The transport case as claimed in claim 66, wherein a plurality of insertion openings (5030) are provided, and the plurality of insertion openings (5030) are disposed at intervals in a length direction of the first column (502);
a plurality of extension brackets (505) are provided, and the plurality of extension brackets (505) and the plurality of insertion openings (5030) are disposed in a one-to-one correspondingly manner;
wherein the plurality of extension brackets (505) comprise a top bracket (5050) disposed at the top of the second column (504), and a predetermined distance is formed between the top bracket (5050) and a top opening of the first column (502) to form a welding area (506) between a cylinder body of the first column (502) and the plurality of extension brackets (505).

68. The transport case as claimed in claim 20, wherein,
a plate body, enclosing the auxiliary opening (507), of the side plate (5) is provided with a first fixing part (57), a circumferential side surface of the auxiliary door (6) is provided with a second fixing part (60), and the first fixing part (57) is clamped to the second fixing part (60), so that the auxiliary door (6) is in a closed position.

69. The transport case as claimed in claim 68, further comprising a pivot assembly (7), the pivot assembly (7) comprising:
a rotating component (70), disposed on the plate body, enclosing the auxiliary opening (507), of the side plate (5), the rotating component (70) being rotationally disposed around a predetermined axis; and
a connecting component (71), disposed on the auxiliary door (6), the connecting component (71) comprising a connecting channel (710), the rotating part (70) being at least partially disposed in the connecting channel (710) in a penetrating manner, and the auxiliary door (6) being rotated through a stopping effect of the rotating component (70) and an inner wall surface of the connecting channel (710).

70. The transport case as claimed in claim 69, wherein each of the plurality of side plates (5) is provided with a first end surface (5011), a second end surface (5012) and a third end surface (5013) which are connected with each other, and the first end surface (5011) is opposite to the third end surface (5013) to enclose the auxiliary opening (507) between the first end surface (5011), the second end surface (5012) and the third end surface (5013); and
the first fixing part (57) is disposed on at least one of the first end surface (5011) and the third end surface (5013), and the rotating component (70) is disposed on the second end surface (5012).

71. The transport case as claimed in claim 69, wherein the connecting channel (710) extends in a horizontal direction, the rotating component (70) is in clearance fit with the connecting channel (710), and the connecting component (71) is driven by the auxiliary door (6) to be movably disposed in a vertical direction.

72. The transport case as claimed in claim 69, wherein the pivot assembly (7) further comprises a fixed seat (72), the fixed seat (72) being disposed on the side plate (5); the rotating component (70) comprises:
a rotating shaft (701), disposed on the fixed seat (72), the rotating shaft (701) being rotationally disposed on its own axis relative to the fixed seat (72); and
a connecting shaft (702), connected with the rotating shaft (701) through an extension plate (703), an end of the connecting shaft (702) being disposed in the connecting channel (710) in a penetrating manner.

73. The transport case as claimed in claim 69, wherein the connecting component (71) further comprises:
a first connecting plate (711), connected with the auxiliary door (6); and
a second connecting plate (712) and a third connecting plate (713) which are disposed on the first connecting plate (711), the second connecting plate (712) and the third connecting plate (713) being oppositely disposed at intervals to form the connecting channel (710) between the second connecting plate (712) and the third connecting plate (713).

74. The transport case as claimed in claim 73, wherein the auxiliary door (6) is provided with an avoidance space (61), the avoidance space (61) extends towards a middle of the auxiliary door (6), and the second connecting plate (712) and the third connecting plate (713) extend into the avoidance space (61).

75. The transport case as claimed in claim 69, wherein the connecting component (71) further comprises:
a limiting plate body (714), disposed on the auxiliary door (6) and disposed at an end of the connecting channel (710), the limiting plate body (714) being at least partially in contact with an end of the rotating component (70) to block the rotating component (70) through the limiting plate body (714).

76. The transport case as claimed in claim 68, wherein the first fixing part (57) comprises:
a first fixed block (570), disposed on each of the plurality of side plates (5), the first fixed block (570) being provided with a first fixing groove (5701), and a notch of the first fixing groove (5701) facing an outer side of the transport case;
the second fixing part (60) is at least partially clamped into the first fixing groove (5701).

77. The transport case as claimed in claim 76, wherein the first fixing groove (5701) comprises a first groove side wall surface and a second groove side wall surface which are oppositely disposed, the first groove side wall surface and the second groove side wall surface being respectively provided with a locking groove (5702), and the second fixing part (60) being at least partially clamped into the locking groove (5702); and
the auxiliary door (6) is movably disposed in a vertical direction to drive the second fixing part (60) to be disengaged from the locking groove (5702).

78. The transport case as claimed in claim 77, wherein the second fixing part (60) comprises:
a second fixed block (601), disposed on the auxiliary door (6), the second fixed block (601) being at least partially clamped to the first fixing groove (5701), two opposite side surfaces of the second fixed block (601) being respectively provided with a protruding block (602), and the protruding block (602) being at least partially clamped to the locking groove (5702).

79. The transport case as claimed in claim 68, further comprising:
a base (4), the plurality of side plates (5) being disposed on the base (4), and the plurality of side plates (5) being sequentially disposed in the circumferential direction of the base (4); and
a door body (2), slidably disposed at the top of the plurality of side plates (1) to open or close the transport case.

80. The transport case as claimed in claim 79, wherein the plurality of side plates (5) comprise a first side plate (51) and a second side plate (52) adjacent to each other, the second side plate (52) being provided with a limiting slide (11), and the door body (2) being at least partially inserted into the limiting slide (11); and
the auxiliary door (6) is disposed on the second side plate (52), a top end surface of the auxiliary door (6) and a top end surface of the second side plate (52) are disposed on a same plane and the limiting slide (11) is at least partially disposed on the top end surface of the auxiliary door (6).

81. The transport case as claimed in claim 1, comprising:
an observation window (62), the observation window (62) being made of a transparent material, the observation window (62) comprising a perspective plate (6261), an insertion segment (6262) and a stop segment (6263) which are sequentially connected, a dimension of a peripheral surface of the perspective plate (6261) and a dimension of a peripheral surface of the stop segment (6263) being greater than a dimension of a peripheral surface of the insertion segment (6262);
wherein the case body (1) is provided with a mounting through hole (417) configured to communicate the containing space and an outside of the case body (1) to mount the observation window (62), the insertion segment (6262) is in insertion fit with the mounting through hole (417), and the perspective plate (6261) and the stop segment (6263) are respectively disposed at two opposite ends of the mounting through hole (417).

82. The transport case as claimed in claim 81, wherein,
the perspective plate (6261) is disposed at a side, far away from the containing space, of the mounting through hole (417), and the stop segment (6263) is disposed at a side, close to the containing space, of the mounting through hole (417); and
the mounting through hole (417) is a slotted hole, the insertion segment (6262) is a long annular sleeve in insertion fit with the slotted hole, the perspective plate (6261) is a long circular plate body, and the stop segment (6263) is a long annular plate body.

83. The transport case as claimed in claim 1, wherein the case body (1) comprises:
a base (4), at least configured to form a bottom surface of the containing space;
a door body (2), disposed above the base (4) and spaced apart from the base (4) to form a top surface of the containing space; and
a plurality of side plates (5), disposed between the base (4) and the door body (2) to form a plurality of side surfaces of the containing space;
wherein the observation window (62) is disposed on at least one of the base (4) and the side plates (5).

84. The transport case as claimed in claim 81, further comprising a buffer strip (85), the buffer strip (85) being disposed on the case body (1), wherein,
the buffer strip (85) comprises a buffer strip body (8581) and an elastic clamping piece (8582) disposed at a side, close to the containing space, of the buffer strip body (8581);
the case body (1) is provided with a buffer strip mounting groove (418) for mounting the buffer strip body (8581) and a clamping hole (419) disposed on a groove bottom surface of the buffer strip mounting groove (418); and
the buffer strip body (8581) is mounted in the buffer strip mounting groove (418), one end, far away from the buffer strip body (8581), of the elastic clamping piece (8582) passes through the clamping hole (419) and then is clamped to a side, far away from the buffer strip mounting groove (418), of the corresponding clamping hole (419).

85. The transport case as claimed in claim 84, wherein,
the elastic clamping piece (8582) comprises a plurality of clamping structures (85820) disposed around a predetermined center line at intervals, each of the plurality of clamping structures (85820) comprising a strip rod body (85821) and a clamping protrusion (85822) disposed at one end, far away from the buffer strip body (8581), of the strip rod body (85821);
wherein when the buffer strip body (8581) is mounted in the buffer strip mounting groove (418), the clamping protrusion (85822) passes through the clamping hole (419) and then is clamped to the side, far away from the buffer strip mounting groove (418), of the clamping hole (419).

86. The transport case as claimed in claim 84, wherein,
the buffer strip (85) comprises a plurality of elastic clamping pieces (8582), the plurality of elastic clamping pieces (8582) being disposed at intervals in an extension direction of the buffer strip body (8581), and a groove bottom surface of a corresponding buffer strip mounting groove (418) being provided with a plurality of clamping holes (419) for causing the plurality of elastic clamping pieces (8582) to be inserted in a one-to-one correspondingly manner.

87. The transport case as claimed in claim 1, wherein the case body (1) comprises:
a base (4);
a plurality of side plates (5) disposed on the base (4), the plurality of side plates (5) being sequentially disposed in a circumferential direction of the base (4) to enclose the containing space for containing the materials between the base (4) and the plurality of side plates (5);
a temperature regulating assembly (40), disposed on the base (4), a temperature in the containing space being regulated through the temperature regulating assembly (40); and
a socket component (41), disposed on the base (4), one end of the socket component (41) being connected with a power supply, and an other end of the socket component (41) being electrically connected with the temperature regulating assembly (40).

88. The transport case as claimed in claim 87, wherein the base (4) comprises a bearing end surface (42) for bearing the materials, the temperature regulating assembly (40) being at least partially laid on the bearing end surface (42).

89. The transport case as claimed in claim 88, wherein the temperature regulating assembly (40) comprises:
a temperature regulating pad (401), laid on the bearing end surface (42); and
a regulating pad plug (402), electrically connected with the temperature regulating pad (401), the regulating pad plug (402) being provided with a power plug (403), and the socket part (41) being connected with the power plug (403).

90. The transport case as claimed in claim 87, wherein the socket component (41) comprises:
a socket body (410), disposed on the base (4);
a first socket (411), disposed on the socket body (410), the first socket (411) facing an outer side of the transport case, and the first socket (411) being connected with the power supply; and
a second socket (412), disposed on the socket body (410), one end of the second socket (412) being connected with the first socket (411), and an other end of the second socket (412) being connected with the temperature regulating assembly (40).

91. The transport case as claimed in claim 90, wherein the socket component (41) further comprises:
a mounting channel (413), disposed on the socket body (410), the first socket (411) being disposed in the mounting channel (413); and
a protective cover (414), movably disposed on the socket body (410) to open or close the mounting channel (413) to shield or avoid the first socket (411).

92. The transport case as claimed in claim 87, wherein the base (4) is provided with a first discharge channel (43) and a second discharge channel (44), the first discharge channel (43) is disposed in a middle of the base (4), and a first discharge port (430) of the first discharge channel (43) faces a bottom of the base (4); the temperature regulating assembly (40) is at least partially disposed around a feed port of the first discharge channel (43); and
a second discharge port (440) of the second discharge channel (44) faces a side of the base (4), and the second discharge channel (44) is obliquely disposed relative to the bearing end surface (42) of the base (4).

93. The transport case as claimed in claim 92, further comprising:
a protection plate (45), movably disposed on the base (4) and disposed at the second discharge port (440);
an inner wall surface of the second discharge channel (44) is provided with a first clamping part (441), and the protection plate (45) is provided with a second clamping part (450) clamped to the first clamping part (441).

94. The transport case as claimed in claim 93, wherein the first clamping part (441) protrudes relative to the inner wall surface of the second discharge channel (44), the second clamping part (450) comprises a clamping hole, the first clamping part (441) being at least partially clamped into the clamping hole.

95. The transport case as claimed in claim 93, wherein the protection plate (45) comprises:
a protection body (451), disposed at the second discharge port (440);
an operation body (452), connected with the protection body (451), the operation body (452) comprising a first operation body (4520) and a second operation body (4521) which are connected with each other, a predetermined angle being formed between the first operation body (4520) and the second operation body (4521), the first operation body (4520) being connected with the protection body (451), and the second clamping part (450) being disposed on the second operation body (4521).

96. The transport case as claimed in claim 93, wherein the protection plate (45) comprises a first connecting end and a second connecting end which are oppositely disposed, the first connecting end of the protection plate (45) being hinged to the base (4), and the second clamping part (450) being disposed on the second connecting end of the protection plate (45).

97. The transport case as claimed in claim 15, wherein the case body (1) comprises:
a base (4), at least configured to form a bottom surface of the containing space;
a door body (2), disposed above the base (4) and spaced apart from the base (4) to form a top surface of the containing space; and
a plurality of side plates (5), disposed between the base (4) and the door body (2) to form a plurality of side surfaces of the containing space;
wherein one of the door body (2) and the base (4) is provided with the first positioning part (82), and an other one of the door body (2) and the base (4) is provided with the second positioning part (83) in insertion fit with the first positioning part (82).

98. The transport case as claimed in claim 97, wherein the case body (1) is a cuboid;
a plurality of first positioning protrusions (821) are disposed above the door body (2), the plurality of first positioning protrusions (821) are disposed at intervals in a first direction, and each of the plurality of first positioning protrusion (821) is of a strip structure extending in a second direction; a plurality of first positioning grooves (831) are disposed below the base (4), and the plurality of first positioning grooves (831) and the plurality of first positioning protrusions (821) are disposed in a one-to-one correspondingly manner; or,
four second positioning protrusions (822) are disposed above the door body (2), and the four second positioning protrusions (822) are respectively disposed at four corners of the door body (2); four second positioning grooves (832) are disposed below the base (4), and the four second positioning grooves (832) and the four second positioning protrusions (822) are disposed in a one-to-one correspondingly manner; or,
a plurality of third positioning protrusions (823) are disposed above the door body (2), and the plurality of third positioning protrusions (823) are disposed in a middle of the door body (2) at intervals; a plurality of third positioning grooves (833) are disposed below the base (4), and the plurality of third positioning grooves (833) and the plurality of third positioning protrusions (823) are disposed in a one-to-one correspondingly manner; or,
two fourth positioning protrusions (824) are disposed above the door body (2), and the two fourth positioning protrusions (824) are disposed at intervals in a first direction and respectively disposed at two opposite sides of the door body (2); two fourth positioning grooves (834) are disposed below the base (4), and the two fourth positioning grooves (834) and the two fourth positioning protrusions (824) are disposed in a one-to-one correspondingly manner;
wherein the first direction and the second direction are perpendicular to each other and parallel to a supporting base surface of the base (4).

99. The transport case as claimed in claim 1, wherein the case body (1) comprises a base (4), the base (4) comprising a base body (46) and feet (48) disposed below the base body (46), the base body (46) and each foot (48) being connected through a fastening assembly, the fastening assembly comprising:
a nut (91), the nut (91) being disposed on one of the base body (46) and the foot (48);
a bolt (92), a threaded end of the bolt (92) passing through an other one of the base body (46) and the foot (48) and then being in threaded connection with the nut (91); and
an anti-loose structure (93), a first part of the anti-loose structure (93) being disposed on the nut (91) or the bolt (92), and a second part of the anti-loose structure (93) being disposed on the base body (46) or the foot (48) to jointly prevent loosening between the bolt (92) and the nut (91).

100. The transport case as claimed in claim 99, wherein,
the nut (91) is disposed on the base body (46), and the base body (46) is provided with a nut mounting hole (4611) for mounting the nut (91); and
the threaded end of the bolt (92) upwards passes through the foot (48) and then is in threaded connection with the nut (91), and the foot (48) is provided with a bolt insertion hole (487) for causing the bolt (92) to be inserted.

101. The transport case as claimed in claim 100, wherein the anti-loose structure (93) comprises:
a plurality of first protrusions (931), the plurality of first protrusions (931) being disposed on a peripheral surface of the bolt (92) at intervals around a center line of the bolt (92), and each of the plurality of first protrusions (931) protruding in a direction far away from the center line of the bolt (92) in a radial direction of the bolt (92); and
a plurality of second protrusions (932), the plurality of second protrusions (932) being disposed on an inner wall surface of the bolt insertion hole (487) at intervals around a center line of the bolt insertion hole (487), and each of the plurality of first protrusions (931) protruding in a direction close to the center line of the bolt insertion hole (487) in a radial direction of the bolt insertion hole (487);
wherein the second protrusion (932) comprises a stop surface (933) and a guide surface (934) which are disposed at intervals in a circumferential direction of the bolt insertion hole (487) and respectively disposed at two opposite sides of the second protrusion (932), and a groove part for causing one end, far away from the center line of the bolt (92), of the first protrusion (931) to be inserted is formed between any two adjacent second protrusions (932).

102. The transport case as claimed in claim 101, wherein,
the first protrusion (931) extends in a length direction of the bolt (92), wherein a cross section of the first protrusion (931) is a first right triangle, and one right-angle side of the first right triangle is disposed at a side, close to the peripheral surface of the bolt (92), of a hypotenuse of the first right triangle; or, a cross section of the first protrusion (931) is a first right trapezoid, and a short waist of the first right trapezoid is disposed at a side, close to a peripheral surface of the bolt (92), of a long waist of the first right trapezoid; and
the second protrusion (932) extends in a length direction of the bolt insertion hole (487), wherein a cross section of the second protrusion (932) is a second right triangle, and one right-angle side of the second right triangle is disposed at a side, close to the inner wall surface of the bolt insertion hole (487), of a hypotenuse of the second right triangle; or, a cross section of the second protrusion (932) is a second right trapezoid, and a lower bottom of the second right trapezoid is disposed at a side, close to the inner wall surface of the bolt insertion hole (487), of an upper bottom of the second right trapezoid.

103. The transport case as claimed in claim 102, wherein the bolt (92) comprises a screw cap (922) and a strip insertion rod (923), the strip insertion rod (923) comprising a cylindrical rod segment (924) and a threaded rod segment (925) which are sequentially connected in a direction far away from the screw cap (922), the first protrusion (931) being disposed on the cylindrical rod segment (924), and the threaded rod segment (925) being in threaded connection with the nut (91).

104. The transport case as claimed in claim 103, wherein the bolt (92) is provided with a plurality of first reinforcing ribs (926), the plurality of first reinforcing ribs (926) are disposed on the cylindrical rod segment (924) at intervals around the peripheral surface of the bolt (92), the plurality of first reinforcing ribs (926) and the plurality of first protrusions (931) are disposed in a one-to-one correspondingly manner, and each of the plurality of first reinforcing ribs (926) is disposed at a side, far away from the screw cap (922), of a corresponding first protrusion (931) to be connected with the screw cap (922) through the corresponding first protrusion (931), wherein a height of the first reinforcing rib (926) in the radial direction of the bolt (92) is less than a height of the first protrusion (931) in the radial direction of the bolt (92).

105. The transport case as claimed in claim 103, wherein the bolt (92) is provided with a plurality of second reinforcing ribs (927), the plurality of second reinforcing ribs (927) are disposed on the cylindrical rod segment (924) at intervals around the peripheral surface of the bolt (92), and one second reinforcing rib (927) is disposed between any two adjacent first protrusions (931), wherein a height of the second reinforcing rib (927) in the radial direction of the bolt (92) is less than the height of the first reinforcing rib (931) in the radial direction of the bolt (92).

106. The transport case as claimed in claim 111, wherein the foot (48) is provided with a plurality of third reinforcing ribs (488), the plurality of third reinforcing ribs (488) are disposed on the inner wall surface of the bolt insertion hole (487) and disposed in one-to-one correspondence with the plurality of second protrusions (932), and each of the plurality of third reinforcing ribs (488) is disposed at a side, far away from the base body (46), of the corresponding second protrusion (932), wherein a height of each of the plurality of third reinforcing ribs (488) in the radial direction of the bolt insertion hole (487) is less than a height of the second protrusion (932) in the radial direction of the bolt insertion hole (487).

107. The transport case as claimed in claim 103, wherein,
the nut (91) comprises an internal threaded sleeve (911) and a limiting stop plate (912) disposed at a side, far away from the foot (48), of the internal threaded sleeve (911);
the nut mounting hole (4611) comprises a first mounting hole segment (4612) and a second mounting hole segment (4613) which are sequentially connected in a direction close to the foot (48);
wherein the limiting stop plate (912) is inserted into the first mounting hole segment (4612) to abut against a hole bottom surface of the first mounting hole segment (4612), and the internal threaded sleeve (911) is inserted into the second mounting hole segment (4613).

108. The transport case as claimed in claim 107, wherein the nut (91) comprises an annular reinforcing rib (913) which is disposed at a side, close to the internal threaded sleeve (911), of the limiting stop plate (912) and sleeves the internal threaded sleeve (911), and the nut mounting hole (4611) comprises a third mounting hole segment (4619) in insertion fit with the annular reinforcing rib (913), wherein a height of the annular reinforcing rib (913) in a direction of the center line of the nut (91) is less than a height of the internal threaded sleeve (911) in the direction of the center line of the nut (91).

109. The transport case as claimed in claim 1, wherein the case body (1) comprises a base (4), the base (4) comprising:
a base body (46);
a middle leg (47), disposed below the base body (46) and disposed in a middle of the base body (46); and
a plurality of feet (48), the plurality of feet (48) being disposed below the base body (46) at intervals in a first direction parallel to a supporting base surface of the base body (4), and each foot (48) being detachably connected with the base body (46);
wherein the base body (46) is provided with at least one foot mounting groove (460) for mounting a foot (48), the foot mounting groove (460) comprises a groove bottom surface (461) and a groove side surface (462) which are connected with each other, the groove bottom surface (461) being in contact with a top surface of the foot (48), and the groove side surface (462) being disposed at a side, close to the middle leg (47), of the groove bottom surface (461) and disposed at a predetermined angle with the supporting base surface to be in contact with a side surface of a side, close to the middle leg (47), of the foot (48), so as to limit and stop the mounting action of the foot (48).

110. The transport case as claimed in claim 109, wherein,
the groove bottom surface (461) comprises a mounting guide surface (463), the mounting guide surface (463) and the supporting base surface being disposed at an acute angle, and a distance between the mounting guide surface (463) and the supporting base surface gradually increasing in a direction close to the middle leg (47); and
the top surface of the foot (48) comprises a sliding surface (481) parallel to the mounting guide surface (463) to be in contact fit with the mounting guide surface (463), so as to guide the mounting action of the foot (48).

111. The transport case as claimed in claim 110, wherein,
the groove bottom surface (461) comprises a transition connection surface (464), the transition connection surface (464) being parallel to the supporting base surface, and the mounting guide surface (463) being connected with the groove side surface (462) through the transition connection surface (464); and
the top surface of the foot (48) comprises a contact surface (482) parallel to the transition connection surface (464) to be in contact fit with the transition connection surface (464).

112. The transport case as claimed in claim 109, wherein,
the middle leg (47) comprises a plurality of leg bodies (471), the plurality of leg bodies (471) being disposed at intervals in a second direction, an upper side of each of the plurality of leg bodies (471) being connected with the base body (46), and two adjacent leg bodies (471) being connected through a first connecting plate (472) extending in the second direction, wherein the first connecting plate (472) and the base body (46) are disposed at intervals to form a first avoidance space for causing a fork of a forklift truck to be inserted; or,
the foot (48) comprises a plurality of foot bodies (483), the plurality of foot bodies (483) being disposed at intervals in the second direction, an upper side of each of the plurality of foot bodies (483) being connected with the base body (46), and two adjacent foot bodies (483) being connected through a second connecting plate (484) extending in the second direction, wherein the second connecting plate (484) and the base body (46) are disposed at intervals to form a second avoidance space for causing the fork of the forklift truck to be inserted; or,
the middle leg (47) and the foot (48) are connected through a third connecting plate (478) extending in the first direction, wherein the third connecting plate (478) and the base body (46) are disposed at intervals to form a third avoidance space for causing the forklift truck to be inserted;
wherein the first direction and the second direction are perpendicular to each other.

113. The transport case as claimed in claim 109, wherein,
the base body (46) is provided with a limiting protrusion (468), and the limiting protrusion (468) is disposed below the base body (46) and extends in the first direction; and
the foot (48) is provided with a protrusion limiting groove (485) in insertion fit with the limiting protrusion (468), the protrusion limiting groove (485) is through in the first direction, and the protrusion limiting groove (485) sleeves the limiting protrusion (468) and is slidably disposed relative to the limiting protrusion (468) in the first direction.

114. The transport case as claimed in claim 109, wherein,
two foot mounting grooves (460) are provided, and the two foot mounting grooves (460) are respectively disposed at two opposite sides of the middle leg (47); and
two feet (48) is are provided, and the two feet (48) and the two foot mounting grooves (460) are disposed in a one-to-one correspondingly manner.

115. The transport case as claimed in claim 114, comprising a plurality of anti-slip pads (49), the plurality of anti-slip pads (49) being disposed on the base body (46) at intervals and at least partially disposed at a side, close to the supporting base surface of the base (4), of the base body (46), so as to be in contact with a fork of a forklift truck inserted below the base body (46).

116. The transport case as claimed in claim 115, wherein,
the anti-slip pad (49) comprises a bottom pad (491) and an anti-slip insertion part (492) disposed above the bottom pad (491);
the base body (46) is provided with an anti-slip pad insertion hole (465) for causing the anti-slip insertion part (492) to be inserted, and a peripheral surface of the anti-slip insertion part (492) is in insertion fit with an inner wall surface of the anti-slip pad insertion hole (465);
wherein the peripheral surface of the anti-slip insertion part (492) is provided with an anti-slip insertion protrusion (493) to be in interference fit with the anti-slip pad insertion hole (465) through the anti-slip insertion protrusion (493).

117. The transport case as claimed in claim 116, wherein the anti-slip insertion part (492) comprises a plurality of insertion posts (494) disposed at intervals around a center line of the anti-slip pad (49), and a peripheral surface of the insertion post (494) is provided with:
a first anti-slip insertion protrusion (495), the first anti-slip insertion protrusion (495) extending in a circumferential direction of the anti-slip insertion part (492); and a second anti-slip insertion protrusion (496), the second anti-slip insertion protrusion (496) extending along the center line of the anti-slip pad (49).

118. The transport case as claimed in claim 117, wherein the anti-slip insertion part (492) comprises at least one insertion strip (497) disposed in a middle of the plurality of insertion posts (494), the insertion strip (497) extending in a direction parallel to the bottom pad (491); the anti-slip pad insertion hole (465) is internally provided with a plurality of partitions (466) to divide the anti-slip pad insertion hole (465) into a plurality of insertion cavities (467), and each of the plurality of insertion posts (494) and the insertion strip (497) are in insertion fit with one of the plurality of insertion cavities (467).

119. The transport case as claimed in claim 80, wherein the case body (1) comprises an operating handle (63), disposed on the auxiliary door (6), the auxiliary door (6) being driven by the operating handle (63) to move upwards, so that the second fixing part (60) is drawn out from the first fixing part (57), and the auxiliary door (6) is in the open position.

120. The transport case as claimed in claim 119, wherein the first fixing part (57) comprises a fixing sleeve (571);
the second fixing part (60) comprises a fixing insertion piece (64), the fixing insertion piece (64) being at least partially inserted into the fixing sleeve (571), so that the auxiliary door (6) is in the closed position.

121. The transport case as claimed in claim 119, wherein an end surface, facing the auxiliary door (6), of the second side plate (52) is provided with a fork limiting groove (521), and the transport case further comprises:
a limiting fork (65), disposed at one end, close to the door body (2), of the auxiliary door (6), the limiting fork (65) being hinged to the auxiliary door (6);
a first end of the limiting fork (65) is disposed in the fork limiting groove (521), and a second end of the limiting fork (65) extends in a direction close to the door body (2), so that the door body (2) pushes the limiting fork (65) to rotate through the second end of the limiting fork (65) in a process that the door body (2) slides towards the closed position, the first end of the limiting fork (65) abuts against the door body (2), and the first end of the limiting fork (65) abuts against an inner wall surface of the fork limiting groove (521).

122. The transport case as claimed in claim 121, wherein the limiting fork (65) is connected with the auxiliary door (6) through a limiting rotating shaft, and a torsion spring sleeves the limiting rotating shaft, so as to drive the limiting fork (65) to rotate to an initial position through the torsion spring when the door body (2) is in an open state.

123. The transport case as claimed in claim 122, further comprising:
a push block (66), disposed on the door body (2), the push block (66) protruding from the door body (2) in a direction close to the auxiliary door (6);
the push block (66) comprises a first pushing surface, a first angle being formed between the first pushing surface and a horizontal plane, so that the first pushing surface is in contact with the limiting fork (65) to push the limiting fork (65) to rotate in a sliding process of the door body (2).

124. The transport case as claimed in claim 119, wherein the side plate (5) is provided with an insertion hole, and the transport case further comprises:
a balance insertion piece (67), disposed at a bottom of the auxiliary door (6), the balance insertion piece (67) being at least partially inserted into the insertion hole, and the auxiliary door (6) driving the balance insertion piece (67) to be movably disposed in a vertical direction, so that the auxiliary door (6) is inserted into the insertion hole or drawn out from the insertion hole;
a plurality of balance insertion pieces (67) are provided, and the plurality of balance insertion pieces (67) are uniformly disposed on the auxiliary door (6) at intervals.
